(19) Europäisches Patentamt / European Patent Office / Office européen des brevets

(11) **EP 3 444 713 A1**

(12) **EUROPEAN PATENT APPLICATION**

(43) Date of publication:
**20.02.2019 Bulletin 2019/08**

(21) Application number: **18186611.2**

(22) Date of filing: **31.07.2018**

(51) Int Cl.:
$G06F\ 3/0481^{(2013.01)}$    $H04L\ 29/08^{(2006.01)}$
$F24F\ 11/58^{(2018.01)}$    $F24F\ 11/50^{(2018.01)}$
$F24F\ 11/00^{(2018.01)}$    $G06F\ 3/0484^{(2013.01)}$
$F24F\ 6/12^{(2006.01)}$    $F24F\ 11/52^{(2018.01)}$
$F24F\ 6/00^{(2006.01)}$    $F24F\ 110/20^{(2018.01)}$

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.08.2017 US 201715665616**

(71) Applicant: **D-M-S Holdings, Inc.**
**West Des Moines, Iowa 50266 (US)**

(72) Inventors:
• **BRADLEY, Samuel**
**Mundelein, IL 60060 (US)**
• **SARKAR, Oishee**
**Waukegan, IL 60087 (US)**
• **MINAKIAN, Stephen**
**Denver, CO 80223 (US)**
• **SANCHEZ, Fernando**
**Berwyn, IL 60402 (US)**
• **MUELLER, Bradley Corbett**
**Ringwood, IL 60072 (US)**

(74) Representative: **Howe, Steven**
**Reddie & Grose LLP**
**The White Chapel Building**
**10 Whitechapel High Street**
**London E1 8QS (GB)**

(54) **HUMIDIFIER USER INTERACTION**

(57) Techniques for operating and controlling humidifiers are disclosed. A system may include a cloud-based application, a humidifier including a tank to hold liquid to be atomized by the humidifier, a transducer to atomize liquid, a fan, at least one sensor, a network adapter, and a processor. The processor is operable to receive sensor data from the at least one sensor and transmit, to the cloud-based application via the network adapter, the received data. The system may a computing device that presents, via a display of the computing device, a user interface to interact with the humidifier via the cloud-based application.

*FIG. 19*

**Description**

**TECHNICAL FIELD**

This disclosure generally relates to humidifiers and related methods of operating humidifiers.

**BACKGROUND**

Low humidity in an ambient environment may cause discomfort and, in some instances, health-related issues (e.g., respiratory issues). To increase the moisture content of air in an ambient environment, a humidifier can be used. A humidifier can be supplied with water and operate to output a mist into the ambient environment, thereby increasing the ambient environment's moisture content.

Currently available humidifiers can be limited in their operational capability and efficiency. For example, these currently available humidifiers may lack the capability to control an amount of water that is supplied to the mist-creating portion of the humidifier. Instead, these humidifiers may simply have the mist-creating portion filled with water at all times during humidifier operation. In these humidifiers, the only instance where the mist-creating portion may be less than completely filled with water is when the humidifier's water supply is depleted. This can result is operating the mist-creating portion of the humidifier at a less than optimal water level and, consequently, operating the humidifier less efficiently to ultimately achieve a desired increase in moisture content of the ambient environment.

Furthermore, currently available humidifiers have limited modes of operation and limited user interfaces to control their operation. These humidifiers may not allow a user to control the humidifier to operate in a manner that is most desirable for the user.

**SUMMARY**

In general, various embodiments relating to humidifiers, software applications ("apps") executing on a mobile computing device for communicating with humidifiers, cloud-based software applications for communicating with the humidifiers and the apps, and associated methods are described herein. Some embodiments can be useful, for example, in allowing a user of a humidifier to control, interact with, or otherwise receive information about the humidifier.

One embodiment includes a humidifier. This humidifier embodiment includes a base, a fluid column, a liquid tank, a lid, a fan, and a controller. The base has a liquid reservoir and the base is configured to generate mist. The fluid column is in fluid communication with the liquid reservoir and selectively in fluid communication with an ambient atmosphere to deliver mist to the ambient atmosphere. The fan is in fluid communication with the fluid column to deliver mist through the fluid column to the ambient atmosphere. The controller is in signal communication with the fan. The liquid tank is coupled to the base and the liquid tank defines an interior volume. The liquid tank is configured to provide liquid to the liquid reservoir. The base may include a diffuser of essential oils, allowing the humidifier to operate as an essential oil diffuser.

In a further embodiment of this humidifier, a humidifier app executing on a mobile computing device allows a user to control various operational modes of the humidifier. One or more of these modes are operable to control one or more of the humidifier's fan intensity, mist output rate, mist output direction, target humidity, operational schedule, etc. The humidifier app may communicate directly with the humidifier, or the communication between the humidifier and the humidifier app may be facilitated by a cloud-based software application that serves as a proxy between the humidifier and the humidifier app. The humidifier app may present various information regarding the humidifier to a user of the humidifier; this information may include one or more of the humidifier's liquid output rate, an amount of time until the humidifier consumes the liquid in its tank, an amount of time until the humidifier reaches the set target humidity, the current humidity and/or temperature (for the humidifier's location and/or for another location), an amount of time until the essential oils deposited in the reservoir will be depleted, etc. The various information presented by the humidifier app may be calculated or determined by one or more of the humidifier app, the humidifier, and the cloud-based application.

This disclosure is filed concurrently with the following three patent applications that are owned by the owner of this disclosure: US Pat. App. No. 15/665,604, titled "Humidifier Measurement and Control"; US Pat. App. No. 15/665,611, titled "Humidifier Liquid Tank"; and US Pat. App. No. 15/665,614, titled "Humidifier Reservoir Fluid Control".

The details of one or more examples are set forth in the accompanying drawings and the description below. Other features, objects, and advantages will be apparent from the description and drawings.

**BRIEF DESCRIPTION OF THE DRAWINGS**

The following drawings are illustrative of particular embodiments of the present invention and therefore do not limit the scope of the invention. The drawings are intended for use in conjunction with the explanations in the following description. Embodiments of the invention will hereinafter be described in conjunction with the appended drawings, wherein like numerals denote like elements.

FIG. 1A is a perspective view of an exemplary embodiment of a humidifier.

FIG. 1B is a perspective view of an alternative exemplary embodiment of a humidifier.

FIG. 2 is a top-down cross-sectional view of a humidifier similar to that shown in FIG. 1A.

FIG. 3 is a separated, perspective view of the exemplary humidifier of FIG. 1A in which the liquid tank is removed from the base portion.

FIG. 4 is a perspective view of an underside of the exemplary liquid tank of FIG. 3.

FIG. 5 is a perspective view of the exemplary base portion of FIG. 3.

FIG. 6 is a cross-sectional view of the exemplary humidifier of FIG. 1A taken along line A-A in FIG. 1A.

FIGS. 7A and 7B are perspective views, in partial section, of a valve of the exemplary humidifier of FIG. 1A. FIG. 7A shows the valve in a closed position, while FIG. 7B shows the valve in an opened position.

FIG. 8 is a perspective view of a mate ring, including an interface and liquid level sensor.

FIG. 9A shows an exemplary view of the coupling of a lower connector and an upper connector.

FIG. 9B is a cross-sectional view of a coupling between connectors taken along line b-b in FIG. 9A.

FIG. 9C shows an exemplary view of an alternatively coupling of a lower connector and an upper connector.

FIG. 10 is a cross-sectional view of the mate ring and other components taken along line 8-8 in FIG. 8.

FIG. 11 is a schematic diagram showing exemplary communication between various system components within a humidifier.

FIG. 12 shows a schematic representation of an exemplary interface for a humidifier.

FIG. 13 shows a schematic representation of an exemplary liquid level sensor for a humidifier.

FIG. 14 is a process-flow diagram illustrating an exemplary process for determining a liquid level in the liquid tank.

FIG. 15 is a process-flow diagram illustrating a process by which the humidifier output can be adjusted.

FIG. 16 is a process-flow diagram showing an exemplary a process for updating the water freshness index in a humidifier.

FIG. 17 is a schematic diagram showing an exemplary multiplexer configuration in a humidifier.

FIG. 18 illustrates a system for controlling a humidifier via a cloud-based application, according to an example embodiment.

FIG. 19 illustrates a main screen of a humidifier app, according to an example embodiment.

FIG. 20 illustrates a main menu screen of a humidifier app, according to an example embodiment.

FIG. 21 illustrates a mode menu screen of a humidifier app, according to an example embodiment.

FIG. 22 illustrates a manual mode screen of the humidifier app, according to an example embodiment.

FIG. 23 is a flowchart illustrating the operation of the humidifier in manual mode, according to an example embodiment.

FIG. 24 illustrates an automatic ("auto") mode screen of the humidifier app, according to an example embodiment.

FIG. 25 is a flowchart illustrating the operation of the humidifier in auto mode, according to an example embodiment.

FIG. 26 illustrates a first screen of the diffuser interface of the humidifier app, according to an example embodiment.

FIG. 27 illustrates a second screen of the diffuser interface of the humidifier app, according to an example embodiment.

FIG. 28 is a flowchart illustrating the operation of the humidifier in diffuser mode, according to an example embodiment.

FIG. 29 is a flowchart illustrating the operation of the humidifier in oscillation mode, according to an example embodiment.

FIG. 30 is a flowchart illustrating the operation of the humidifier in scheduler mode, according to an example embodiment.

FIG. 31 is a flowchart illustrating operation of a water consumption meter of a humidifier, according to an example embodiment.

FIG. 32 is a block diagram illustrating an example of a machine, upon which any one or more example embodiments may be implemented.

## DETAILED DESCRIPTION

The following detailed description is exemplary in nature and is not intended to limit the scope, applicability, or configuration of the invention in any way. Rather, the following description provides some practical illustrations for implementing exemplary embodiments of the present invention. Examples of constructions, materials, and/or dimensions are provided for selected elements. Those skilled in the art will recognize that many of the noted examples have a variety of suitable alternatives.

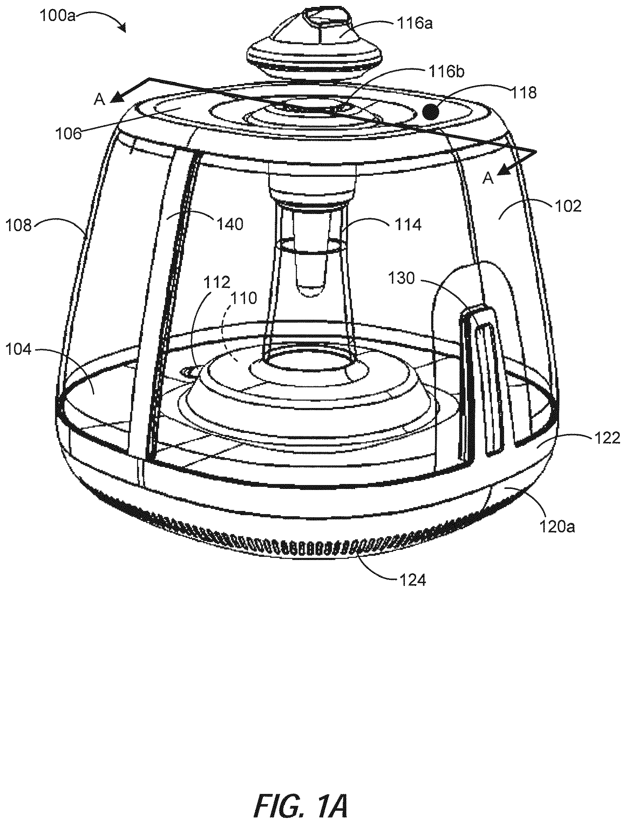

FIG. 1A is a perspective view of an exemplary embodiment of a humidifier 100a. As shown, the humidifier 100a includes a liquid (e.g., water) tank 102. The liquid tank 102 defines a first interior volume therein that can store a supply of water or other liquid for use by the humidifier 100a. Liquid tank 102 includes a floor 104, a lid 106, and a sidewall 108 extending between the floor 104 and the lid 106. In one example, the first interior volume of the liquid tank 102 can be defined by the sidewall 108 between the floor 104 and the lid 106. In the illustrated embodiment of FIG. 1A, the sidewall 108 substantially surrounds the perimeter of the humidifier 100a. However, it will be appreciated that in various embodiments, the liquid tank 102 need not necessarily extend to the outer limits of the humidifier 100a. That is, in some examples, the sidewall 108 of the liquid tank 102 does not necessarily surround or follow the perimeter of the humidifier 100a. In the illustrative example of FIG. 1A, sidewall 108 is shown as clear. In some examples, the sidewall 108 may be clear, transparent, translucent, or the like so that a user may readily observe certain parameters, such as the level of liquid within the liquid tank 102. In other examples, the sidewall 108 may be opaque.

In the example of FIG. 1A, the floor 104 of the liquid tank 102 can enclose, at least in part, a reservoir 110 in which liquid can be stored for more immediate use by the humidifier 100a than the liquid in the liquid tank 102. That is, in some examples, humidifier 100a uses liquid in the reservoir 110 to humidify the environment surrounding the humidifier 100a, while liquid from the liquid tank 102 is used to replenish the reservoir 110 as appropriate. In the example of FIG. 1A, the humidifier 100a includes a selective sealing component 112 disposed in the floor 104 of the liquid tank 102 to facilitate communication of liquid to the reservoir 110 from the first interior volume of the liquid tank 102.

Humidifier 100a includes a fluid column 114 through which atomized liquid can travel from the reservoir 110 out of the humidifier 100a. The column 114 can extend within the interior of the liquid tank 102. As shown in the example of FIG. 1A, the column 114 is centered within the liquid tank 102. The lid 106 can include a cap (e.g., 116a, 116b) disposed over the column 114 to control the emission of mist. For example, a directional cap 116a can be used to emit mist in a preferred direction from the humidifier 100a. In other examples, a domed cap 116b can provide substantially radially uniform mist emission. In some embodiments, such caps can be interchangeable for desired operation by the user.

In the illustrated embodiment, the lid 106 of the tank 102 includes a burp valve 118. The burp valve 118 can allow for fluid communication between the first interior volume of the tank 102 and an ambient environment. In one example, the burp valve 118 can be actuated between a first position that allows for such fluid communication thereat and a second positon that seals the first interior volume from the ambient environment thereat. The burp valve 118 may, as an example, be a self-actuated pressure control valve such that it is configured to actuate from the second position to the first position when a pressure within first interior volume of the tank 102 reaches a predetermined pressure level. For instance, at times when the column 114 is sealed from the ambient environment, communication of liquid from the tank 102 to the reservoir 110 may cause pressure to build within the tank 102. If this pressure builds to a sufficient level, it may tend to hold liquid in the tank 102 and thereby impede communication of liquid from the tank 102 to the reservoir 110. Accordingly, the burp valve 118 can be useful in relieving pressure built up within the tank 102 by allowing air to pass between the first interior volume of the tank 102 and the ambient environment.

In the example of FIG. 1A, the humidifier 100a includes a base portion 120a supporting the tank 102. In some embodiments, the base portion 120a can house all, or a portion of, reservoir 110 below the floor 104 of the tank 102. The base portion 120a can similarly house other components useful for operation of the humidifier 100a. In various examples, the base portion 120a can house components such as an atomizer for producing mist from liquid in the reservoir 110, one or more fans, a controller for facilitating various operations of the humidifier 100a, one or more sensors (e.g., a liquid quantity sensor), one or more power supplies for providing electrical power to various humidifier components, and the like. As shown, base portion 120a of the humidifier 100a of FIG. 1A includes one or more vents 124, for example, for facilitating air transfer into the interior of the base portion 120a. In some examples, the base portion can include one or more sensors, such as a temperature sensor and/or a humidity sensor, for sensing conditions of the local environment of the humidifier. In some examples, properties of the air that enter the base portion 120a of the humidifier via the vent 124 can be analyzed using one or more sensors. Additionally or alternatively, vents 124 can facilitate cooling of various components housed within the base portion 120a. In some embodiments, humidifier 100a includes one or more fans positioned within the base portion 120a to further promote air cooling of components within the base portion 120a. Additionally or alternatively, one or more fans within the humidifier 100a can be used to force mist from the atomizer through column 114 and out of the cap 116a and/or 116b.

In the illustrated example, the base portion 120a is removably coupled to the tank 102 by way of a mate ring 122. In some examples, the mate ring is integrally formed into the tank 102 such that when the tank 102 and base portion 120a are joined, the mate ring 122 engages base portion 120a. The mate ring 122 can provide a sealing engagement between the base portion 120a and the tank 102 so that liquid in the tank 102 and/or the base portion 120a (e.g., in reservoir 110) does not escape the humidifier 100a at the interface between the tank 102 and base portion 120a.

The humidifier 100a of FIG. 1A can include an interface 130 and a tank water level sensor 140 positioned on the liquid tank 102. In some embodiments, the interface 130 provides interaction with a user. Such interaction can include receiving an input from a user, such as a mist emission setting, for example, via a touch screen, push-button interface, one or more dials, switches, or the like. In some examples, combinations of such interface can be used. Additionally or alternatively, interface 130 can be used for outputting information to a user, such as an indication of a mist emission setting, for instance, via one or more light indicators, such as light emitting diodes (LEDs) or other light sources.

In various examples, light from the interface 130 can present information to the user, such as a mist emission level from the humidifier. In some such examples, the interface includes a plurality of light emitting elements arranged linearly. The number of light emitting elements that actively emit light can correspond to a level of mist emission. For example, a lowest level of mist emission can correspond to a single light source, for instance, positioned nearest the mate ring 122. As the mist emission increases, the number of active light sources can similarly increase to represent the increasing emission.

As shown, humidifier 100a further comprises the tank water level sensor 140 that can be used to detect the level of liquid in the liquid tank 102. For instance, in the illustrated examples, tank water level sensor 140 extends along the vertical dimension of sidewall 108 so that the interface between the liquid and air in the tank 102 at the tank water level sensor 140 is representative of the amount of liquid in the tank 102. In some embodiments, tank water level sensor 140 comprises a capacitive sensor configured to detect the liquid level based on changes in capacitance at the tank water level sensor 140. In some such examples, the internal components of the tank water level sensor 140 can be isolated from the external environment surrounding the humidifier 100a so that any stray electric fields or touching of the outer surface of the humidifier 100a does not impact the capacitance of the tank water level sensor 140.

In some embodiments, a controller can be configured to control operation of one or more components, such as the interface 130, tank water level sensor 140, atomizer (not shown), fan (not shown), a reservoir valve and the like. In some such embodiments, the controller can be positioned in the base portion 120a of the humidifier 100a. A controller positioned in the base portion 120a can communicate with various components via wired or wireless communication. In some examples, the controller positioned in the base portion 120a can be arranged to communicate with components in the tank 102 (e.g., the interface 130, the tank water level sensor 140, etc.) via a connector that facilitates electrical communication between the base portion 120a and the mate ring 122.

As shown, base portion 120a of the humidifier 100a of FIG. 1A can include one or more vents 124, for example, for facilitating air transfer into the interior of the base portion 120a. In some examples, the base portion can include one or more sensors, such as a temperature sensor and/or a humidity sensor, for sensing conditions of the local environment of the humidifier. In some examples, properties of the air that enter the base portion 120a of the humidifier via the vent 124 can be analyzed using one or more sensors. Additionally or alternatively, vents 124 can facilitate cooling of various components housed within the base portion 120a.

In some embodiments, humidifier 100a includes one or more fans positioned within the base portion 120a to further promote air cooling of components within the base portion 120a, for example, by pulling in ambient air via vents 124. Additionally or alternatively, one or more fans within the humidifier 100a can be used to force mist from the atomizer through column 114 and out of the cap 116a and/or 116b.

In other examples, vents 124 may be excluded. For instance, in some embodiments, air cooling may not be necessary within the base portion 120a. Additionally or alternatively, in some embodiments, one or more sensors for sensing conditions of the ambient environment may be positioned outside of the humidifier and may be in wired or wireless communication with one or more humidifier components. In some such examples, vents (e.g., 124 in FIG. 1A) are not required for sampling ambient air via internal components housed in the base portion (e.g., 120a).

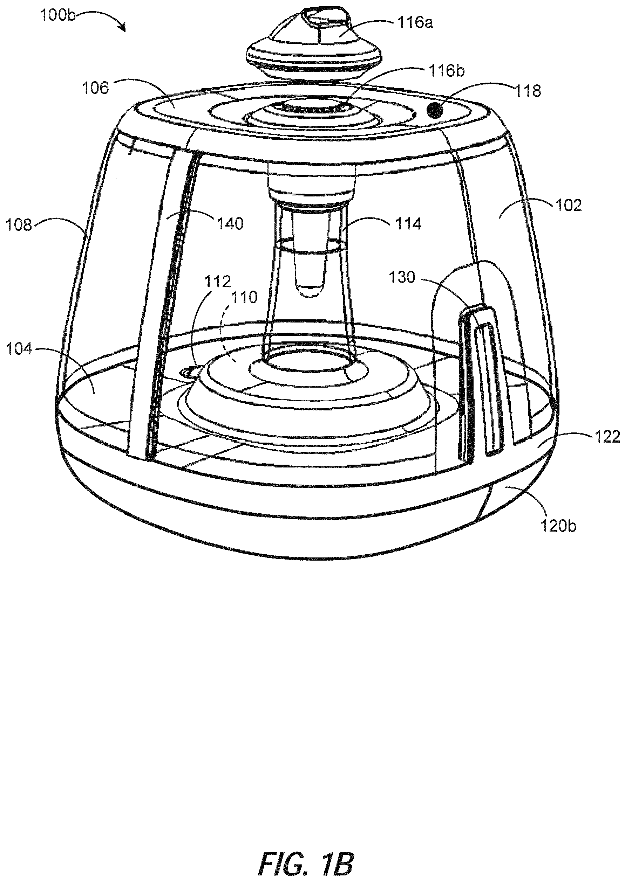

FIG. 1B shows a perspective view of an alternative humidifier without vents in the base portion. As shown, the humidifier 100b of FIG. 1B is similar to the humidifier 100a in FIG. 1A, and may operate generally as described with respect to humidifier 100a in FIG. 1A. However, as shown, base portion 120b of humidifier 100b does not include vents similar to vents 124 shown in base portion 120a in FIG. 1A.

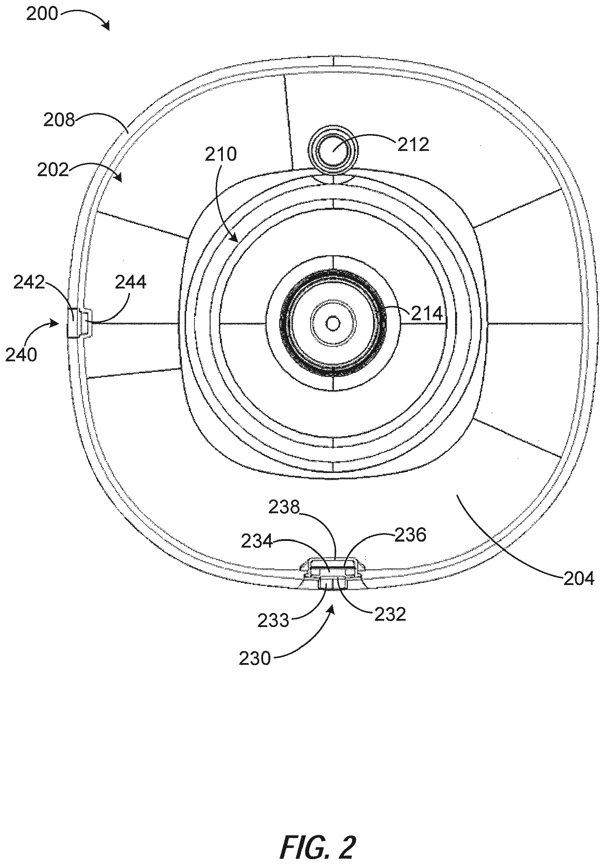

FIG. 2 shows a top-down cross-sectional view of a humidifier similar to that shown in FIG. 1A. Humidifier 200 of FIG. 2 includes a sidewall and a floor 204 of a liquid tank 202 for storing liquid for future use with humidifier 200. In some embodiments, during operation, liquid travels from the liquid tank 202 into a reservoir 210 via valve 212. Liquid in the reservoir can be atomized and introduced into the ambient atmosphere as mist via a column 214.

As described elsewhere herein, exemplary humidifier 200 can include an interface 230. In the illustrated example of FIG. 2, interface 230 includes a light pipe 234 into which light can be emitted for presenting information to a user. The interface 230 includes a board 236 that can support one or more light emitting elements (e.g., LEDs) positioned proximate the light pipe 234 so that light from the light emitting elements is emitted into the light pipe 234.

The interface 230 as shown in FIG. 2 further includes a lens 232 positioned proximate the exterior surface of the light pipe 234. Lens 232 can facilitate transmission of light from inside the light pipe 234 to a user. In some examples, the lens 232 may be configured to detect the touch of a user, for example, via a capacitive touch interface. In some such examples, a user can control various operating parameters of the humidifier, such as a mist emission level, via the interface 230. For instance, in some embodiments, the lens 232 includes a touch sensor 233, for example, including one or more capacitive regions, that can be used to detect the touch of a user. In other embodiments, such one or more capacitive regions can be positioned proximate the lens 232 so that the touch sensor 233 can detect a user touching the lens 232 proximate the one or more capacitive regions. Inputs received from the interface 230 can be communicated to a controller, for example, in the base portion (not shown) of the humidifier 200, for controlling operation of various aspects of the humidifier.

The interface includes an isolation interface 238 between the board 236 and the interior of the liquid tank 202. The isolation interface 238 can protect electrical components (e.g., light emitting sources on board 236, capacitive sensing elements, etc.) in the interface 230 from liquid in the liquid tank 202. In some embodiments, the isolation interface 238 comprises a space to provide isolation between the liquid in liquid tank 202 and the other components of interface 230. In various embodiments, the space can comprise a vacuum, or can be filled with air, electrically insulating materials (e.g., plastic), electrically shielding materials (e.g., metals), or combinations thereof. Such isolation can minimize the impact of the liquid on operation of the electrical components of the interface 230.

The humidifier 200 of FIG. 2 further includes a water level sensor 240 capable of detecting an amount of liquid present in the liquid tank 202. In some examples, the water level sensor 240 includes a first portion 242 and a second portion 244 which can be used for sensing the liquid level in liquid tank 202. In some embodiments, the first portion 242 and the second portion 244 of the water level sensor 240 can be used in conjunction to measure a liquid level. Additionally or alternatively, one of the first 242 and second 244 portions of the water level sensor 240 can be used to calibrate the other.

As shown, in the illustrated example of FIG. 2, the interface 230 and the water level sensor 240 are positioned approximately flush with the sidewall 208 of the humidifier 200. In some examples, one or both of the interface 230 and the water level sensor 240 are integrally formed into the sidewall 208. In other examples, one or both of the interface 230 and the water level sensor 240 can be positioned in a recess or cutaway from the sidewall 208.

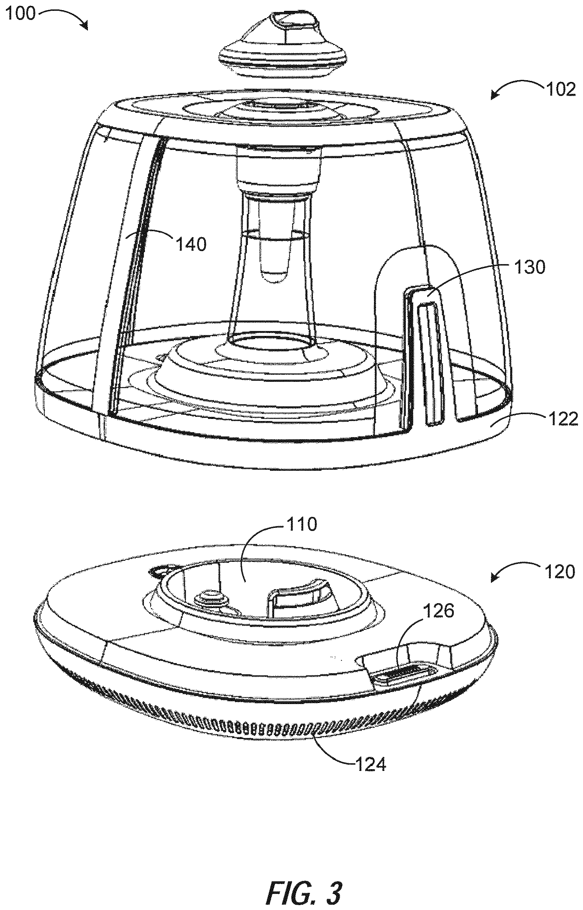

FIG. 3 is a separated, perspective view of the exemplary humidifier 100 of FIG. 1A in which the liquid tank 102 is removed from the base portion 120. In this embodiment, mate ring 122, interface 130, and tank water level sensor 140 are included with the liquid tank 102. As noted above and shown here, the base portion 120 includes a reservoir 110, which can be used for storing liquid to be atomized during operation of the humidifier 100a. As described elsewhere herein, in some examples, the base portion 120 includes components such as a power supply, controller, liquid atomizer, fan, valve, and the like. Some such components can be housed by the base portion 120, for example, enclosed by vent 124 to allow air cooling of such components. In other embodiments, vents 124 may be omitted, such as shown in FIG. 1B, if cooling is not required or is provided another way. For instance, in some embodiments, vents substantially surrounding the perimeter of the base portion 120 may be omitted. However, in some such examples, openings can be positioned elsewhere in the base portion 120 (e.g., on a bottom surface) in order to permit air intake for atomizer fan operation. The reservoir 110 can be sealed from other portions of the base portion 120 so that fluid does not escape the reservoir 110 and interact with components such as a controller and/or a power supply.

In the example of FIG. 3, the base portion 120 includes a lower connector 126. In some examples, lower connector 126 is configured to mate with a corresponding connector on the mate ring 122. In some such examples, lower connector 126 can be in communication with various components housed in the base portion 120 such that, when connected with a corresponding connector (e.g., on the liquid tank), it can facilitate communication between such components and the mate ring 122. Mate ring 122 can be in communication with, for instance, the interface 130 and/or the tank water level sensor 140. Thus, in some examples, lower connector 126 can facilitate communication between components in the base portion 120 (e.g., a controller and/or a power supply) and the tank water level sensor 140 and/or the interface 130.

In some embodiments, a humidifier 100 can include one or more magnets can be used to enhance the engagement (e.g., the strength and/or accuracy of the engagement) between the lower connector 160 and a corresponding connector (e.g., on tank 102). For example, one or more magnets can be positioned on the base portion 120 proximate the lower connector 126 to engage one or more corresponding magnets or magnetically susceptible portions of the liquid tank 302 to improve the connection between such components.

Additionally or alternatively, in some embodiments, some or all of the interfacing portions of the base portion 120 and the liquid tank 102 can include one or more compressible materials, such as rubber. Such material(s) can be effective to enhance sealing between one or more locations of the interface and/or to reduce vibrations at one or more locations. For instance, in some examples, the lower connector 126 and/or a corresponding connector in the liquid tank 102 (e.g., in the mate ring 122) can be suspended in a compressible material to reduce the impact of any vibrations on the connections between the base portion 120 and the tank 102.

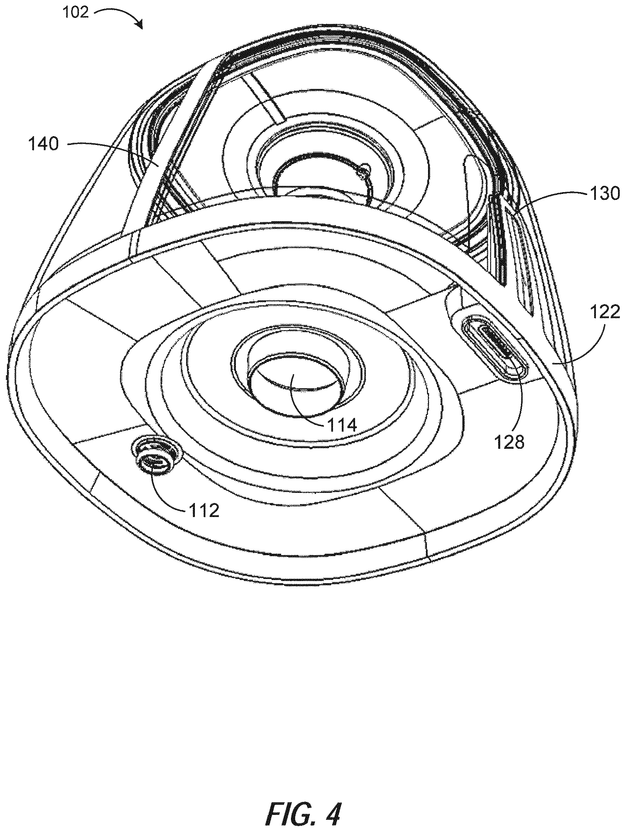

FIG. 4 is a perspective view of an underside of the exemplary liquid tank 102. As described elsewhere herein, the tank 102 of FIG. 3 includes mate ring 122, interface 130, and tank water level sensor 140. The tank 102 also includes the column 114 through which mist can be emitted (e.g., from the base portion) into the ambient environment.

Further shown in FIG. 4 is the selective sealing component 112. As noted, the selective sealing component 112 can facilitate communication of liquid from the tank 102 to other portions of the humidifier (e.g., into the reservoir of the base portion). The selective sealing component 112 can be actuated between opened and closed positions to allow liquid to be, and prevent liquid from being, respectively, communicated from the tank 102. For instance, the selective sealing component 112 may mate with a corresponding member of another portion of the humidifier (e.g., the base portion) to cause the selective sealing component 112 to actuate from the closed position to the opened position. As one example, the selective sealing component 112 may be a spring loaded valve that is biased to the closed position and moved to the opened position upon mating with a corresponding member. Likewise, this biasing configuration can force the selective sealing component 112 to the closed position when the tank 102 is moved from the mating position with the corresponding member. The selective sealing component 112 can be useful, for instance, in allowing liquid to be communicated from the tank 102 during humidifier operation yet preventing liquid from leaking out of the tank 102 when the tank 102 is removed from the humidifier (e.g., to refill the first interior volume of the tank 102, to clean the first interior volume of the tank 102, etc.).

The liquid tank 102 of FIG. 4 further includes an upper connector 128. In some examples, the upper connector 128 is configured to mate with another connector (e.g., lower connector 126 of FIG. 3) to facilitate communication between various components. In some embodiments, the mate ring 122 includes communication channels configured to provide electrical communication between the upper connector 128 and other system components, such as the interface 130 and/or the tank water level sensor 140. In some such examples, communication channels comprise electrically conductive channels, such as wires disposed in the mate ring 122.

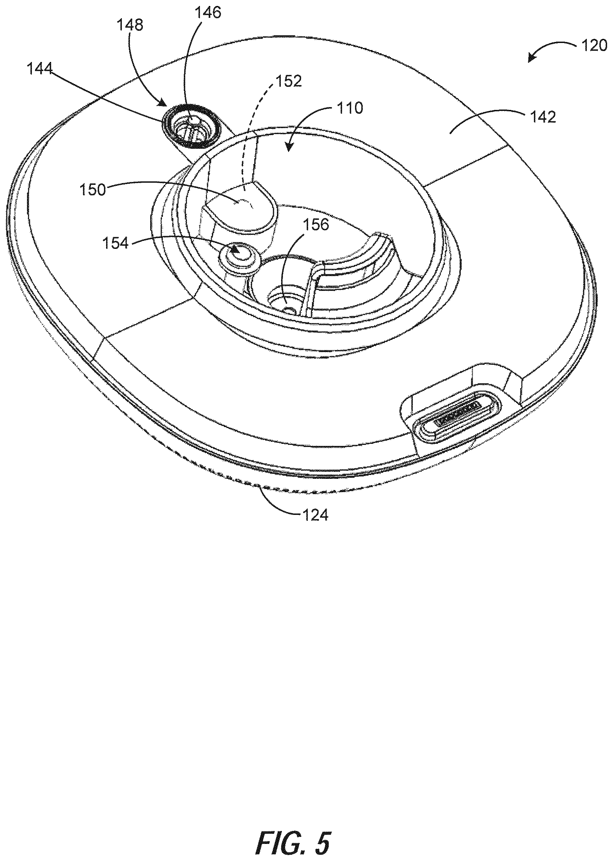

FIG. 5 is a perspective view of the base portion 120 of the exemplary humidifier. As noted elsewhere herein, the base portion 120 can include the reservoir 110. The reservoir 110 can be configured to hold liquid for being atomized. In the illustrated embodiment, the base portion 120 is shown as including a housing, generally shown at 142. In some embodiments, the housing 142 at least partially defines the boundary of the reservoir 110 and prevents liquid from escaping into other portions of the base portion 120. For instance, the reservoir 110 can be formed by the housing 142, of the base portion 120, and the floor of the tank. In some such examples, the housing 142 can further enclose additional components, such as a controller and/or a power supply (not shown). In some examples, the housing 142 includes vent 124 to allow air to flow into an area defined by the housing 142, for example, to facilitate air cooling of various components. In other examples, vent 124 may be omitted, such as shown in FIG. 1B.

As shown in FIG. 5, the base portion 120 can include a port 144 and an actuation member 146. The port 144 can be defined in the housing 142. The actuation member 146 can be located at or near the port 144. For instance, as shown in the illustrated embodiment, the actuation member 146 may extend out from the housing 142 of the port 144. As one example, the actuation member 146 may have an end extending out to a greater elevation than the housing 142.

This end of the actuation member 146 may have a geometry that is complementary to the selective sealing component of the tank described elsewhere herein.

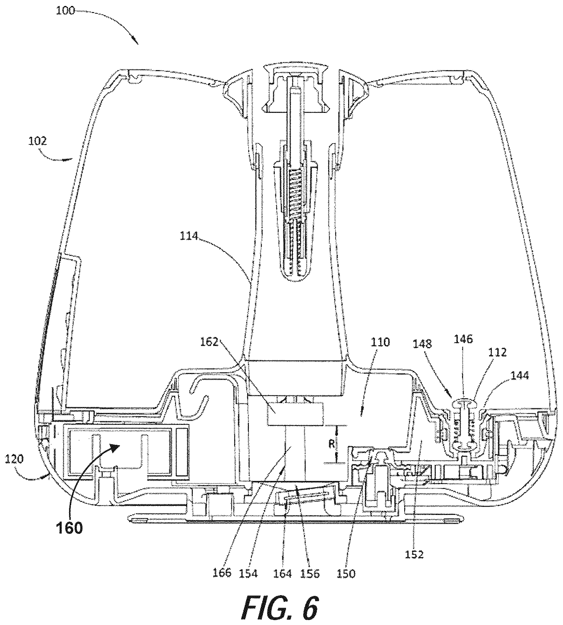

Together, the port 144 and actuation member 146 can define a tank interface assembly 148 of the base portion 120. The tank interface assembly 148 can facilitate fluid communication between the tank and the base portion 120, and, in particular, the reservoir 110 thereof. The tank interface assembly 148 can be positioned in the base portion 120 at a location that is aligned with a location of the selective sealing component of the tank when the tank is coupled to the base portion 120. Upon coupling the tank to the base portion 120, the actuation member 146 can be configured to mate with the selective sealing component of the liquid tank and, thereby, actuate the selective sealing component to the opened position (shown, e.g., in FIG. 6). This can allow liquid from the tank to be communicated to the reservoir 110 of the base portion 120. Thus, at times when the tank is coupled to the base portion 120 the selective sealing component of the tank can be in the opened position. On the other hand, when the tank is uncoupled from the base portion 120, the actuation member 146 is removed from the selective sealing component, and the selective sealing component is brought to the closed position.

To actively control communication of liquid from the tank to the reservoir when the tank is coupled to the base portion 120, the base portion 120 can include a valve 150. The valve 150 may facilitate the selective addition of liquid to the reservoir 110 from the tank. To do so, the valve 150 can be configured to actuate between a closed position and an opened position. The closed position of the valve 150 can prevent liquid from being communicated between the first interior volume of the tank and the reservoir 110. The opened position of the valve 150 can allow liquid to be communicated between the first interior volume of the tank and the reservoir 110. The humidifier's controller, for instance, can be coupled to the valve 150 and configured to cause selective actuation of the valve 150 between the closed and opened positions.

Also shown in the example of FIG. 5, the humidifier can include a holding chamber 152. The holding chamber 152 can define a second interior volume therein. As shown here, the holding chamber 152 is located in the base portion 120. The holding chamber 152 can be in fluid communication with the reservoir 110 at a first location and with the first interior volume of the tank at a second location. In the illustrated embodiment, the holding chamber 152 is in fluid communication with the reservoir 110 at the first location via the valve 150. And, in the illustrated embodiment, the holding chamber 152 is in fluid communication with the first interior volume of the tank at the second location via the tank interface assembly 148, in particular via the port 144. When the tank is coupled to the base portion 120, liquid can flow through the port 144 and into (e.g. fill) the second interior volume of the holding chamber 152. This liquid can be held in the holding chamber 152 if the valve 150 is in the closed position. When the valve 150 is selectively actuated (e.g., by the controller) to the opened position, liquid held in the holding chamber 152 can be communicated into the reservoir 110. Thus, in this exemplary embodiment, liquid is communicated from the tank to the holding chamber 152 (e.g., when the tank is coupled to the base portion 120) and from the holding chamber 152 to the reservoir 110 (e.g., when the valve 150 is actuated to the opened position). In another embodiment, there need not be a holding chamber 152, and thus liquid is communicated directly into the reservoir 110 from the tank interface assembly 148.

FIG. 5 further illustrates that the reservoir 110 can include a liquid quantity sensor 154. The liquid quantity sensor 154 can monitor a quantity of liquid (e.g., water) within the reservoir 110. The liquid quantity sensor 154 can be coupled to the humidifier's controller so as to provide data signals to the controller corresponding to the liquid quantity in the reservoir 110. As explained in more detail elsewhere herein, the controller can use signals from the liquid quantity sensor 154 to take actions in relation to other components of the humidifier. For instance, signals from the liquid quantity sensor 154 can be used by the controller to actuate the valve 150 in order to add liquid to the reservoir 110.

In addition, FIG. 5 shows a liquid atomizer 156 of the base portion 120. The liquid atomizer 156 is shown positioned here in the reservoir 110. The liquid atomizer 156 can be used to atomize (e.g., vaporize) liquid within the reservoir 110 for emission of mist into the ambient environment. As one example, the liquid atomizer 156 can include an ultrasonic agitator. The ultrasonic agitator can include a transducer element, such as a piezoelectric transducer, to create an ultrasonic frequency oscillation in the adjacent liquid in the reservoir 110. This action can cause such liquid to be atomized and act to generate a mist.

FIG. 6 illustrates a cross-sectional view of the exemplary humidifier 100 taken along line A-A in FIG. 1A. As shown in FIG. 6, the fan 160 can be located in the base portion 120 and in fluid communication with the reservoir 110. In some cases, the fan 160 can be positioned in the reservoir 110, which could include being positioned adjacent the liquid atomizer 156. The fan 160 can be coupled to the humidifier's controller so as to allow the controller to signal the fan 160 on and off as appropriate during operating. During operation of the humidifier 100, the fan can be driven to deliver atomized liquid from the reservoir 110 to an ambient environment. The fan 160 can forcibly deliver the atomized liquid from the reservoir 110 to the ambient environment through the column 114. In one example, the fan 160 can be aligned, and in fluid communication, with an end of the column 114.

As also shown in FIG. 6, the liquid quantity sensor 154 is located in the reservoir 110. As noted elsewhere herein, the liquid quantity sensor 154 can monitor a quantity of liquid within the reservoir 110. In the illustrated embodiment, the liquid quantity sensor 154 monitors the quantity of liquid within the reservoir 110 by monitoring the level of the liquid within the reservoir 110. Here, the liquid quantity sensor 154 includes a floating member 162 and a sensing device 164.

The floating member 162 is located in the reservoir 110 and can be movably secured to a support member 166, such as a pole or other support structure in the reservoir 110 or elsewhere. The sensing device 164 can be located adjacent to the floating member 162. As shown here, the sensing device 164 may be positioned outside the reservoir 110 on an opposite side of a wall forming the reservoir 110 and positioned to be aligned with the floating member 162 (e.g., positioned on a central longitudinal axis of the support member 166). The sensing device 164 can be coupled to, and in communication with, the controller.

As one example, the liquid quantity sensor 154 can monitor the level of the liquid within the reservoir 110 by detecting a distance between the floating member 162 and the sensing device 164. For instance, in one embodiment, the floating member 162 can be a magnet and the sensing device 164 can be a Hall-Effect sensor. The floating member 162 (e.g., magnet) will move along the support member 166 as the liquid level rises and falls within the reservoir 110. As this occurs, the distance between the floating member 162 and the sensing device 164 (e.g., Hall-Effect sensor) will change accordingly. The sensing device 164 can generate and output signals (e.g., to the controller) that represent a distance between the floating member 162 and the sensing device 164. As an example, the sensing device 164 can output a first signal, at a first time, when the floating member 162 is a first predetermined distance from the sensing device 164. The sensing device 164 can further output a second signal, at a second later time, when the floating member 162 is a second predetermined distance from the sensing device 164. In this example, if the second predetermined distance is greater than the first predetermined distance this would indicate that the liquid level, and thus liquid quantity, within the reservoir 110 has increased between the first and second times.

The ability to monitor the liquid level within the reservoir 110 using the liquid quantity sensor 154 can be useful in efficiently operating the humidifier 100. For example, the liquid atomizer 156 (e.g., an ultrasonic agitator) can have a focal region R, as shown in the example of FIG. 6, for atomizing liquid within the reservoir 110. The focal region R can define a range of liquid levels within the reservoir 110 at which the liquid atomizer 156 effectively atomizes liquid. For instance, when the liquid level within the reservoir 110 is too high, and thus an agitator of the liquid atomizer 156 is submerged in an excessive amount of liquid, the liquid atomizer 156 may not be able to atomize liquid to an extent needed for a particular operational mode. Likewise, when the liquid level within the reservoir 110 is too low, and thus the agitator of the liquid atomizer 156 is not submerged in a sufficient amount of liquid, the liquid atomizer 156 also may not be able to atomize liquid to an extent needed for a particular operational mode. It is noted that the focal region R is illustrated schematically in FIG. 6, and the extent of the focal region R may vary depending on the specific type of liquid atomizer 156 that is used and/or the desired efficiency level of the device. Moreover, in some cases, the extent of the focal region R can vary according to the operational mode that is input for humidifier operation.

The humidifier 100 can monitor the liquid level within the reservoir 110 using the liquid quantity sensor 154 and accordingly take action to maintain the liquid level in the reservoir 110 within the focal region R of the liquid atomizer 156. As noted, a controller of the humidifier 100 can be coupled to both the liquid quantity sensor 154 (e.g., via the sensing device 164) and the valve 150. The controller can receive a first signal from the liquid quantity sensor 154 corresponding to a first predetermined liquid quantity in the reservoir 110. In response, the controller can actuate the valve 150 from the closed position to the opened position to thereby cause liquid to begin filling into the reservoir 110, such as from the tank 102 (e.g., via the holding chamber 152). In one example, the first predetermined liquid quantity can correspond to a lower end of the liquid levels (e.g., the lowest liquid level) that are within the focal region R. Later, at a second time, the controller can receive a second signal from the liquid quantity sensor 154 corresponding to a second predetermined liquid quantity in the reservoir 110. In response, the controller can actuate the valve 150 from the opened position to the closed position to thereby stop liquid from entering into the reservoir 110. In this same example, the second predetermined liquid quantity can correspond to a higher end of the liquid levels (e.g., the highest liquid level) that are within the focal region R. In this way, the humidifier 100 can maintain liquid within the reservoir 110 that is within the focal region R.

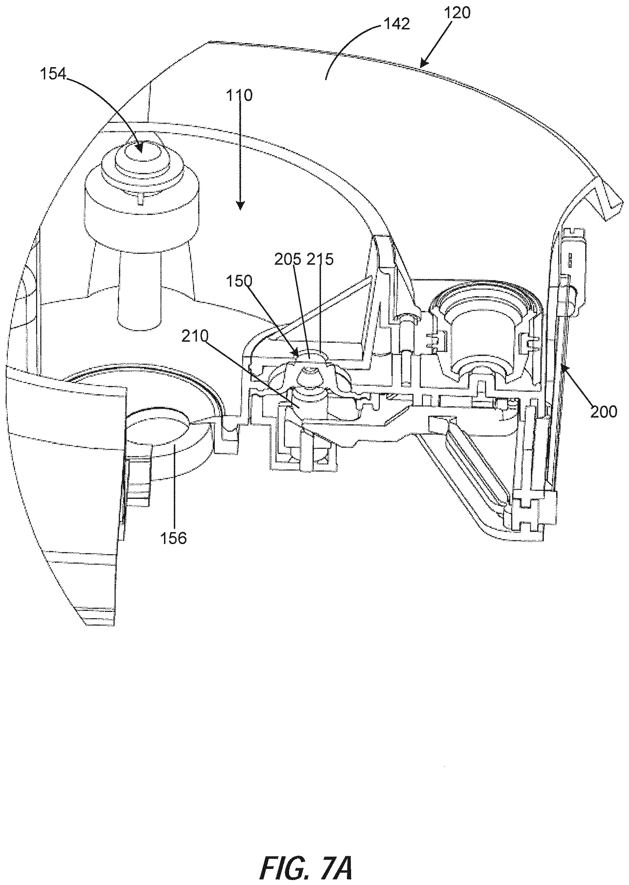

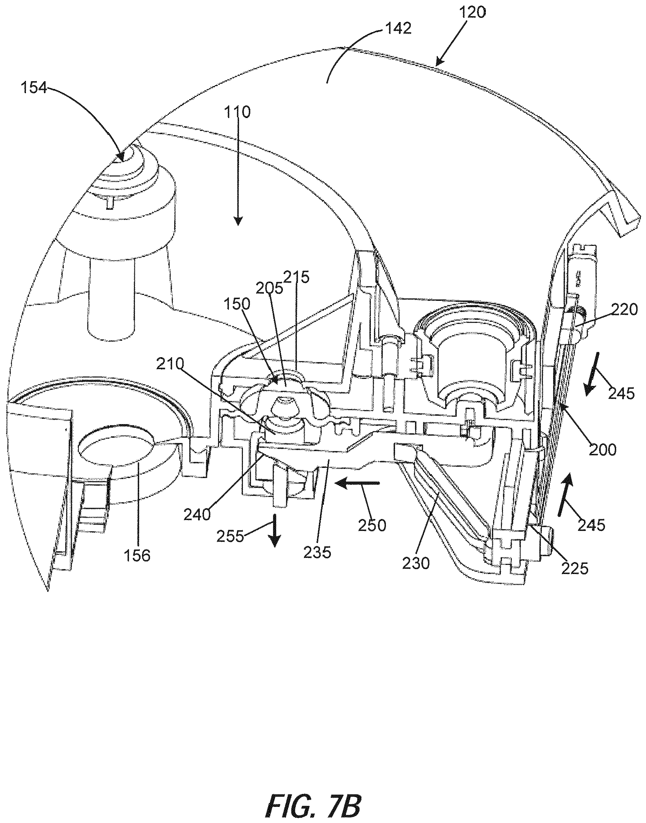

FIGS. 7A and 7B illustrate perspective views, in partial section, of the valve 150. As noted previously, the valve 150 can facilitate the selective addition of liquid to the reservoir 110 by actuating between closed and opened positions. FIG. 7A shows the valve 150 in a closed position. The closed position of the valve 150 can prevent liquid from being communicated between the first interior volume of the tank and the reservoir 110. FIG. 7B shows the valve 150 in an opened position. The opened position of the valve 150 can allow liquid to be communicated between the first interior volume of the tank and the reservoir 110. The humidifier's controller, for instance, can be coupled to the valve 150 and configured to cause selective actuation of the valve 150 between the closed and opened positions.

In the exemplary embodiment shown in FIGS. 7A and 7B, to facilitate actuation of the valve 150 between the closed and opened positions, a shape memory alloy 200 is included. The shape memory alloy 200 can be coupled to the valve 150. The shape memory alloy 200 can have an original (undeformed) shape and a deformed shape. In the example shown, the shape memory alloy 200 can include nitinol wire. In a particular embodiment, the valve 150 may be in the closed position when the shape memory alloy 200 is in the original shape and in the opened position when the shape memory alloy 200 is in the deformed shape. Thus, to actuate the valve 150 to the opened position the shape memory allow 200 can be transformed to the deformed shape. For instance, the humidifier's controller can be coupled to the valve 150 via the shape memory alloy 200. The controller can output a signal to actuate the valve 150 from the closed position to the opened position. This can include providing a current to the shape memory alloy 200 to transform the shape memory alloy 200 from the original shape to the deformed shape, and thus move the valve 150 from the closed position to the opened position. In other embodiments, the signal output from the controller can cause the shape memory alloy 200 to be transformed by other means, such as in the form of a variety of other applied heat sources. Accordingly the shape memory allow (e.g., nitinol wire) 200 can be deformed in response to an actuation signal from the controller. In one example, the shape memory alloy 200 can return to the original shape when the controller terminates the actuation signal (e.g., the supply of current to the shape memory alloy 200 is stopped). Including a shape memory alloy 200 may, for instance, provide cost and space advantages over other certain types of valves while providing the intended functionality of the humidifier.

FIG. 7A shows the valve 150 in the closed position and the shape memory alloy 200 in the original shape. In this example, the valve 150 includes a valve sealing surface 205 and a valve support 210. When the shape memory alloy 200 is in the original shape as shown in FIG. 7A, the valve support 210 can be extended upward and press the valve sealing surface 205 against a reservoir port 215 to close the valve 150. For instance, the valve support 210 can include a biasing member, such as an internal spring, that provides an upward biasing force on the valve support 210.

To actuate the valve 150 to the opened position the shape memory allow 200 can be transformed to the deformed shape. As noted, the shape memory alloy 200 can be deformed in response to an actuation signal from the controller. FIG. 7B shows the valve 150 in the opened position and the shape memory alloy 200 in the deformed shape (e.g., a more compressed state relative to the original shape). Here, when the shape memory alloy 200 is in the deformed shape, the valve sealing surface 205 is moved away from its position pressing against the reservoir port 215 and thereby opens the reservoir port 215 into the reservoir 110.

The shape memory alloy 200 can be coupled to the valve 150 in a variety of suitable configurations that allow deformation of the shape memory alloy 200 to open the valve 150. One example of such a configuration is described here in reference to FIG. 7B. In the illustrated example of FIG. 7B, the shape memory alloy 200 (e.g., nitinol wire) is secured to a first anchor 220 and a second anchor 225. The second anchor 225 is attached to a transfer arm 230. The transfer arm 230 is attached to an actuation slider 235 which movably interfaces with a surface 240 of the valve support 210. In the configuration shown here, the surface 240 and the interfacing end of the actuation slider 235 include complimentary angled portions that enable relative movement thereat.

As the shape memory alloy 200 is transformed to the deformed shape, this change in the shape memory alloy 200 can bring the first anchor 220 and the second anchor 225 closer together as indicated by the arrows 245. As one example, the deformed shape of the shape memory alloy 200 can be a more compressed state relative to the original shape, and transformation to this more compressed state can supply force needed to bring the first and second anchors 220, 225 closer together. As the first and second anchors 220, 225 are brought closer together, the arm 230 acts to transfer force from the second anchor 225 to the actuation slider 235. In one instance, force is transferred to the actuation slider 235 in a direction generally perpendicular to the first and second anchors 220, 225. This causes the actuation slider 235 to move along the surface 240 of the valve support 210 as indicated by the arrow 250. As the actuation slider 235 is moved along the surface 240 it can overcome the upward bias force on the valve support 210 and move the valve support 210 downward as indicated by the arrow 255. This, in turn, can bring the valve sealing surface 205 away from its position pressing against the reservoir port 215 and thereby opens the valve 150 into the reservoir 110. Thus, in this way, deforming the shape memory alloy 200, such as via an actuation signal from the controller, can actuate the valve 150 to the opened position. Likewise, the shape memory alloy 200 can return to its original shape when the controller terminates the actuation signal.

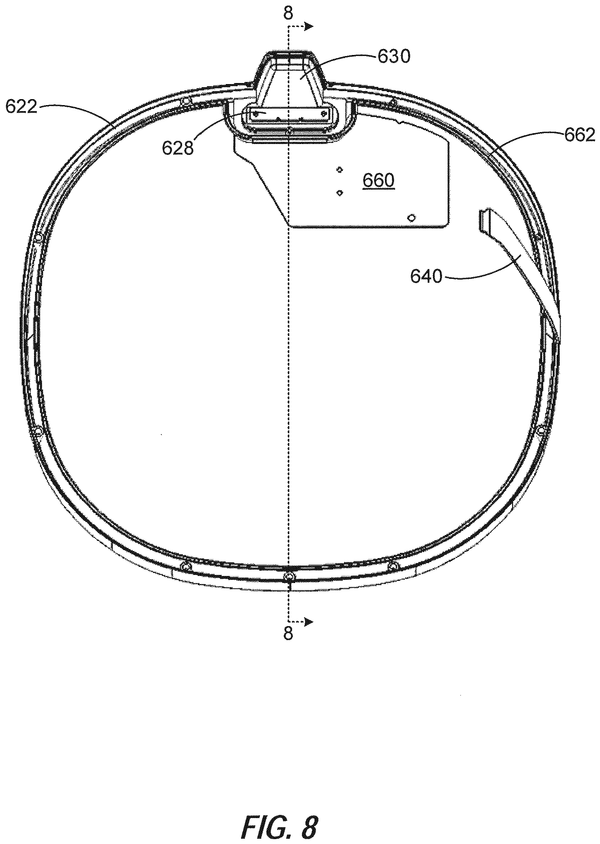

FIG. 8 is a perspective view of a mate ring, including an interface and water level sensor. In the example of FIG. 8, a mate ring 622 is coupled to an interface 630 and a water level sensor 640. A connector 628 facilitates communication between portions of the mate ring 622 and a circuit board 660. In some embodiments, circuit board 660 can include various system components, such as a power supply, a controller, and the like, and can be housed in the base portion of a humidifier. In other examples, circuit board 660 can include some such components, such as a controller, and be in communication with other base portion components, such as a power supply (e.g., a power supply board) from which power is supplied to the circuit board 660. Power and/or data can be communicated between circuit board 660 and the mate ring via connector 628.

In some examples, interface 630 receives power and/or data directly from connector 628. Additionally or alternatively, mate ring 622 can include communication channels 662 (e.g., conductive channels) for facilitating transmission of signals between the circuit board 660 and system components such as the interface 630 and/or the water level sensor 640. In various embodiments, communication channels 662 can include electrical communication channels (e.g., electrically conductive wires), optical communication channels (e.g., fiber optics), or other appropriate communication devices.

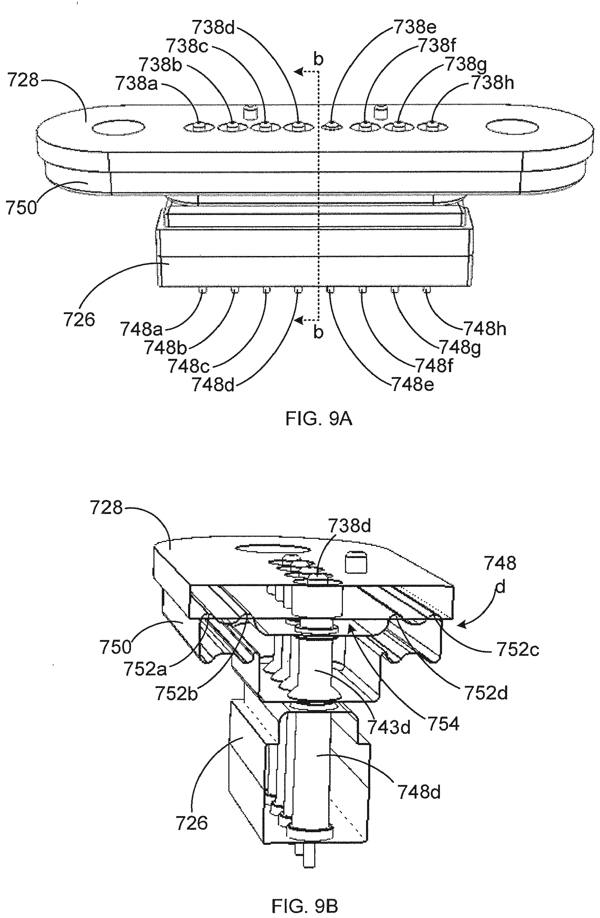

As described, connectors can facilitate communication between various portions of the humidifier, for example, between a circuit board (e.g., 660) housed in the base portion and an interface and/or water level sensor proximate the liquid tank. FIG. 9A shows an exemplary view of the coupling of a lower connector and an upper connector. In the illustrated example, the upper connector 728 includes a plurality of pins 738a-738h and the lower connector 726 includes a corresponding plurality of pins 748a-748h. In some examples, pins 738a-738h of the upper connector 728 can engage corresponding pins 748a-748h of lower connector 726 to secure the upper connector 728 and lower connector 726 together. In some embodiments, when connected, pins 738a-738h are in electrical communication with pins 748a-748h. In such configurations, electrical signals can be communicated between components in the base portion and components in and/or proximate the liquid tank via pins 738a-738h and 748a-748h. Additionally or alternatively, pins 738a-738h and 748a-748h can be used to facilitate other types of communication, such as optical communication, between components in the system. In some exemplary configurations, a gasket 750 can facilitate a liquid-tight seal around the connection between the upper connector 728 and the lower connector 726 to prevent liquid from interfering with communication, such as electrical communication, between the connectors.

FIG. 9B is a cross-sectional view of a coupling between connectors taken along line b-b in FIG. 9A. FIG 9B shows, as an illustrative example, pin 738d of upper connector 728 in communication with pin 748d of lower connector 726. Gasket 750 surrounds the connection between the upper connector 728 and the lower connector 726 to protect the points of connection, for example, from liquid present in the humidifier. In various examples, the gasket 750 could be integrally formed into the upper connector 728 or the lower connector 726. In other examples, the gasket 750 can be separate from both the upper 728 and lower 726 connectors.

In some examples, connection between the upper 728 and lower 7265 connectors occurs proximate space 754 between the gasket 750 and the upper connector 728. In some such examples, this location is most susceptible to interference, for example, by liquid in the humidifier. In some examples, gasket 750 includes ridges (e.g., 752a-752d) surrounding or partially surrounding the perimeter of the connection. For instance, in some embodiments, ridges 752a and 752c are portions of the same ridge surrounding the gasket 750. The ridges 752a-752d can provide a seal between the top surface of the gasket 750 and the bottom surface of the upper connector 728 to prevent liquid or other contaminants from entering space 754 and potentially disrupting communication between the lower 726 and upper 728 connectors. While shown as providing a seal between against a surface on the upper connector 728 in FIG. 9B, in various embodiments, gasket 750 can additionally or alternatively include ridges configured to abut an upper surface of the lower connector 726.

In some embodiments, gasket 750 surrounds the connection between the upper connector 728 and the lower connector 726 without engaging pins (e.g., 738d, 748d). In other examples, gasket 750 comprises connecting channels (e.g., 743d) to facilitate communication between the upper connector 728 and lower connector 726. For example, in the exemplary configuration of FIG. 9B, intermediate connector 743d is in communication with lower pin 748d and upper pin 738d. In some examples, such intermediate connectors can be integrated into gasket 750. In other examples, connector 743d can be a portion of upper pin 738d or lower pin 748d extending into the gasket 750, for example, via a liquid-tight opening.

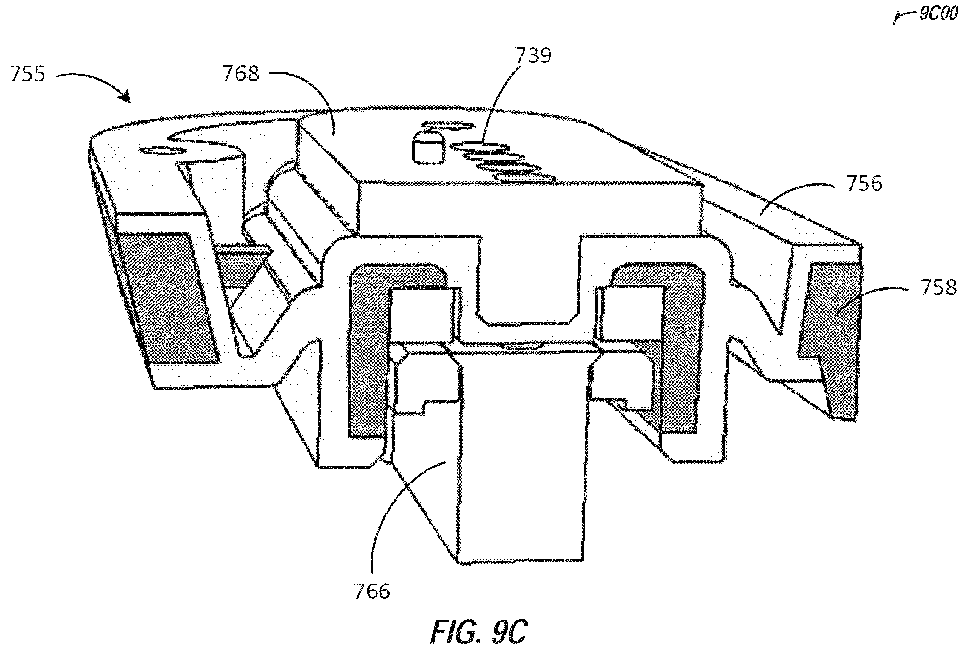

FIG. 9C shows an exemplary view of an alternative coupling of a lower connector and an upper connector. In the illustrated example, and upper connector 768 can interface with a lower connector 766 to allow communication between components in the base portion of the humidifier and components in the liquid tank. In the exemplary embodiment of FIG. 9C, the upper connector 768 can house one or more pins, for example, in opening 739, to interface with corresponding pins housed in the lower connector 766.

The coupling shown in FIG. 9C includes a compressible surrounding 755 supporting one or both of the upper connector 768 and the lower connector 766. In some embodiments, the compressible surrounding 755 is configured to support the upper connector 768 relative to the liquid tank and/or support the lower connector 766 to base portion. In some embodiments, the compressible surrounding can include a compressible material, such as rubber. In some such examples, the compressible material can act to suppress vibrations experienced by the humidifier (e.g., due to fan or atomizer operation, external vibration sources, etc.) from impacting the connection between upper connector 768 and lower connector 766 (e.g., via pins). Additionally or alternatively, the compressible material can improve the sealing ability of the surrounding 755 to keep liquid or other contaminants from reaching the connection interface between the upper connector 768 and the lower connector 766.

In some embodiments, the compressible surrounding 755 can include separate compressible components 756 and 758, shaded in light and dark gray, respectively, in FIG. 9C. In some such examples, the separate components 756 and 758 can interface with the upper connector 768 and the lower connector 766, respectively to provide each such connector with vibration insulation from the humidifier. In some such examples, separate components 756 and 758 can be made from different materials or can be made from the same material. In some embodiments, compressible components 756 and 758 can be integrated into a single compressible component having sections (e.g., demarcated by shaded areas 756 and 758) that can be made from the same or different materials.

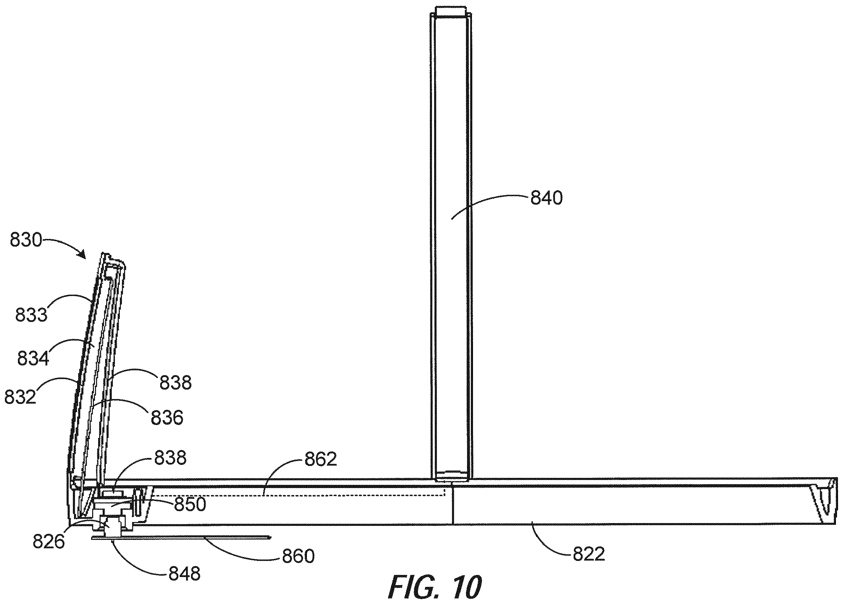

FIG. 10 is a cross-sectional view of the mate ring and other components taken along line 8-8 in FIG. 8. In the example of FIG. 10, mate ring 822 is coupled to interface 830 and water level sensor 840. An upper connector 828 can be in communication (e.g., electrical communication) with the interface 830 and/or the water level sensor 840, for example, via one or more communication channels (e.g., channel 862 shown in a broken line). The upper connector 828 can communicate (e.g., electrically) with a lower connector 826, for example, by way of one or more connecting pins (e.g., 738d and 748d of FIG. 9B). As described with respect to FIGS. 9A and 9B, a gasket 850 can provide a liquid-tight seal between the upper connector 828 and the lower connector 826 so that liquid from the humidifier does not interfere with electrical communication between the connectors.

In the example of FIG. 10, the lower connector 826 is coupled to a circuit board 860 by one or more connecting pins 848. The circuit board 860 can include any number of components for use in operating various portions of the humidifier. For example, in some embodiments, circuit board 860 can include or otherwise be in communication with a controller and/or a power supply for communicating with and providing power to interface 830 and/or water level sensor 840.

Interface 830 of FIG. 10 includes a light pipe 834 into which light can be emitted for presenting to a user via transmission through one or more lenses 832. In some examples, a board 836 can include one or more light sources, such as LEDs, that are positioned to emit light into the light pipe. In some examples, signals and power for lighting such light sources can be provided to the interface 830 from the circuit board 860 via pins 848, lower connector 826, and upper connector 828.

As described elsewhere herein, lens 832 can include a touch sensor 833 to receive touch input signals from a user. In some examples, inputs received via the touch sensor 833 can be communicated to a controller located in the base portion of the humidifier (not shown) via the upper connector 828, lower connector 826, pins 848, and circuit board 860. As described elsewhere herein, an isolation interface 838 can protect internal elements of the interface 830 and minimize interference from liquid in the liquid tank.

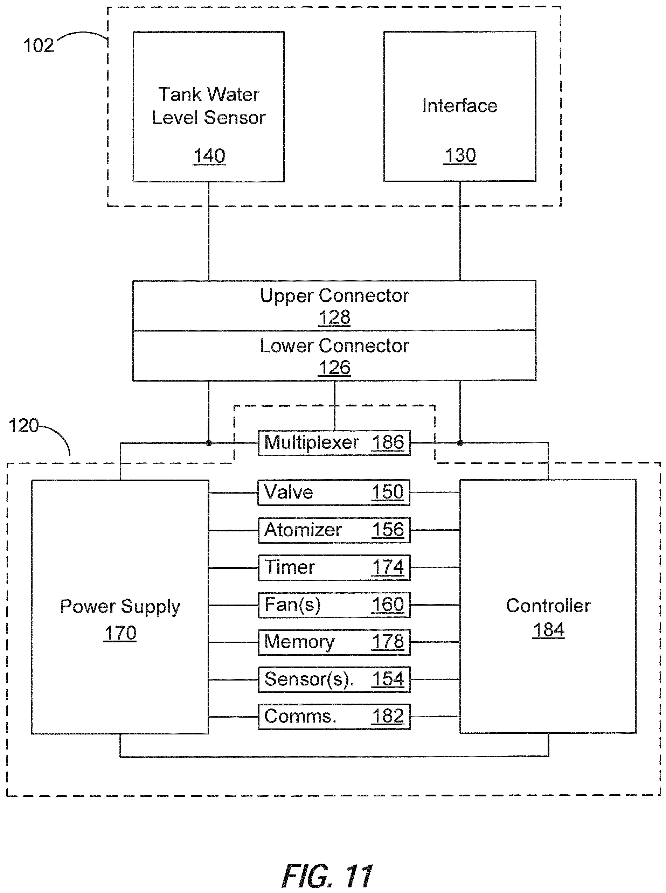

FIG. 11 is a schematic diagram showing exemplary communication between various system components within a humidifier. In the illustrated embodiment, the liquid tank 102 includes the tank water level sensor 140 and the interface 130. The example of FIG. 11 further includes the base portion 120 including a power supply 170 and a controller 184. As described elsewhere herein, such components can be housed in the base portion 120 of the humidifier and, for instance, be supported by a circuit board therein. As described elsewhere herein, tank water level sensor 140 and/or interface 130 can be embedded into, formed into, and/or supported by a sidewall of the liquid tank 102. As described elsewhere herein, in some examples, one or more of such components (e.g., tank water level sensor 140) can be isolated from the environment exterior to the humidifier to prevent undesired detection of external electric fields and/or touch from a user.

The base portion 120 further includes additional humidifier components, such as the liquid atomizer 156, the valve 150, one or more fans 160, a memory 178, a liquid quantity sensor 154 and one or more other sensors (e.g., a temperature sensor, humidity sensor, etc.), and a communication interface 182. Such components may be used during various operations of the humidifier. For instance, in some exemplary embodiments, atomizer 156 and one or more fans 160 can operate together to create mist from liquid stored in a reservoir and subsequently expel the mist from the humidifier. This could include one or more fans 160 in fluid communication with the fluid column to deliver mist created by the atomizer 156 through the fluid column to the ambient atmosphere. Memory 178 can be used to store operating instructions for the controller 184 and/or data collected during various humidifier operations. Additionally or alternatively, controller 184 can receive data from the liquid quantity sensor 154 and one or more sensor(s), when present, and/or the fan(s) 160. In various examples, components such as memory 178 may be integrated into controller 184 or may be stand-alone components (e.g., on a circuit board).

According to the exemplary configuration of FIG. 7, the controller 184 is in communication with the atomizer 156, timer 174, valve 150, fan(s) 160 (e.g., a centrifugal fan), memory 178, sensor(s) 154, communication interface 182, and lower connector 126. The lower connector 126 can facilitate communication with the tank water level sensor 140 and/or the interface 130 by way of the upper connector 128. While shown as being in communication with the tank water level sensor 140 and the interface 130 via the lower connector 126 and upper connector 128, in some examples, the controller 184 can communicate with one or both of the tank water level sensor 140 and the interface 130 directly, for example, via a wireless communication (e.g., Bluetooth® connection).

In various embodiments, controller 184 can include any component or combination of components capable of receiving data (e.g., a user-selected mist emission setting via the user interface, tank liquid level data via the liquid level detector, reservoir liquid quantity data from liquid quantity sensor 154, fan speed related data from the fan(s) 160, etc.) from one or more system components. The controller 184 can be further configured to analyze the received data, and perform one or more actions based on the analyzed data. In various examples, controller 184 can be embodied as one or more processors operating according to instructions included in a memory (e.g., memory 178), such as a non-transitory computer-readable medium. Such memory can be integral with the controller 184 or separate therefrom. In other examples, such a controller 184 can be embodied as one or more microcontrollers, circuitry arranged to perform prescribed tasks, such as an application-specific integrated circuit (ASIC), or the like.

In some embodiments, the controller 184 can be configured to communicate with other humidifier components in any of a variety of ways, such as via wired or wireless communication (e.g., via lower connector 126 and upper connector 128). In some examples, the controller 184 can communicate with one or more components via an I2C connection, a Bluetooth® connection, or other known communication types. In various embodiments, controller 184 can be embodied as a plurality of controllers separately in communication with different system components. Such controllers can be programmed to operate in concert (e.g., according to instructions stored in a single memory or communicating memories), or can operate independently of one another.

For example, in various embodiments, the controller 184 can be in one- or two-way communication with various components of the humidifier, such as the atomizer 156, the timer 174, the valve 150, the fan(s) 160, the liquid quantity sensor 154, the interface 130, and/or the tank water level sensor 140. For example, as described elsewhere herein, in some embodiments, the controller 184 can be configured to receive data from the liquid quantity sensor 154 and control operation of the valve 150. This could include receiving such data from the liquid quantity sensor 154 and causing a current to be output onto a component coupled to the valve 150 (e.g., the shape memory alloy). The controller 184 may also be configured to receive data from the liquid quantity sensor 154 and control operation of the atomizer 156 and/or fan(s) 160 in conjunction with control of the valve 150. It will be appreciated that various examples are possible, some of which are described herein by way of example.

The controller 184 can adjust operation of one or more humidifier components to adjust the humidifier output according to received input. In some examples, the controller 184 can adjust the operation (e.g., the operating power, operating frequency) of the atomizer 156 in order to produce more or less mist and/or vary the degree of atomization of the liquid. Additionally or alternatively, the controller 184 can adjust the operating speed of a fan 160 (e.g., a mist fan, such as a centrifugal fan) to control the speed at which mist is expelled from the humidifier. In certain examples, the controller 184 may selectively adjust one or both of the atomizer 156 and the fan 160 depending on the magnitude of output level change and/or desired output level. In further examples, as described elsewhere herein, the controller 184 can receive data from one or more components, such as fan(s) 160, and/or sensors, such as liquid quantity sensor 154 in the base portion 120 and/or external sensors in communication with controller 184. In some such examples, the controller 184 can be configured to receive data from such sensors and adjust humidifier operation accordingly. For instance, in an exemplary embodiment, the controller 184 monitors the liquid level in the reservoir according to data received from the liquid quantity sensor 154 and can act to adjust the liquid level in the reservoir via actuation of the valve 150. As another example, the controller 184 monitors the speed of the fan(s) 160 according to data received from the fan(s) 160 and can act to adjust the power being supplied to the fan(s) 160.

In some embodiments, the communication interface 182 can facilitate communication between one or more humidifier components (e.g., controller 184) and one or more external components via a wired connection and/or a wireless connection, such one or more of a Wi-Fi® connection, a Bluetooth® connection, or the like. In some such embodiments, the controller 184 can be accessed via the communication interface 182 such that a user can adjust one or more settings of the controller 184 via an external or remote device. Similarly, such access to the controller 184 can be used to control operation of the humidifier, such as a desired amount of mist emission or the like, in addition to or instead of other interfaces (e.g., interface 130). In some such examples, a user can interface with the communication interface 182 of the humidifier via, for example, a web interface and/or an application running on the user's mobile device, such as a smartphone, tablet, or the like.

In some embodiments, the controller 184 can additionally or alternatively be in communication with one or more external devices, for example, via communication interface 982. In some such examples, the controller 184 can receive data from one or more sensors external to or built-in to the humidifier, for example, via wired or wireless connection, such as Ethernet, Bluetooth®, Wi-Fi®, etc. Some such sensors can be used for measuring different aspects of the ambient environment of the humidifier, such as a temperature sensor, humidity sensor (e.g., a hygrometer), or the like. In some such examples, the controller 184 can perform one or more operations according to received data from external sensors. In some embodiments, remotely located components such as a humidity sensor, temperature sensor, or the like can be used to measure various parameters regarding the ambient environment surrounding the humidifier. In some such examples, there is no need to sample surrounding air in the humidifier itself, and the humidifier base portion (e.g., 120) can be made without vents (e.g., base portion 120b in FIG. 1B), which reduces the likelihood of excess liquid from undesirably entering the base portion of the humidifier.

In the illustrated example, power supply 170 is in communication with a variety of components in the base portion 120 as well as lower connector 126, which itself is in communication with the upper connector 128. Thus, in various embodiments, the power supply 170 can provide electrical power to various components in the base portion 120, such as the atomizer 156, timer 174, valve 150, fan(s) 160, sensor 154, communication interface 182, controller 184, as well as any other components. Further, power supply 170 can provide electrical power to components proximate the liquid tank 102, such as the tank water level sensor 140 and the interface 130, by way of the upper connector 128 and lower connector 126.

In various embodiments, power supply 170 can include one or more sources of electrical power, such as one or more batteries, capacitive energy storage devices, or the like. Additionally or alternatively, power supply 170 can include a wired power supply, for example, a plug capable of plugging into an outlet. In some embodiments, the power supply 170 receives electrical power from a power source (e.g., a wall outlet) and outputs an appropriate electrical power to various humidifier components as needed during operation of the humidifier. As noted, in some cases an amount of electrical power output to certain humidifier components (e.g., the fan(s) 160) can be regulated by the controller 184. In some examples, each component in the humidifier can operate at approximately the same voltage output from power supply 170. In still further examples, power supply 170 can include a plurality of power-supplying components for providing different amounts of electrical power to different components. For instance, in some embodiments, power supply 170 can include a power board having a plurality of outputs for providing power to various system components. In some embodiments, power supplied to various components within the humidifier are independent from one another so that any short circuit condition (e.g., due to liquid ingress) in the power supplied to one portion of the humidifier does not impact the power supplied elsewhere.

In the embodiment of FIG. 11, the base portion further includes a multiplexer 986 in communication with the power supply 170, the controller 184, and the lower connector 126. As described elsewhere herein, in some embodiments, the multiplexer 186 can be used to perform a fault check analysis of the humidifier to ensure that the lower connector 126 and upper connector 128 are properly connected and the system components are in good working order. In an exemplary embodiment, the power supply 170 can provide electrical power to the multiplexer 186, which can be controlled by and output a signal to the controller 184. In some examples, the controller can read the signal on each pin of the lower connector 126 via multiplexer 186 and compare the signal on each pin to an expected value. If one or more pins provide an unexpected signal to the controller 184, the controller can detect a fault condition on the humidifier. In some embodiment, the controller 184 can disable operation of the humidifier based on a detected fault condition. Additionally or alternatively, the controller 184 can diagnose the fault condition based on the signals received from the multiplexer 186 and indicate one or more faults to the user, for example, via interface 130 or one or more external components via communication interface 182.

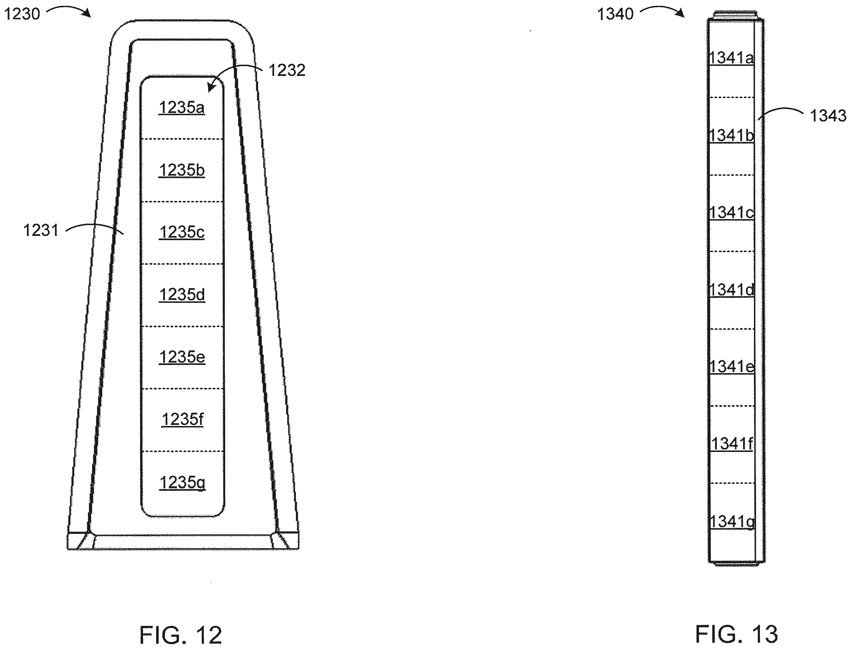

FIG. 12 shows a schematic representation of an exemplary interface for a humidifier. In the example of FIG. 12, interface 1230 includes a lens 1232 and a face 1231 surrounding the lens 1232. As described, for example, with respect to FIG. 2, the interface 1230 can include a light pipe (not shown) behind lens 1232 in which light can be emitted for presentation to a user, for example, via lens 1232. In some examples, the interface 1230 comprises a plurality of light sections 1235a-1235g, one or more of which can selectively and independently be illuminated via a light source (e.g., one or more LEDs). For instance, in some such embodiments, each section 1235a-1235g can be illuminated individually from the others. That is, for example, section 1235e can be illuminated via a light source while section 1235d is not illuminated.

In various embodiments, each section 1235a-1235g of the interface can include one or more light sources capable of emitting one or more colors of light via each respective section. For instance, in some examples, one or more such sections include a plurality of different colored LEDs (e.g., red, green, and blue LEDs) that can be selectively activated within each section to produce a customized color (e.g., an RGB color) to be displayed at that section. In some examples, the color of each such section can be individually controlled, for example, via the controller.

Additionally or alternatively, in some examples, one or more sections 1235a-1235g is only selectively illuminated as a single color. In various embodiments, such a single color can be emitted at a variable intensity (e.g., as controlled by the controller). In other examples, a section having the single color light output can function as a binary section, for example, having only operating states of "on" and "off."

During exemplary operation, a user may interact with interface 1230 in order to control operation of a humidifier. For instance, in an exemplary embodiment, sections 1235a-1235g correspond to different operating levels of the humidifier, for example, different amounts of mist expelled from the humidifier. To select a level of operation, a user may touch the interface at a level corresponding to a desired level of operation (e.g., at a touch sensor at section 1235d). The controller in communication with the touch sensors of interface 1230 can receive an indication that section 1235d was touched, and can control operation of the humidifier accordingly. For example, the controller can interface with an atomizer 156 and/or a mist fan 160 to control the output of mist from the humidifier. Such interfacing can include operating the atomizer 156 and/or mist fan 160 at a predetermined level of operation according to the level selected by a user via interface 1230.

Additionally or alternatively, a user may increase or decrease the mist output level (e.g., by adjusting the operation of the atomizer 156 and/or a mist fan 160) by swiping his or her finger along the surface of the interface 1230. The controller in communication with one or more touch sensors of the interface 1230 can be configured to detect the direction of a swipe and adjust the mist output accordingly (e.g., increase mist intensity for an upward swipe and decrease intensity for a downward swipe). In some such examples, the length of the user swipe corresponds to the amount the mist output is adjusted. Further, in some embodiments, a user may cease the emission of mist from the humidifier by swiping his or her finger to a predetermined location (e.g., proximate section 1235g) on the interface 1230. Similarly, in some embodiments, the touch sensor aspect of the interface 1230 can be used to turn on the humidifier.

For example, the touch sensor may be used to turn on the humidifier from a sleep or stand-by mode when sensing the touch of a user. Additionally or alternatively, in some embodiments, interface 1230 includes a proximity sensor separate from the touch sensor. Proximity sensor can include, for example, a wire extending around the touch sensor. In some examples, the proximity sensor can be used to wake-up the humidifier from a sleep or stand-by mode upon detecting an object within close proximity of the interface 1230.

In some examples, one or more sections 1235a-1235g can be lit to identify the current output level of the humidifier. For example, in an exemplary embodiment, section 1235g being lit corresponds to a minimum amount of mist being emitted from the humidifier while section 1235a being lit corresponds to a maximum amount of mist being emitted. In some such examples, a single section can be lit to indicate the output level of the humidifier. In other examples, each section up to the output level can be lit. For instance, in an exemplary configuration, sections 1235c-1235g can be lit when the output level is indicated by section 1235c.

In some embodiments, only a subset of sections 1235a-1235g is used for indicating the output level of the humidifier. For example, in some embodiments, one or more sections may be used to indicate other information. In an exemplary embodiment, sections 1235a-1235f are used to indicate the output level of the humidifier such as described above. However, section 1235g is used to separately indicate additional data, for example, a water freshness level. In some such examples, sections used to indicate the humidifier output level (e.g., 1235a-1235g) can be single-colored (e.g., white) sections, while section(s) used to indicate other parameters (e.g., 1235g; water freshness) can be a multi-colored (e.g., RGB) section. For example, a water freshness indicator section (e.g., 1235g) can change in a spectrum from green to red as the water freshness in the tank decreases.

FIG. 13 shows a schematic representation of an exemplary water level sensor for a humidifier. In the illustrated example, the water level sensor 1340 includes a plurality of sections 1341a-1341g. In some embodiments, sections 1341a-1341g can function as electrically isolated, independent capacitive sensors in communication with the controller. In some examples, the water level sensor 1340 includes a ground electrode (not shown) such that capacitive sections 1341a-1341g can each be capacitively coupled to the ground electrode. Changes from a baseline capacitance (e.g., a calibration capacitance in the absence of liquid) experienced at one or more sections 1341a-1341g can indicate the presence of liquid in the liquid tank impacting the electric field proximate such sections.

Accordingly, in some embodiments, capacitance values at sections 1341a-1341g can be measured and compared to a baseline value in order to determine the location of the junction between the liquid and air within the liquid tank, and thus the liquid level in the liquid tank. For example, with reference to FIG. 13, if sections 1341e-1341g experience significant changes in capacitance from a baseline capacitance value, while sections 1341a-1341d experience less or no change in capacitance, the liquid level may be near the boundary between sections 1341e and 1341d. In some examples, the deviation from the baseline capacitance at section 1341e can be further used to identify a liquid level within section 1341e.

In some embodiments, water level sensor 1340 further includes a continuous electrode 1343 extending approximately along the entirety of the water level sensor 1340. Similar to the discrete sections 1341a-1341g, the continuous electrode 1343 can be capacitively coupled to a ground electrode (not shown). Thus, liquid proximate portions of the continuous electrode 1343 affect the electric field, and thereby the capacitance, between continuous and ground electrodes. In some such examples, the continuous electrode 1343 can be used to determine a liquid level in the liquid tank independently from discrete sections 1341a-1341g. For example, in some embodiments, the continuous electrode 1343 can be used to establish a continuous reading of a liquid level within the liquid tank, while discrete sections 1341a-1341g can be used to determine the liquid level within the tank to within a certain accuracy (e.g., based on the size of the discrete sections 1341a-1341g). In some examples, the discrete sections 1341a-1341g reliably provide an approximate water level value, while the continuous electrode 1343 is capable of providing a higher resolution of water level values but is more subject to noise, drift, and other errors. Thus, it can be advantageous to include both the discrete section and continuous electrode configurations of capacitively determining the liquid level within the liquid tank.

In some examples, water level sensor 1340 can be factory calibrated to identify expected capacitance values (e.g., on one or more of sections 1341a-1341g and/or continuous electrode 1343) for an empty liquid tank and/or for tanks having various liquid levels. Such factory calibration settings can be stored in a memory such as memory 178 in the base portion 120 of the humidifier or in a separate memory, such as an auxiliary memory in the liquid tank 102. For instance, in some examples, an EEPROM can be stored in the liquid tank (e.g., proximate the user interface 130) and can include calibration data for the water level sensor. The factory calibration settings can be referenced when determining a liquid level within a tank during operation and/or when performing a calibration procedure. The water level sensor is described in greater detail in US Pat. App. No. 15/665,604, titled "Humidifier Measurement and Control.

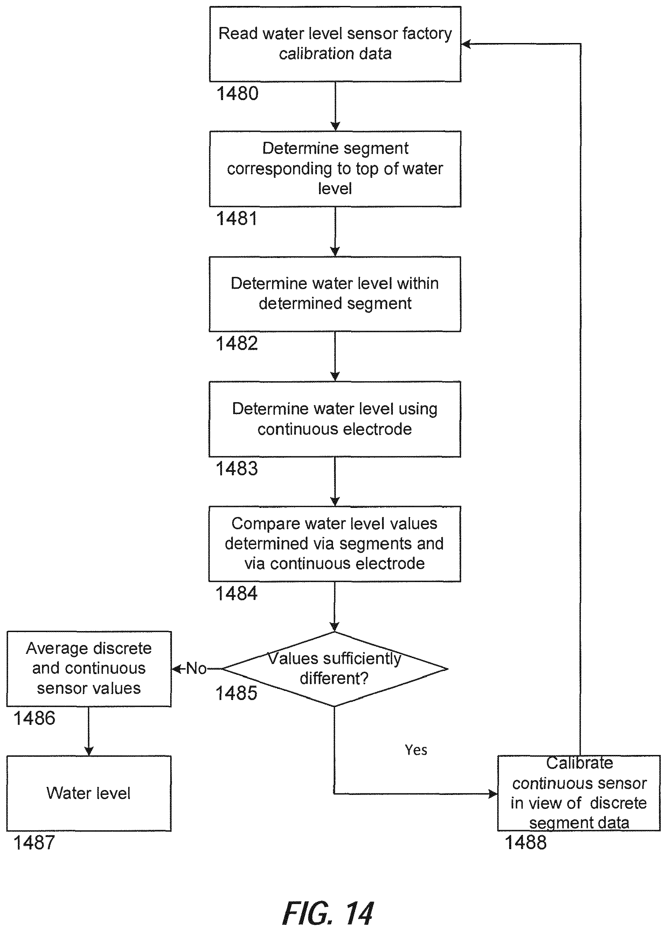

FIG. 14 is a process-flow diagram illustrating an exemplary process for determining a liquid level in the liquid tank. In some examples, the process illustrated in FIG. 14 can be performed by the controller 184. The process of FIG. 14 includes reading any water level sensor factory calibration data (1480). Next, the process includes determining the section (e.g., of sections 1341a-1341g) corresponding to the top of the current water level (1481), for example, via measured capacitances of the different sections. In some examples, the method includes the step of determining the water level within the determine section (1482). That is, in some embodiments, the method can include both determining in which section the top of the water level is located and also where within the section the top of the water level is located.

During exemplary operation according to some embodiments, once the section with which the top of the liquid level is identified, the controller can act to disable one or more sections separate from the identified section. For instance, in some examples, the controller disables (e.g., disregards, disconnects, or other method of not accounting for data) sections that are used for liquid level sensing that are not the identified section or the sections immediately above or below the identified section. In some such examples, artifacts such as a user touching the humidifier at an inactive section or liquid splashing on an inactive section do not undesirably and incorrectly affect the liquid level measurement.

Additionally, the method can include the step of determining the water level using the continuous electrode (e.g., 1343). In some example, this can be performed by measuring a capacitance of the continuous electrode. In various embodiments, determining the water level using the sections 1341a-1341g and/or via the continuous electrode 1343 is done using the factory calibration data read in step 1480.

The method can include the step of comparing the water level values determined via the sections (e.g., 1341a-1341g) and using the continuous electrode (e.g., 1343) (1484). This comparison can act as a check to ensure that the sensors are working properly. For example, in some cases, the capacitance reading of the continuous electrode (e.g., 1343) can drift over time, leading to measurement errors and incorrect water level determinations. Accordingly, after the values are compared (1484), if the values are determined to be sufficiently different (1485), the continuous sensor can be calibrated in view of the data from the discrete sections (1488), and the process can be repeated with the further-calibrated continuous sensor. However, if the determined water level values from the continuous and the discrete sections are determined to be sufficiently close to one another (1485), the discrete and continuous values can be averaged together (1486). In the method of FIG. 14, the average of the determined discrete and continuous water levels is considered to be the water level in the tank (1487).

In some embodiments, the step of calibrating the continuous sensor in view of the discrete section data (1488) comprises updating a value in memory (e.g., a "zero" value, a saturation value, or the like) such that the liquid level determined via the sections and via the continuous electrode are sufficiently close in value. In some embodiments, in addition to calibrating the continuous sensor in view of the discrete section data (1288), the method can include the step of determining the liquid level (1287), for example, from the discrete section data alone.

In various embodiments, the water level sensor(s) (e.g., the continuous electrode sensor and/or the discrete section electrodes) can be sampled at regular intervals. For instance, in some examples, the water level can be detected n times per minute or second (with n being an integer value), every minute, every 10 minutes, every hour, every day, or any other appropriate period of time. Additionally or alternatively, one or both of the continuous electrode water level sensor and the discrete section water level sensor can be calibrated or recalibrated based on various detected conditions of the detected water level. For example, in some embodiments, when a new water level is detected, if the new water level is beyond a threshold value or a threshold change in values from the previous reading such that the water level is unlikely to be correct (e.g., the water level is less than zero or changed by an unlikely amount), the sensor(s) can be recalibrated, for example, using factory calibration values.

Various configurations have been described. Several non-limiting examples of humidifier operation that can be performed using such exemplary humidifier configurations are described below.

Controlling Humidifier Output

With further reference to FIG. 11, as described elsewhere herein, the controller 184 can communicate with the interface 130 to receive an input from a user representative of a desired level or change in level of humidifier operation. For example, a user may swipe his or her finger along a touch sensor portion of the interface 130 to indicate an increase or decrease in humidifier operation (e.g., the amount of mist expelled into the atmosphere). Additionally or alternatively, a user may touch a location on the touch sensor portion of the interface 130 to indicate a desired level of operation.

The controller 184 can adjust operation of one or more humidifier components to adjust the humidifier output according to the received commands from the interface 130. In some examples, the controller 184 can adjust the operation (e.g., the operating power) of the atomizer 156 in order to produce more or less mist. Additionally or alternatively, the controller 184 can adjust the operating speed of a fan 160 (e.g., a mist fan) to control the speed at which mist is expelled from the humidifier. In some examples, the controller 184 always controls the same components to adjust the humidifier output level. In other examples, the controller 184 may selectively adjust one or both of the atomizer 156 and the fan 160 depending on the magnitude of output level change and/or desired output level.

Additionally or alternatively, the controller 184 can be configured to adjust the output of the humidifier (e.g., the atomizer 156 and/or the fan(s) 160) separately from commands received via interface 130. In some examples, the controller 184 can be configured to receive control data from a user via the communication interface 182. In some such examples, the user can adjust the humidifier settings (e.g., mist output, etc.) from an external source, such as via a web interface and/or an application running on the user's mobile device, such as a smartphone, tablet, or the like.

In still further examples, as described elsewhere herein, the controller 184 can receive data from one or more sensors, such as sensors 154 in the base portion 120 of the humidifier and/or external sensors in communication with controller 184 via communication interface 182. In some such examples, the controller 184 can be configured to receive data from such sensors, such as humidity and/or temperature data representative of the humidifier's surrounding environment, and adjust humidifier operation accordingly. For instance, in an exemplary embodiment, the controller 184 monitors the humidity of the environment surrounding the humidifier and, if the surrounding humidity drops below a threshold value, the controller 184 acts to turn on and/or increase the operating level of the humidifier. Similarly, in another exemplary embodiment, if the controller 184 senses the humidity of the surrounding environment to exceed a threshold, the controller 184 can act to reduce and/or shut off the humidifier output.

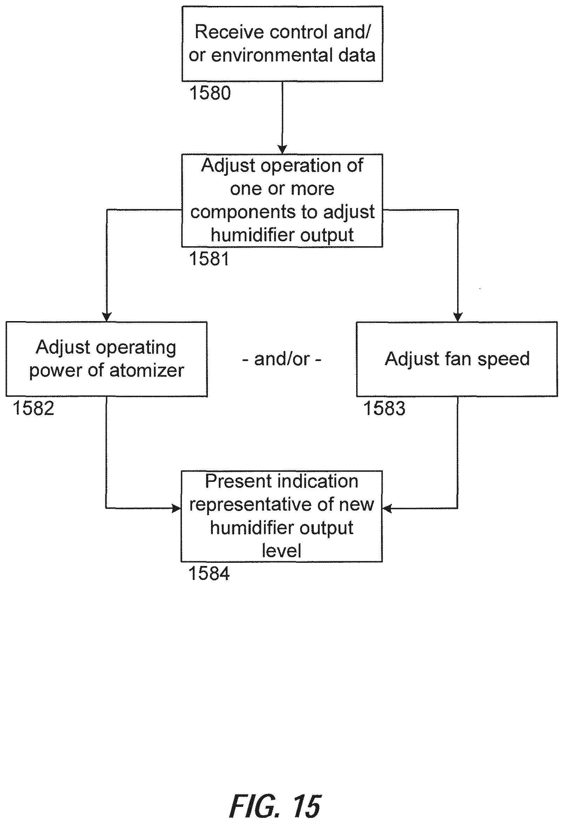

FIG. 15 is a process-flow diagram illustrating a process by which the humidifier output can be adjusted. The method includes the steps of receiving control and/or environmental data (1580), for example, via the controller. As described, control data can be provided via interface (e.g., 130) or from an external source, such as via communication interface (e.g., 182), and environmental data can be provided via internal sensors (e.g., 154) or external sensors via communication interface (e.g., 182). The process includes, after receiving control and/or environmental data, adjusting operation of one or more components to adjust the humidifier output (1581). This can include, for example, adjusting the operating power or other operating parameters of the atomizer (1582) and/or adjusting a fan speed (1583). After adjusting the humidifier output, the method includes the step of presenting an indication representative of a new humidifier output level (1584). Such presentation can be done, for example, via an interface (e.g. 130) on the humidifier itself and/or via an external device (e.g., via communication interface 182), such as a web interface and/or an application running on the user's mobile device, such as a smartphone, tablet, or the like.

Determining and Displaying Water Freshness

In some examples, the controller 184 can store determine water level readings in memory 178. The controller can monitor the water level over time using timer 174 and water level values stored in memory 178. In some examples, the controller 184 can determine the amount of time that has passed since fresh water has been added to the humidifier and determine a water freshness level based on the amount of time. In further examples, the controller 184 can determine a water freshness level based on a determined time that fresh water was added and the amount of fresh water that was added. For example, if an amount of fresh water is added to the humidifier that is equal to half of the total volume of water in the humidifier (e.g., based on detected changes in the water level), the freshness level of the water may be lower than that if all of the water in the humidor were replaced with fresh water.

Additionally or alternatively, the water freshness can be measured using a water freshness index. In some such examples, when the liquid tank (e.g., 102) is filled with fresh water, the freshness index starts at zero. As long as no additional fresh water is added, the freshness index increases over time. For example, in some embodiments, the freshness index increases by a predetermined amount at regular intervals.

In some examples, the controller 184 can continuously or periodically update the determined water freshness based on data received from the tank water level sensor 140 and the timer 174. In various embodiments, freshness levels can be updated at any of a variety of intervals, such as n times per minute or second (with n being an integer value), every minute, every 10 minutes, every hour, every day, or any other appropriate period of time.

Once the water freshness is determined, the controller 184 can control the interface 130 to present an indication of the water freshness. For example, in some embodiments, the interface 130 includes a section (e.g., section 1035g in FIG. 12) dedicated to displaying an indication of water freshness. Such a section can include a light source (e.g., one or more LEDs) capable of outputting a variety of colors of light that is controllable via the controller 184. The controller 184 can adjust the color light emitted via the section of the interface 130 to indicate the water freshness to a user. In some examples, the color is green when the water is freshest and changes toward yellow or red as the water becomes staler. It will be appreciated that any color presentation scheme is possible in which the color changes with the water freshness to quickly inform the user of the freshness of the water.

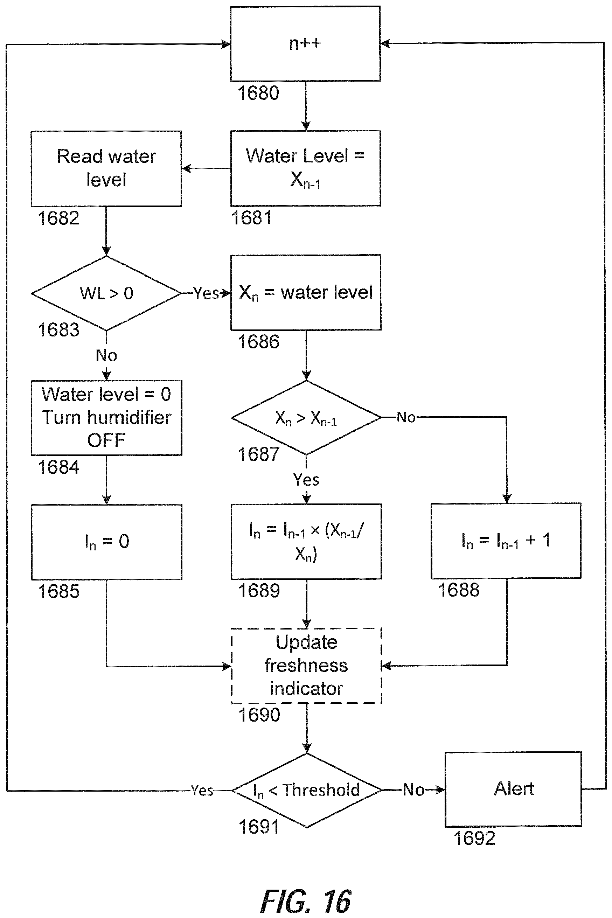

FIG. 16 is a process-flow diagram showing an exemplary a process for updating the water freshness index in a humidifier. In some examples, the method of FIG. 16 can be performed repeatedly, for example, periodically, to continually update the water freshness index. In an exemplary embodiment, an index n is increased from a previous iteration of the freshness analysis. After increasing index n (1680), a current water level value corresponds to the water level measured in the previous iteration (n-1), such that the water level is $X_{n-1}$ (1681). The method includes the step of reading the water level (1682), for example, using the water level sensor and the method described in FIG. 12. If the water level is not greater than zero (1683), the water level is set at zero and the humidifier is turned off (1684). If there is assumed to be no water in the humidifier, the updated freshness index ($I_n$) of the "water" is set to zero (1685).

If the water level is determined to be greater than zero (1683), then the new water level is set as a value $X_n$ (1686). The new water level $X_n$ is compared to the previous water level $X_{n-1}$ (1687). If the new water value $X_n$ is not greater than the previous water level $X_{n-1}$, then it is assumed that no new fresh water has been added to the tank, and the water freshness index is updated so that the new water freshness index $I_n$ in increased by one from the previous water freshness index $I_{n-1}$ (1688).

However, if the new water value $X_n$ is greater than the previous water level $X_{n-1}$, then it is assumed that fresh water has been added to the liquid tank. In such examples, the previous freshness index $I_{n-1}$ is scaled by a factor of $X_{n-1}/X_n$ such that the updated water freshness index $I_n = I_{n-1} \times X_{n-1}/X_n$ (1689). That is, since $X_n > X_{n-1}$, the scaling factor $X_{n-1}/X_n$ is less than one and the freshness index $I_n$ decreases from the previous value $I_{n-1}$, implying the water in the liquid tank has increased in freshness. The increase in freshness depends on the amount of new fresh water added to the tank ($X_n - X_{n-1}$) and the amount of water that was in the tank previously $X_{n-1}$.

As described with respect to steps 1685, 1688, and 1689, the water freshness index is updated during each iteration of the process of FIG. 16. In some examples, a freshness indicator (e.g., a colorized LED indication of the water freshness or other indication on interface 130) is updated to reflect the new water freshness index $I_n$ (1690). Additionally or alternatively, the water freshness index $I_n$ can be presented to a user via a remote interface, such as a web interface and/or an application running on the user's mobile device, such as a smartphone, tablet, or the like.

According to the method of FIG. 16, the updated water freshness index $I_n$ is compared with a threshold (1691). If the water freshness index $I_n$ is less than the threshold, the counting index n increases (1680) and the process is repeated, for example, according to a scheduled water freshness analysis. However, in some examples, if the water freshness index $I_n$ meets the threshold, the system can be configured to generate an alert (1692) to indicate that the water in the humidifier has likely become or is becoming stale. The alert can include, for example, presenting a display corresponding to the alert on the interface (e.g., 1230), such as by lighting one or more of various sections 1035a-1035g in a predetermined combination and/or in a certain color. In an exemplary embodiment, the alert includes lighting section 1035g of the interface 1230 of FIG. 12 red. Additionally or alternatively, the alert can include an audible alert and/or an alert communicated to the user over a network (e.g., the Internet) or via direct communication, such as via a Bluetooth® connection via communication interface 982. In some such examples, the user can receive such alerts via a web interface and/or an application running on the user's mobile device, such as a smartphone, tablet, or the like.

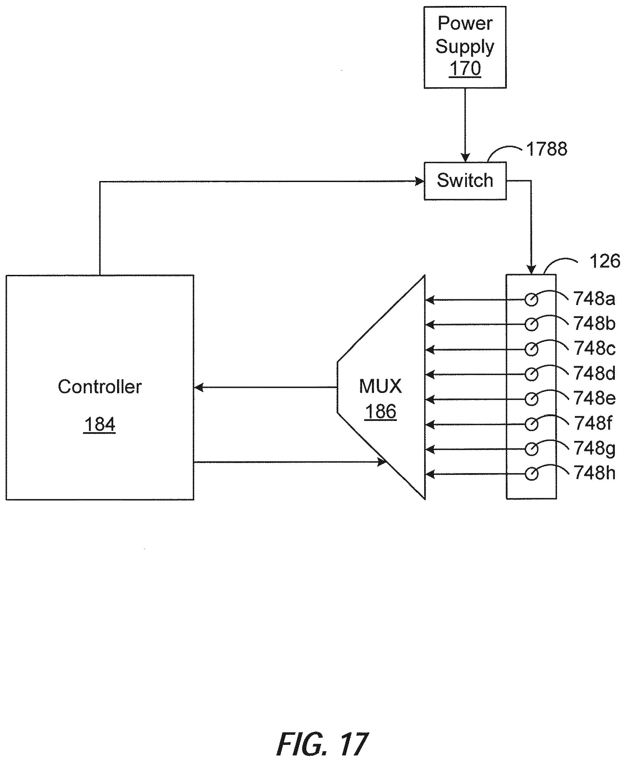

As described with respect to FIG. 11, in some embodiments, the humidifier can include a multiplexer arranged to monitor the signals at a variety of locations, such as pins in a connector, by the controller. FIG. 17 is a schematic diagram showing an exemplary multiplexer configuration in a humidifier. The humidifier of FIG. 17 includes a multiplexer 186 in communication with a controller 184 and a plurality of pins 748a-748h of a lower connector 126. In some embodiments, the controller 184 provides a control signal to the multiplexer 186 in order to read the signal from one of the plurality of pins 748a-748h.

In the illustrated example, the controller 184 is in communication with a switch that can be used to selectively apply power from a power supply 170 to one or more pins 748a-748h of lower connector 126 via switch 1788. In some embodiments, the controller 184 operates the read the signal on each of pins 748a-748h one-by-one via the multiplexer 186 and compares each signal to an expected value. If the measured value one or more of pins 748a-748h does not meet the expected value (e.g., does not fall within a predetermined range of values), the controller 184 detects a fault condition in the humidifier.

In some embodiments, the controller 184 can be configured to diagnose the detected fault condition based on the signal(s) received from pins 748a-748h. For example, in an exemplary fault-detection process, the controller 184 can identify if any of pins 748a-748h are shorted together, such as due to improper placement of the tank on the base portion or water ingress into the connector.

In some embodiments, the controller 184 is configured to disable operation of the humidifier when a fault is detected. In some such embodiments, the fault detection is performed at start-up of the humidifier and only allows operation of the humidifier when no fault is detected. Additionally or alternatively, the controller can be configured to alert a user of a detected fault condition. For instance, in some examples, the controller can alert a user of a fault condition via an interface, such as interface 130. With respect to FIG. 12, in some examples, the controller can be configured to light a predetermined number or pattern of light sections 1035a-1035e upon detecting a fault condition. However, in some cases, the fault condition (e.g., improper connection between the base and the tank or a short circuit between pins due to water ingress) may prevent the controller from properly controlling interface 1230. Additionally or alternatively, the controller can communicate a detected fault condition to a user via a user's device, such as a computer or a smart device (e.g., a smartphone, tablet, etc.). Such communication can be performed locally, for example, over a Bluetooth® or other connection. Additionally or alternatively, an alert can be communicated over a web interface. The user can receive the alert, for example, via a web-based interface and/or an application running on the user's mobile device, such as a smartphone, tablet, or the like.

Although the humidifier can be used as a standalone device, the features of the humidifier can be expanded by connecting the humidifier to a cloud-based application. The cloud-based application can execute within a cloud-based platform, such as Amazon Web Services or Microsoft Azure. The cloud-based application can allow a user to interact with the humidifier via an app executing on a mobile computing device and/or through a web browser interface to the cloud-based application. The cloud-based application can allow greater interactivity and more features to the user than the interface on the body of the humidifier does alone.

The cloud-based application can also tailor the user experience by one or more of provisioning the humidifiers to specific user accounts, learning the preferred settings of the users, and adjusting humidifier operating parameters to cater to the preferred settings of the users. A single user can control several humidifiers at a time to create a "habitat." This Internet-of-Things (IoT) capability can also allow some of the processing necessary for the operation of the humidifier to be performed in the cloud-based application rather than (or in addition to) on the humidifier itself. A large number of features can be incorporated into the humidifier through the cloud-based application, such as the different modes, timers, schedulers, collection and processing of user data over time, statistical analysis, etc.

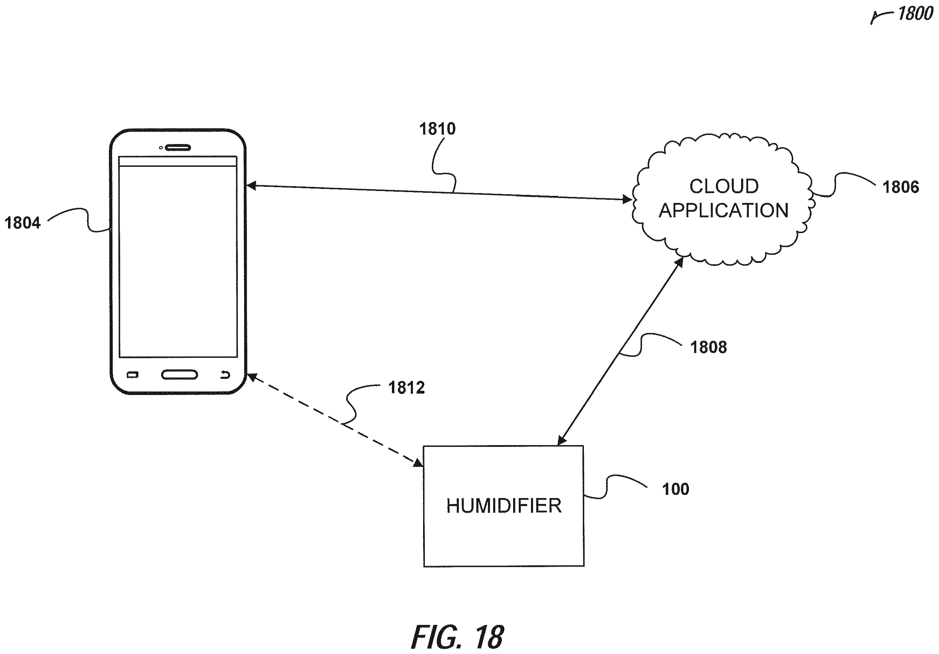

FIG. 18 illustrates a system for controlling a humidifier via a cloud-based application, according to an example embodiment. The system can include the humidifier 100, a computing device 1804, and a cloud-based application 1806. The computing device 1804 may be a mobile computing device (e.g., a smartphone, a tablet computer, a smartwatch, a laptop computer, etc.) or a traditional computing device (e.g., a desktop computer, a terminal computer, etc.).

The humidifier 100 and the cloud-based application 1806 can communicate 1808 with each other via one or more networks (e.g., the Internet). Likewise, the computing device 1804 and the cloud-based application 1806 can communicate 1810 with each other via one or more networks (e.g., the Internet). The computing device 1804 can communicate with the humidifier 100 via cloud-based application 1806. In an optional embodiment, the computing device 1804 and the humidifier 100 may communicate with each other directly 1812 using one or more communications protocols (e.g., Wi-Fi®, Wi-Fi® Direct, Bluetooth®, ZigBee®, Ethernet, RS232, etc.).

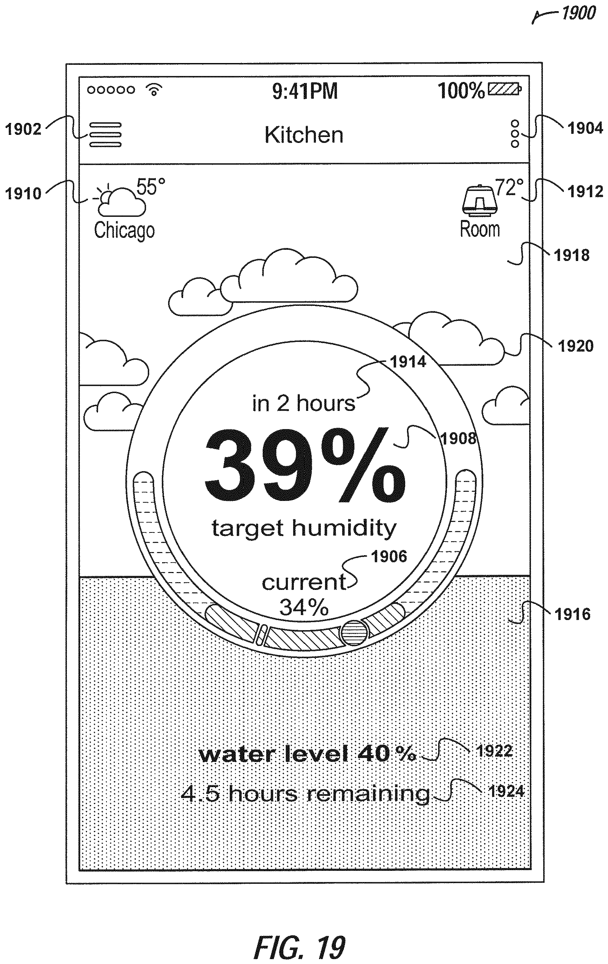

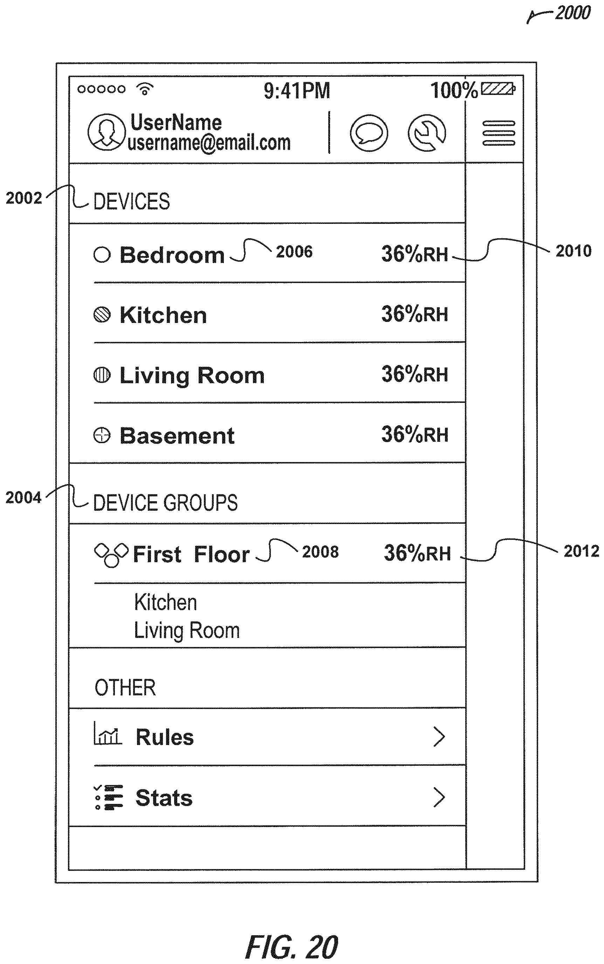

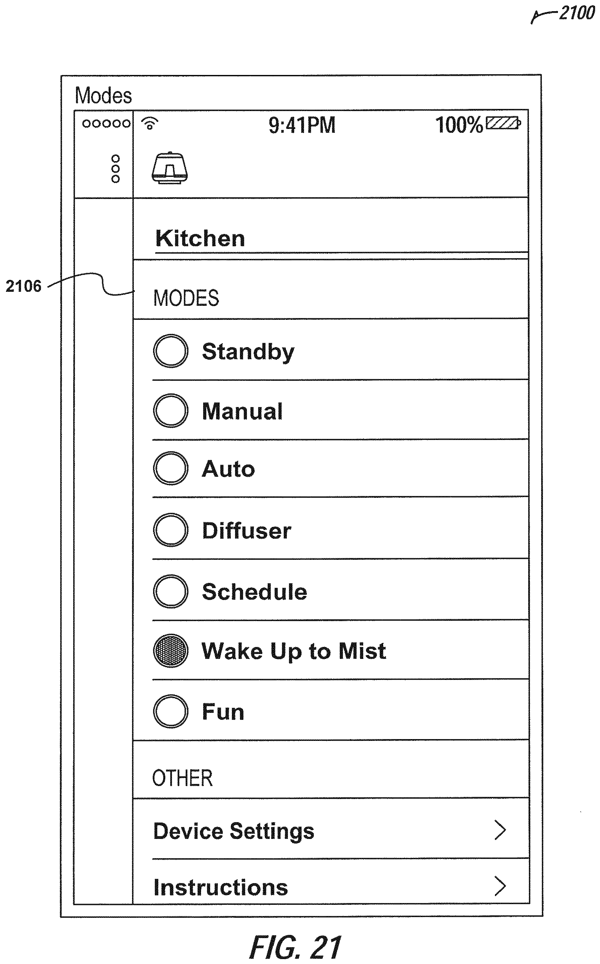

FIG. 19 illustrates a main screen 1900 of a humidifier app, according to an example embodiment. The main screen 1900 of the humidifier app can include a main menu icon 1902 (e.g., the "hamburger" icon), which upon selection, can cause the main menu screen to be displayed (see FIG. 20). The main screen 1900 of the humidifier app can also include a modes menu 1904 (e.g., the three vertical dots icon), which upon selection, can cause the modes menu screen to be displayed (see FIG. 21). In an embodiment, the first screen visible upon opening the app can be the last screen that was open when the humidifier app last executed.

In an embodiment, the humidifier can use its humidity sensor (e.g., hygrometer) to measure the humidity within the humidifier. The humidifier may then store the measured humidity and/or transmit the measured humidity to the cloud-based application. The cloud-based application can store this humidity as a cache for the humidifier.

In an embodiment, the humidifier app can obtain the current humidity within the humidifier. The humidifier app can obtain the current humidity within the humidifier by requesting the humidifier's current humidity from the cloud-based application. In some such embodiments, the cloud-based application may request the humidifier's current humidity from the humidifier itself; in other such embodiments, the cloud-based application may retrieve a recent humidity of the humidifier that the cloud-based application has recently obtained and stored as a cache. In either set of embodiments, the cloud-based application may return the current/recent humidity of the humidifier to the app.

App Displays Level(s) of Humidity

In an embodiment, the main screen 1900 of the humidifier app can display one or more of the current humidity 1906 (e.g., as measured by a humidity sensor of the humidifier), the current location-based humidity 1910 (e.g., as received from an Internet service), the current temperature 1912 (e.g., as measured by a temperature sensor of the humidifier), the current location-based temperature 1910 (e.g., as received from an Internet service), the target humidity 1908, and the time to target humidity ("TTH") 1914. For example, as illustrated in the embodiment of FIG. 19, the main screen 1900 of the humidifier app displays that the current humidity 1906 is 34%, the target humidity 1908 is 39%, the current location-based temperature 1910 is 55°, the current temperature 1912 (as measured by a temperature sensor of the humidifier) is 72°, and the TTH 1914 is 2 hours. The current location may be determined by the humidifier and/or the device operating the humidifier app (e.g., a smartphone, a tablet, etc.) and/or the cloud-based application. The current location may be determined using one or more mechanisms (e.g., by using Internet Protocol based methods of determining location, by using a GPS device that is part of the humidifier or the device operating the humidifier app, etc.).

In an embodiment, the main screen 1900 of the humidifier app can display a waterscape that may be divided into two portions: a lower portion 1916 and an upper portion 1918. The lower portion 1916 may represent water, whereas the upper portion 1918 may represent sky. In some embodiments, the main screen 1900 of the humidifier app may change its appearance in response to the humidifier's current humidity 1906. In an example embodiment, as the humidifier's current humidity 1906 increases, the upper portion 1918 displays more fog and/or clouds 1920; that is, the fogginess and/or cloudiness 1920 displayed in the upper portion 1918 of the main screen 1900 is directly proportional to the level of the humidifier's current humidity 1906.

App Displays Level of Water

In an embodiment, the main screen 1900 of the humidifier app can display one or more of the current level of water 1922 in the humidifier tank and the length of time remaining until all of the water in the tank has been atomized and expelled from the humidifier ("time to empty" or "TTE") 1924. For example, as illustrated in the embodiment of FIG.

19, the current water level in the tank 1922 is 40% and the TTE 1924 is 4.5 hours.

In an embodiment, the main screen 1900 of the humidifier app can change its appearance in response to the current level of water 1922 in the humidifier tank. For example, the main screen's 1900 lower portion 1916 may represent the water in the humidifier tank and may decrease in size as the level of water 1922 in the humidifier tank decreases; that is, the size of the lower portion 1916 of the main screen 1900 is directly proportional to the current level of water 1922 in the humidifier tank.

In an embodiment, the main screen 1900 of the humidifier app can change its appearance to represent the freshness of the water in the tank. For example, the color of the water (e.g., the lower portion 1916 of the main screen 1900) may change as the water in the humidifier tank becomes stale. In an embodiment, the water may gradually change in color from a color that indicates freshness (e.g., sky blue) to a color that indicates staleness (e.g., gray, purple, or black). The color of the water on the main screen may be tied to the water freshness index $I_n$ that is calculated by the algorithm illustrated in FIG. 16 and described in the corresponding paragraphs. The colors used on the main screen to illustrate fresh water, stale water, and various levels in between may be configurable (e.g., by the end-user via the humidifier app, by the manufacturer via a configuration file transmitted from the cloud-based application to the humidifier app, etc.).

In an embodiment, the main screen 1900 of the humidifier app can be animated such that the water portion (e.g., the lower portion 1916) of the main screen 1900 may behave as a liquid when a mobile device executing the humidifier app is in motion. For example, if the humidifier app is executing on a smartphone, the water portion 1916 of the main screen 1900 moves as a liquid that is in a container bounded by the borders of main screen 1900. The humidifier app can use one or more sensors (e.g., accelerometer, gyroscope, compass, etc.) of the mobile device to determine the mobile device's acceleration and orientation. The humidifier app can use the acceleration and orientation of the mobile device to calculate the water effects to illustrate on the main screen 1900.

FIG. 20 illustrates a main menu screen 2000 of a humidifier app, according to an example embodiment. In an embodiment, upon selecting the hamburger icon 1902 of the main screen 2000, the main menu screen 2000 slides in from the left side of the screen. In an embodiment, the main menu screen 2000 of the humidifier app displays a list of the devices 2002 and the device groups 2004 associated with the user's account. In an embodiment, the main menu screen 2000 of the humidifier app displays, for each device and device group, the device's name 2006 and the device group's name 2008, respectively. A device name 2006 may be specified by the user and may be the name of a room (e.g., "den," "Suzie's bedroom," "kitchen," etc.). If a room is large enough to warrant more than one humidifier, the device name 2006 may be a particular part of the room (e.g., "entertainment room west," "loft (front)," etc.). In an embodiment, a device name 2006 may be arbitrary and/or fanciful (e.g., "Rocky," "Towanda!," etc.)

In an embodiment, the main menu screen 2000 of the humidifier app displays the status 2010 of each device 2002. The status 2010 can include one or more of on/off, room humidity, room temperature, etc. A user may be able to select a device 2002 in the main menu screen 2000; doing so may open a screen to control that particular device 2002. A user may also be able to delete a device 2002 in the main menu screen 2000.

In an embodiment, the humidifier app can allow a user to control multiple humidifiers at the same time. A user may be able to add two or more humidifiers to a "device group" (or simply "group") within the humidifier app. The humidifier app may allow the user to create a group by selecting a first icon representing a first humidifier and "dragging and dropping" the first icon onto a second icon representing either a second humidifier or an already established group. If the second icon represents a second humidifier, the humidifier app may then present a dialog box (or another input control) to request information for the new group (e.g., group name) from the user. Upon receiving this information, the humidifier app may create the new group with the first humidifier and the second humidifier as members of the new group. The humidifier app may also allow a user to combine a first group with a second group by selecting a first icon representing the first group and "dragging and dropping" the first icon onto a second icon representing the second group. In an embodiment, this action may cause the humidifier app to incorporate the first group as a member of the second group. In another embodiment, this action may cause the humidifier app to prompt the user to create a new, third group with the first and second groups as its members.

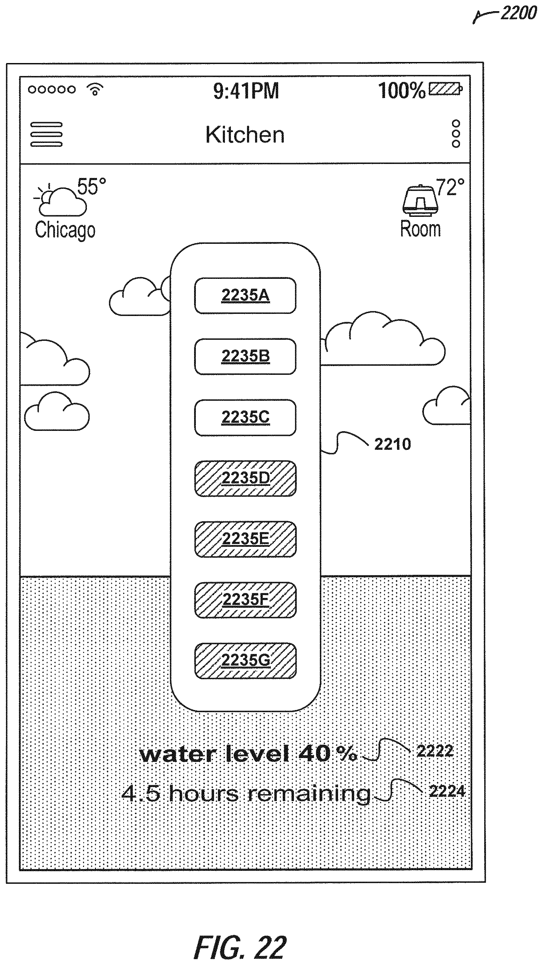

After adding humidifiers to a group, the humidifier app may allow a user to control certain features of the humidifiers in the group as if the group was one humidifier. For example, the humidifier app may allow a user to turn on and turn off all humidifiers in the group. As another example, the humidifier app may allow a user to set all the humidifiers in a group to a particular output level in manual mode (see FIG. 22). As another example, the humidifier app may allow a user to set all of the humidifiers in a group to one or more of auto mode, manual mode, comfort mode, oscillation mode, schedule mode, or timer mode.

As with devices 2002, in an embodiment, the main menu screen 2000 of the humidifier app may display the device groups 2004 associated with the user's account. In an embodiment, the main menu screen 2000 of the humidifier app may display the name 2008 of each device group 2004. A group name 2008 may be specified by the user and may be the name of a floor (e.g., "main floor," "second floor," "basement," etc.). In an embodiment, a group name 2008 may be arbitrary and/or fanciful (e.g., "Gryffindor," "Oz," etc.).

In an embodiment, the main menu screen 2000 of the humidifier app may display a status 2012 of each device group 2004. The status 2012 can include one or more of on/off, room (area) humidity, room (area) temperature, etc. A user may be able to select a device group 2004 in the main menu screen 2000; doing so may open a screen to control that particular device group 2004. A user may also be able to delete a device group 2004 in the main menu screen 2000. However, deleting a device group 2004 does not necessarily delete the devices 2002 in the device group 2004.

FIG. 21 illustrates a mode menu screen 2100 of a humidifier app, according to an example embodiment. In an embodiment, a humidifier has several modes of operation. For example, a humidifier may have one or more of a manual mode, an automatic ("auto") mode, a comfort mode, a diffuser mode, an oscillation mode, a scheduler mode, a timed mode, and a "fun" mode. The app may allow a user to switch a humidifier from one mode to another by selecting a mode name 2106 within the mode menu screen 2100. After the user has selected a mode name 2106, the humidifier app may display a screen specific to that mode.

Standby Mode

In an embodiment, standby mode is a low-power mode in which the humidifier does not atomize mist or diffuse oil. While in standby mode, the humidifier may be able to communicate with the cloud-based application, and may be able to receive inputs via the hardware user interface controls (e.g., the user interface panel on the humidifier).

Manual Mode

FIG. 22 illustrates a manual mode screen 2200 of the humidifier app, according to an example embodiment. In an embodiment, the humidifier can execute in manual mode without connecting the humidifier to the cloud-based application. Manual mode may be controlled by the user interface on the humidifier itself, or it may be controlled using the humidifier app.

When manual mode is selected in the humidifier app, the manual mode screen 2200 may display a touch panel control 2210 that may resemble the touch panel interface 1130 on the humidifier body. The touch panel control 2210 may include a plurality of buttons 2235A-2235G that resemble in appearance and/or functionality the plurality of light sections 1235a-1235g of the touch panel interface 1130 on the humidifier body. The user may be able to choose the intensity of the mist coming out of the humidifier by sliding the user's finger up or down the touch panel control 2210 to toggle on or off one or more buttons 2235A-2235G, similar to toggling on or off the plurality of light sections 1235a-1235g of the touch panel interface 1130 on the humidifier body. The appearance of a button 2235A-2235G may differ depending upon whether it is toggled on or toggled off. For example, in the example embodiment illustrated in FIG. 22, buttons 2235A- 2235C are in the "off" state, whereas buttons 2235D-2235G are in the "on" state. The app may receive the reading on the touch panel control 2210 and may transmit the reading to the humidifier. Similar to controlling the mist intensity via the humidifier interface described elsewhere herein, the humidifier controller may convert the received reading from the app into an atomizer intensity (e.g., intensity of the transducer), then may set the humidifier fan to complement this atomizer intensity.

The manual mode screen may display one or more of the mist intensity level, the current water level of the tank 2222, and the TTE statistic 2224. When the humidifier is in manual mode, the TTE statistic may be calculated by the following equation:

$$\frac{Amount\ of\ water\ in\ tank}{(current\ transducer\ efficiency)\ \dfrac{current\ level\ of\ mist}{6}}$$

In an embodiment, if the humidifier is connected to the cloud-based application, the cloud-based application may calculate the TTE statistic, for example by taking into account the atomizer intensity, the current atomizer efficiency, and the water level in the tank. The humidifier may operate in the same state until either the user has changed the intensity or the tank runs out of water.

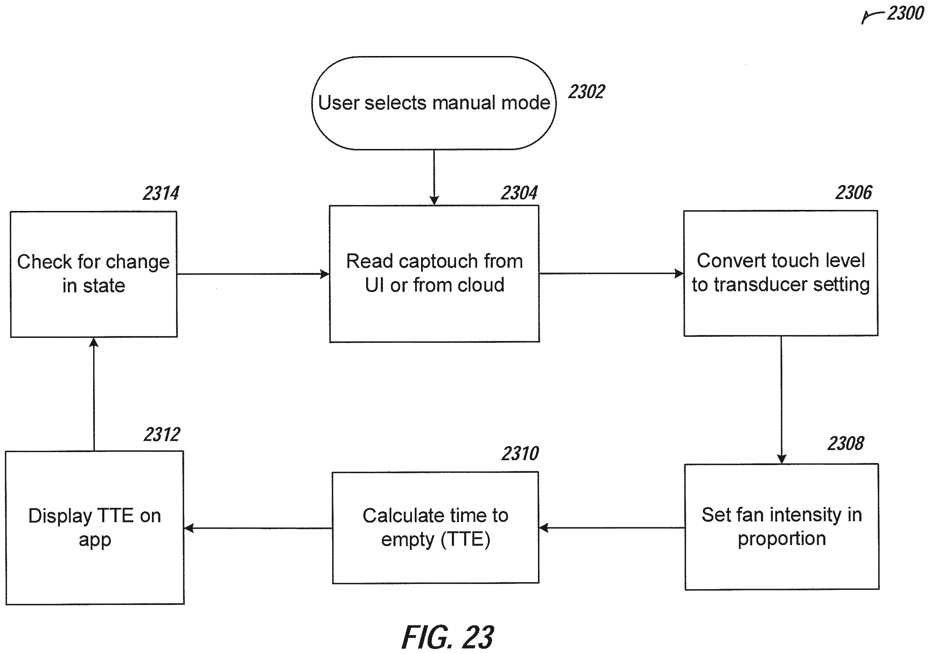

FIG. 23 is a flowchart illustrating the operation of the humidifier in manual mode, according to an example embodiment. The manual mode may run in a continuous loop, as illustrated in FIG. 23.

The humidifier may receive input selecting manual mode (operation 2302). In an embodiment, the user may select manual mode, for example by touching an intensity control on the LED touch panel on the humidifier body or by selecting manual mode in the humidifier app.

The humidifier may receive input that selects the intensity level for the manual mode (operation 2304). The humidifier controller may determine the selected intensity level either by determining which touch control on the LED touch panel was selected or by receiving an intensity level from the humidifier app corresponding to which button 2235A-2235G was selected.

The humidifier controller may converts the intensity (or touch) level to an atomizer setting (e.g., setting of the transducer) (operation 2306). The humidifier controller may set the intensity of the fan proportionate to the atomizer setting (operation 2308).

The TTE statistic may be calculated (operation 2310) by at least one of the cloud-based application, the humidifier, and the humidifier app. If calculated by the cloud-based application, the TTE statistic may be transmitted from the cloud-based application to the humidifier app on the user's mobile device (operation 2312).

Finally, the humidifier and/or the humidifier app may check for a change in state (operation 2314).

Auto Mode

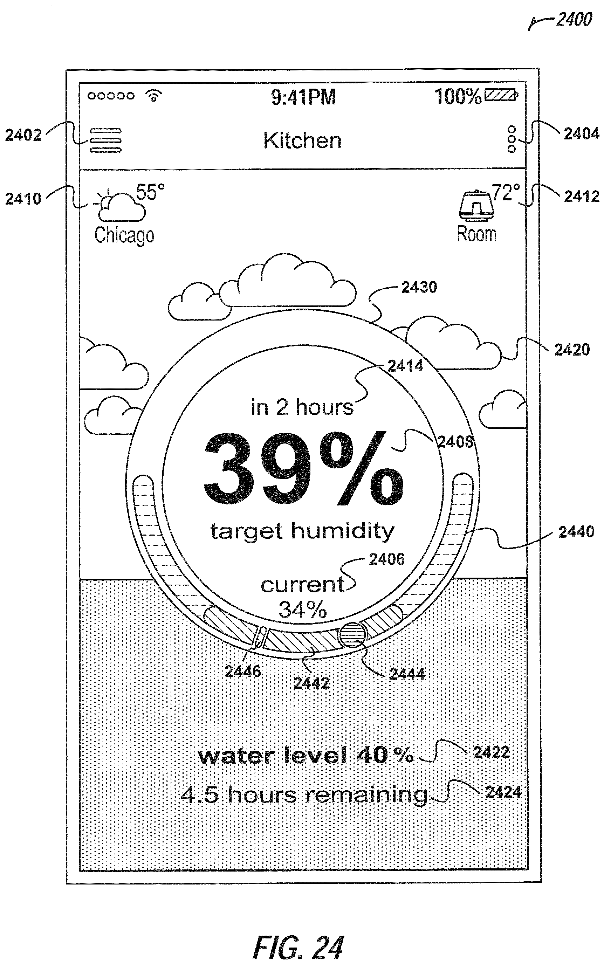

FIG. 24 illustrates the auto mode screen 2400 of the humidifier app, according to an example embodiment. The auto mode, as its name indicates, may select all of the options for the user. The only input the auto mode might require from the user is the target humidity that the user wants the humidifier to achieve. In an embodiment, the auto mode screen 2400 may display the current water level 2422, the current humidity of the environment surrounding the humidifier 2406, the target humidity 2408, the amount of time necessary to achieve the target humidity 2414, the amount of time until the tank is empty (TTE) 2424, etc.

In an embodiment, a circular humidity control 2430 may be displayed at the center of the auto mode screen. A slider control 2440 on the bottom half of the circular humidity control 2430 may enable the user to set the target humidity 2408. The range of achievable humidity for the surrounding environment of the humidifier may be represented by an arc 2442 and may be symmetrically placed on the bottom half of the circular humidity control. The length of the arc 2442 may change in direct proportion to changes in the range of the achievable humidity (e.g., when the range of achievable humidity increases, the length of the arc 2442 increases). A selector (e.g., circle 2444), representing the target humidity, may be displayed on the arc 2442. The target humidity can be set by moving the selector 2444 along the arc 2442. When selected, the selector 2444 may change appearance (e.g., changing color, increasing in diameter, etc.). A line 2446 on the arc 2442 may indicate the current humidity within the range of achievable humidity represented by the arc 2442. The line may move closer to the selector 2444 as the current humidity increases. When the current humidity has reached the target humidity, the line may merge with the selector 2444. In an embodiment, the arc 2442 is colored green and the selector 2444 is a blue circle.

In an embodiment, the range of achievable humidity may be determined by first calculating the dew point of the area surrounding the humidifier. The dew point (e.g., "dew point temperature" or "dewpoint") is the temperature at which dew forms and is a measure of atmospheric moisture. It is the temperature, to which air must be cooled at constant pressure and water content to reach saturation. A higher dew point indicates more moisture in the air; a dew point greater than 20 °C (68 °F) is considered uncomfortable and a dew point greater than 22 °C (72 °F) is considered to be extremely humid. Chart C1 correlates dew point and its relation to human comfort.

| Dew point | | Human perception[6] | Relative humidity at 32 °C (90 °F) |
|---|---|---|---|
| in °C | in °F | | |
| > 26 °C | > 80 °F | Severely high, even deadly for asthma related illnesses | 73% and higher |
| 24-26 °C | 75-80 °F | Extremely uncomfortable, fairly oppressive | 62-72% |
| 21-24 °C | 70-74 °F | Very humid, quite uncomfortable | 52-61% |
| 18-21 °C | 65-69 °F | Somewhat uncomfortable for most people at upper edge | 44-51% |
| 16-18 °C | 60-64 °F | OK for most, but all perceive the humidity at upper edge | 37-43% |
| 13-16 °C | 55-59 °F | Comfortable | 31-36% |
| 10-12 °C | 50-54 °F | Very comfortable | 26-30% |
| < 10 °C | < 50 °F | A bit dry for some | 25% and lower |

Chart C1

An approximation that may be used to calculate the dew point, $T_{dp}$, given just the actual ("dry bulb") air temperature, $T$ (in degrees Celsius) and relative humidity $RH$ (in percent), is the *Magnus formula*:

$$\gamma(T, RH) = \ln\left(\frac{RH}{100}\right) + \frac{bT}{c+T};$$

$$T_{dp} = \frac{c\gamma(T, RH)}{b - \gamma(T, RH)}$$

In an embodiment, the constants *b* and *c* may equal 17.67 and 243.5 °C, respectively. A simple approximation that allows conversion between the dew point $T_{dp}$, temperature *T*, and relative humidity *RH* is the following equation:

$$RH \approx 100 - 5(T - T_{dp})$$

This approach is accurate to within about ±1 °C as long as the relative humidity (RH) is above 50%. In an embodiment, a RH range may be calculated for dew points from 10 °C to 18 °C (the "comfort" range) using either (or both) methods of calculating/approximating the dew point, thus creating the following table T1, which may be stored in one or more of the humidifier, the humidifier app, or the cloud-based application.

Table T1

| Current Temp °C | Min RH% | Max RH% | formula | |
|---|---|---|---|---|
| | DP 10°C | DP 18°C | DP 10°C | DP 18°C |
| <10 | 100 | 100 | 100 | 100 |
| 10 | 100 | 100 | 100 | 100 |
| 11 | 94 | 100 | 95 | 100 |
| 12 | 88 | 100 | 90 | 100 |
| 13 | 82 | 100 | 85 | 100 |
| 14 | 77 | 100 | 80 | 100 |
| 15 | 72 | 100 | 75 | 100 |
| 16 | 68 | 100 | 70 | 100 |
| 17 | 64 | 100 | 65 | 100 |
| 18 | 60 | 100 | 60 | 100 |
| 19 | 56 | 94 | 55 | 95 |
| 20 | 53 | 88 | 50 | 90 |
| 21 | 50 | 83 | 45 | 85 |
| 22 | 47 | 78 | 40 | 80 |
| 23 | 44 | 74 | 35 | 75 |
| 24 | 41 | 69 | 30 | 70 |
| 25 | 39 | 65 | 25 | 65 |
| 26 | 37 | 61 | 20 | 60 |
| 27 | 34 | 58 | 15 | 55 |
| 28 | 32 | 55 | 10 | 50 |
| 29 | 31 | 51 | 5 | 45 |
| 30 | 29 | 49 | 0 | 40 |
| 31 | 27 | 46 | 0 | 35 |
| 32 | 26 | 43 | 0 | 30 |

(continued)

| Current Temp °C | Min RH% | Max RH% | formula | |
| --- | --- | --- | --- | --- |
| | DP 10°C | DP 18°C | DP 10°C | DP 18°C |
| 33 | 24 | 41 | 0 | 25 |
| 34 | 23 | 39 | 0 | 20 |
| 35 | 22 | 36 | 0 | 15 |
| 36 | 20 | 34 | 0 | 10 |
| 37 | 19 | 33 | 0 | 5 |
| 38 | 18 | 31 | 0 | 0 |
| 39 | 17 | 29 | 0 | 0 |
| 40 | 16 | 28 | 0 | 0 |

After the dew point has been calculated, the "mixing ratio" may be calculated. "Mixing ratio" is the ratio of a) the mass of water vapor in an air parcel to b) the mass of dry air for the same air parcel. Mixing ratio may be calculated using the formula:

$$X = B \cdot \frac{Pw}{Ptot - Pw} \text{ (which is in } \frac{g}{kg} \text{ units)}$$

where $B = 621.9907 \frac{g}{kg}$, where Ptot = Total ambient pressure ≈ 998 hPa (on average),

where $$Pw = water\ vapor\ pressure = Pws \times \frac{RH}{100},$$ where

$$P_{ws} = water\ vapor\ saturation\ pressure = A \times 10^{\frac{m \times T}{T + T_n}},$$ and where T = the current temperature and where A, m, and $T_n$ are constants determined by the following chart:

| Temperature range | Max error | A | m | $T_n$ |
| --- | --- | --- | --- | --- |
| -20 to +50 °C | 0.083% | 6.116441 | 7.591386 | 240.7263 |
| +50 to +100 °C | 0.017% | 6.004918 | 7.337936 | 229.3975 |

After the mixing ratio has been calculated, the following calculations may be performed. These calculations may use the volume of water available for atomization (which can be determined by the water level sensor), the current RH and temperature near the humidifier (which can be determined using the humidifier's hygrometer and thermometer, respectively), the volume of the room in which the humidifier is located (which can be determined using input from the user regarding the room's size), and may assume that the comfortable dew point range is 10 °C to 18 °C, and thus limit the range of achievable humidity correspond to a dew point in this comfortable dew point range.

1. The minimum recommended target RH ($Min_{RH}$) setting may be determined by indexing into Table T1 using the current temperature and the minimum comfort zone dew point. $Min_{RH}$ may serve as a lower bound for the range of achievable humidity arc 2442 of circular humidity control 2430.

2. The current mixing ratio may be calculated using the current RH and temperature in the room.

3. The weight of air in the room may be calculated using the volume of the room and the density of air.

4. Using the current water volume in the humidifier tank and the density of water, the weight of mist that will be added to the room (after the entire volume of water in the humidifier has been atomized) may be calculated.

5. The mixing ratio contribution from the humidifier may be calculated by calculating the ratio of (a) the weight of the water vapor that will (potentially) be contributed by the humidifier (from calculation 4) and (b) the total weight of dry air in the room (from calculation 3).

6. The achievable mixing ratio may be calculated by adding the mixing ratio contribution from the humidifier (from calculation 5) to the current mixing ratio (from calculation 2).

7. The maximum achievable humidity ($Max_{RH}$) may be calculated from the achievable mixing ratio. In an embodiment, if $Max_{RH}$ is higher than the Max RH% for the current temperature in Table T1, the upper bound for the range of achievable humidity arc 2442 of circular humidity control 2430 may be set to the Max RH% for the current temperature in Table T1. In an embodiment, if $Max_{RH}$ is lower than the Max RH% for the current temperature in Table T1, then the upper bound for the range of achievable humidity arc 2442 of circular humidity control 2430 may be set to $Max_{RH}$. The user may then be able to select the target RH between $Min_{RH}$ and $Max_{RH}$, inclusively.

The temperature and/or dew point for the room may change as the humidifier increases the relative humidity of the room; as the temperature and/or dew point change, the maximum achievable humidity may also change. To compensate for the changes, the calculations for maximum achievable humidity may have to be repeated. Furthermore, one or more of the steps for calculating the range of achievable humidity may be performed by one or more of the humidifier, the humidifier app, and the cloud-based application.

In an embodiment, the current humidity 2406 and target humidity 2408 are displayed by the circular humidity control 2430. The TTH 2444 may also be displayed inside the circular humidity control 2430. The level of water remaining 2422 in the tank and/or the TTE 2424 may also be displayed at the bottom of the auto mode screen 2400. The local temperature 2410 of the humidifier's geographical area and the room temperature 2412 of the room in which the humidifier is located may be displayed by the auto mode screen 2400.

In an embodiment, the following values may be used to calculate the TTH: the current RH, the target RH, the current temperature, the target temperature, the output capacity of the humidifier's transducer, the current dew point, the target dew point, the volume of the room, and the atmospheric pressure at the humidifier's location. In an embodiment, the TTH may be calculated as follows.

Step 1. Using the current RH and temperature, calculate the dew point temperature ($T_{dp}$) by calculating $RH = 100 - 5(T - T_{dp})$.

Step 2. Calculate $RH = 100(P_w/P_{ws})$.

Step 3. Calculate $P_{ws}(T_{dp}) = P_w$.

Step 4. Calculate

$$\text{Pws} = C_1 \times exp\left(\frac{A_1 \times t}{B_1 + t}\right).$$

Step 5. Substituting Step 4 into Step 3 gives the expression

$$T_{dp} = \frac{B_1 \times \ln\left(\frac{P_w}{C_1}\right)}{A_1 - \ln\left(\frac{P_w}{C_1}\right)}$$

Step 6. Combining Step 5 with Step 2 gives the expression

$$T_{dp} = \frac{B_1\left[\ln\left(\frac{RH}{100}\right) + \frac{A_1 T}{B_1 + T}\right]}{A_1 - \ln\left(\frac{RH}{100}\right) - \frac{A_1 T}{B_1 + T}}$$

Step 7. Knowing $T_{dp}$, the temperature expected at the target RH may be solved for by calculating

$$T_{target} = \frac{B_1\left(A_1 T_{dp} - (B_1 + T_{dp})\ln\left(\frac{RH}{100}\right)\right)}{A_1 B_1 + (B_1 + T_{dp})\ln\left(\frac{RH}{100}\right)}$$

Step 8. Knowing RH and temperature, both current and target, calculate both current and the target mixing ratios (using the mixing ratio equations disclosed above for calculating the range of achievable humidity).

Step 9. The difference between the target mixing ratio and the current mixing ratio is the weight of water required (in g/kg) weight of dry air.

Step 10. Estimate the volume of the room, then calculate the weight of air in the room (density of air $\approx$ 1.29 kg/m$^3$) assuming the room is entirely filled with air.

Step 11. Calculate the weight of water vapor in the room required to achieve the target RH value.

Step 12. Using the value in Step 11, calculate the volume of water that needs to be atomized.

Step 13. Retrieve the current output rate of the humidifier's transducer.

Step 14. Calculate the TTH as follows: divide the volume of water that needs to be atomized (from Step 12) by the current output rate of the humidifier's transducer (from Step 13).

These steps may be repeated during the operation of the humidifier so as to update the accuracy of the TTH statistic. Furthermore, one or more of the steps for determining the TTH may be performed by one or more of the humidifier, the humidifier app, and the cloud-based application.

In an embodiment, the auto mode automatically calculates and sets the humidifier intensity after the target humidity 2408 is set. The current relative humidity and temperature near the humidifier may be detected by the humidifier's hygrometer and temperature sensors, respectively. The humidifier controller may use this information, along with the target humidity, to set the intensity of the atomizer and fan based on a PID algorithm. The algorithm may help to achieve the target humidity and keep the relative humidity at the target humidity by modulating the atomizer intensity, and hence, the mist output by the humidifier. The app may display a suggested range of relative humidity to choose from based on one or more of the current weather conditions and the amount of water available in the humidifier. In an embodiment, the time required to achieve the target humidity may be calculated in the cloud-based application and displayed on the app.

In an embodiment, the auto mode may have a "ramp-up" phase and a "maintenance" phase. The ramp-up phase is an initial period of time during which the humidifier progresses ("ramps up") to the target humidity 2408, whereas the maintenance phase is the period of time after the target humidity 2408 has been achieved. In an embodiment, the TTE statistic during the ramp-up phase may be calculated using the same equation as used by the manual mode to calculate the TTE statistic. In the maintenance phase, the transducer intensity is determined by the behavior of the humidifier (e.g., the frequency with which the humidifier is active in the current surrounding conditions). The TTE may be calculated by dividing the amount of water in the tank by the transducer intensity.

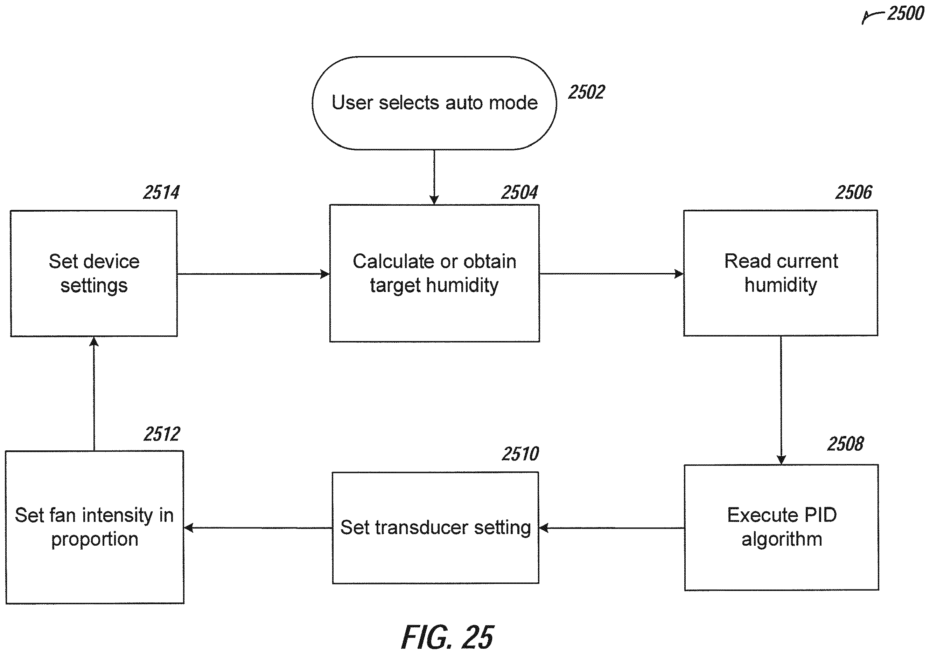

FIG. 25 is a flowchart illustrating the operation of the humidifier in auto mode, according to an example embodiment. The auto mode may run in a continuous loop, as illustrated in FIG. 25.

The humidifier may receive input selecting auto mode (operation 2502). In an embodiment, the user selects auto mode in the humidifier app.

The humidifier may receive a target humidity (operation 2504). In an embodiment, the target humidity is set within the humidifier app, which may transmit the target humidity to the cloud-based application. The cloud-based application may then transmit the target humidity to the humidifier.

The humidifier may measure (e.g., using its hygrometer) the present relative humidity (operation 2506). The humidifier controller may execute an algorithm to determine the difference between the present relative humidity and the target humidity (operation 2508). Based on the difference between the present relative humidity and the target humidity, the humidifier controller may determine an atomizer setting (e.g., a setting of the transducer) and may set the atomizer to the determined setting (operation 2510). Based on the difference between the present relative humidity and the target humidity, the humidifier controller may determine a fan intensity and may set the fan to the determined intensity (operation 2512). Finally, the humidifier controller may transmit the new humidifier settings to the cloud-based application (operation 2514).

Diffuser Mode

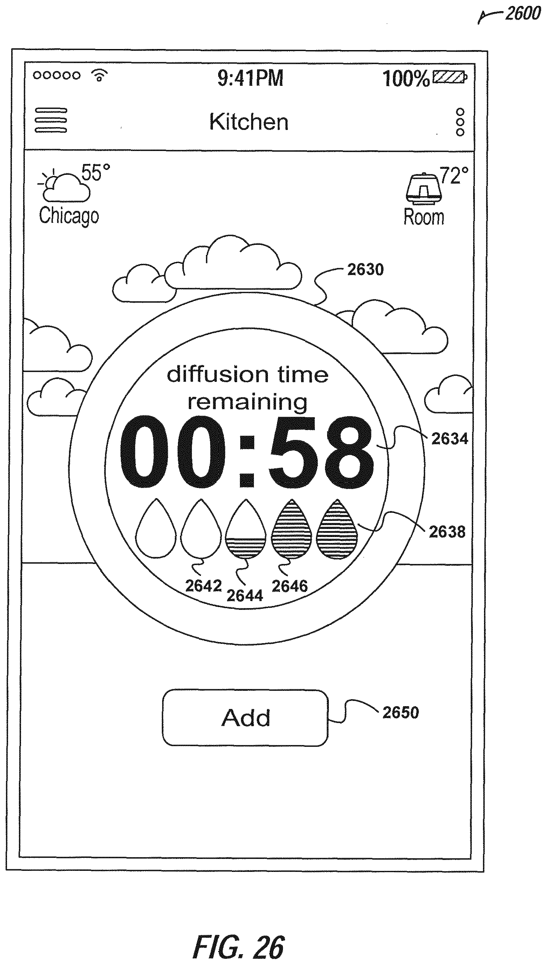

FIG. 26 illustrates a first diffuser screen 2600 of the diffuser interface of the humidifier app, according to an example embodiment. A diffuser is a device not unlike the humidifier; it nebulizes (atomizes) essential oils (concentrated liquids containing aroma compounds from plants, e.g., roses, lavender, vanilla, jasmine, etc.) along with water mist, which can provide therapeutic relief to a user. A diffuser may have certain limitations:

1. Oil mist is heavier than and lingers in the air longer than water vapor/mist. Running the diffuser for a long time might make the aroma of the essential oil stronger than desired.

2. In an embodiment, the atomizer capacity is 0.02 L/hr.

3. In an embodiment, the diffuser fan runs at 12V, 0.06A DC.

4. In an embodiment, three to four drops of oil are recommended for every 100 mL of water.

5. Oil and water emulsify inside the reservoir. If the reservoir is not cleaned periodically, a lingering aroma can develop in the reservoir.

The first screen 2600 of the diffuser interface may be displayed during operation of the humidifier in diffuser mode. The first screen 2600 of the diffuser interface may include a diffusion information control 2630, which may display the remaining diffusion time 2634. In the illustrated example of FIG. 26, the diffusion information control 2630 displays the remaining diffusion time 2634 as 58 seconds.

The diffusion information control 2630 may include an essential oils visual indicator 2638 that indicates the status of the essential oils in the reservoir. In an embodiment, the essential oils visual indicator 2638 may be in the form of droplet icons indicating the amount of oil remaining in the reservoir. For example, five droplet icons are displayed on the first screen 2600 of the diffuser interface, representing the maximum number of essential oil droplets that can be added to the humidifier reservoir. Droplet 2642 represents a fifth of the reservoir that is empty, droplet 2644 represents a fifth of the reservoir that is partially filled with an essential oil, and droplet 2646 represents a fifth of the reservoir that is completely filled with an essential oil; thus, in the illustrated example of FIG. 26, the essential oils visual indicator 2638 indicates that the humidifier reservoir has approximately 2.5 droplets of oil. In various embodiments, the different types of droplets may be distinguished visually in various ways. For example, in some embodiments, colors may be used to distinguish the droplets visually; in some embodiments, shading or cross-hatching may be used to distinguish the droplets visually. Furthermore, a droplet representing a partially filled portion of the reservoir may be distinguished visually from the other types of droplets in proportion to the amount of essential oil represented by the droplet.

The first screen 2600 of the diffuser interface may include a control, such as "Add" button 2650, which when selected, switches the humidifier app to the second screen of the diffuser mode, where the user can select an amount of essential oils to add to the reservoir.

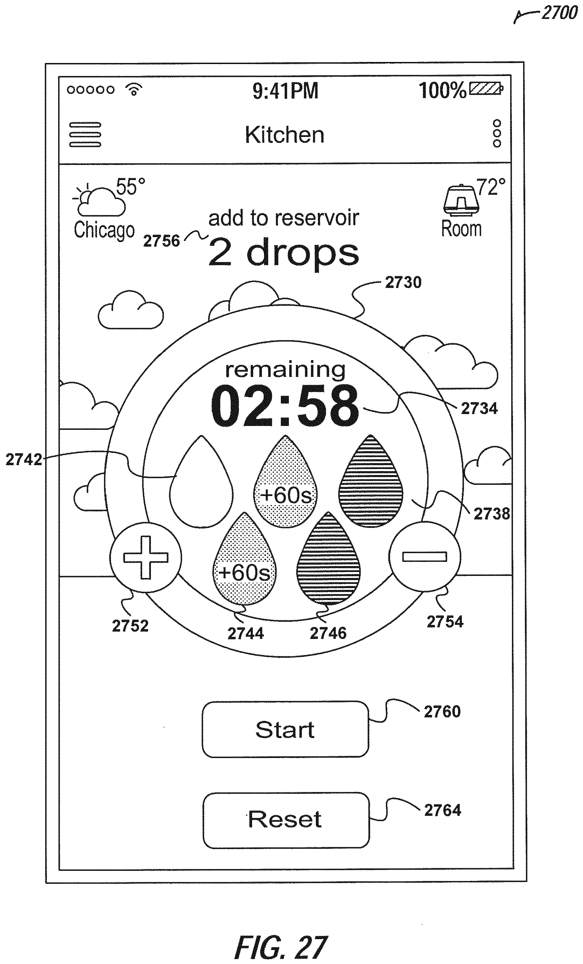

FIG. 27 illustrates a second screen 2700 of the diffuser interface of the humidifier app, according to an example embodiment. The second screen 2700 of the diffuser mode may include an essential oils control 2730, which may display the remaining diffusion time 2734. In the illustrated example of FIG. 27, the essential oils control 2730 displays the remaining diffusion time 2634 as 2 minutes and 58 seconds. In an embodiment, the humidifier stops diffusing oil while the second screen 2700 of the diffuser interface is displayed.

In an embodiment, the essential oils control 2730 may display a "+" button 2752, which may be selected by the user to increment the number of droplets the user wants to add to the reservoir, and a "-" button 2754, which may be selected by the user to decrement the number of droplets the user wants to add to the reservoir. In some embodiments, instead of or in addition to the "+" 2752 and "-" 2754 buttons, the second screen 2700 of the diffuser interface may include other controls for selecting and/or entering the number of droplets the user wants to add to the reservoir.

The essential oils control 2730 may include an essential oils visual indicator 2738 that indicates the status of the essential oils in the reservoir, similar to the essential oils visual indicator 2638 of the first screen 2600 of the diffuser interface. The essential oils visual indicator 2738 may include several different types of droplet indicators: droplets that indicate essential oil already in the reservoir 2746, droplets that indicate the user has selected to add a drop of essential oil to the reservoir 2744, and droplets that indicate neither essential oil in the reservoir nor oil to be added to the reservoir 2742. When the user selects the "+" button 2752, the number of drops of essential oil to be added to the reservoir is incremented by one, and a droplet whose visual display indicated no essential oil 2742 is changed to a visual display that indicates a drop of essential oil is to be added to the reservoir 2744. Similarly, when the user selects the "-" button 2754, the number (if greater than 0) of drops of essential oil to be added to the reservoir is decremented by one, and a droplet whose visual display indicated a drop of essential oil is to be added to the reservoir 2744 is changed to a visual display that indicates no essential oil is to be added 2742. In an embodiment, a droplet whose visual display indicates a drop of essential oil is to be added to the reservoir 2744 may include a label indicating the amount of additional diffusion time represented by that droplet (e.g., "+60s" if one droplet equals 60 seconds of diffusion time). In an embodiment, a droplet whose visual display indicates a drop of essential oil is to be added to the reservoir 2744 will be displayed in a light blue color until the user has pushed the "start" button; after the user presses the "start" button 2760, diffuser begins to diffuse and these droplets 2744 will change to a dark blue color of the droplets that indicate essential oil already in the reservoir 2746 and, as time elapses, they will appear gray, indicating that they are becoming empty.

The second screen 2700 of the diffuser mode may also include a "reset" button 2764 that can be used to clear the number of drops that have been selected to be added to the reservoir. The second screen 2700 of the diffuser mode may also display one or more of: the total number of drops of oil the user has selected to be used, the amount of time remaining until all of the oil has been consumed, and a reminder message 2756 to remind the user to add the selected number of drops of essential oils to the humidifier's reservoir prior to pushing the "start" button. If the tank has not been placed into the humidifier or has been placed into the humidifier incorrectly, the diffuser interface of the app may display a notification to the user to replace the tank before the humidifier will start to diffuse.

The level of water to be maintained in the reservoir may be determined based on the number of drops added by the user and may be read from a previously determined look-up table. The atomizer and fan intensities may be set to a low value and the number of drops of oil diffused may be tracked over time and displayed in the app. The reservoir level may be adjusted at regular time intervals according to the number of drops of oil remaining. When all the oil has been diffused, the humidifier may enter into the standby mode and the humidifier app may display a notification to the user to clean the reservoir.

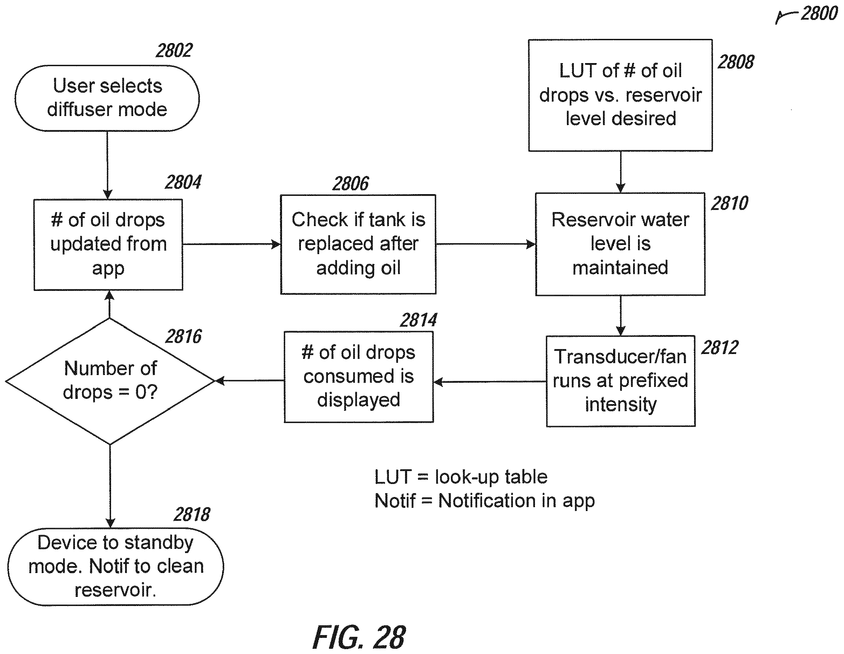

FIG. 28 is a flowchart 2800 illustrating the operation of the humidifier in diffuser mode, according to an example embodiment. The humidifier may receive input selecting diffuser mode (operation 2802). In an embodiment, the user may select the diffuser mode in the humidifier app.

The humidifier app may receive input corresponding to the number of oil drops either that are in the reservoir or that the user desires to add to the reservoir (operation 2804). The humidifier may check if the tank is placed correctly onto the humidifier (operation 2806). In an embodiment, if the tank has not been placed correctly onto the humidifier, the humidifier app may display a message instructing the user to place the tank onto the humidifier.

A level of water appropriate for the number of oil drops in the reservoir may be determined (operation 2808). In an embodiment, the appropriate water level may be determined by referencing a lookup table, which correlates number of oil drops to appropriate reservoir water levels. The humidifier may maintain the reservoir water at the determined water level (operation 2810) according to methods discussed elsewhere herein. The atomizer/transducer and the fan may be set to operate at a prefixed intensity (operation 2812).

The number of oil drops diffused may be displayed in the humidifier app (operation 2814). The humidifier controller may determine the number of oil drops remaining in the reservoir (operation 2816). In an embodiment, the humidifier controller may determine the number of oil drops remaining in the reservoir by assuming 1) that the oil drops have uniformly dispersed with the water in the reservoir, and 2) that the ratio of the quantity of oil drops consumed versus the initial quantity of oil drops is the same as the ratio the of amount of reservoir water atomized versus the initial amount of water in the reservoir. For example, if the initial amount of water in the reservoir was 100 mL and 5 oil drops were added to the reservoir, then the humidifier controller may assume that $\frac{100\ mL}{5\ oil\ drops} = \frac{20\ mL}{1\ oil\ drop}$; that is, for every 20 mL of atomized water, 1 oil drop has been diffused. If the number of oil drops remaining in the reservoir is more than zero, the humidifier may return to operation 2804. If the number of oil drops remaining in the reservoir is equal to zero, the humidifier may enter standby mode and the humidifier app may display a message notifying the user to clean the reservoir (operation 2818).

Oscillation Mode

In an embodiment, the humidifier can operate in oscillation mode. In some instances, this can be called a dynamic flow mode. When operating in oscillation mode, the humidifier's fan intensity may oscillate between a lower and a higher intensity at regular time intervals while the atomizer stays at a manually fixed intensity.

The humidifier may have a directional cap, which may be used in this mode. The amount of mist expelled by the humidifier may fluctuate between a higher and lower amount. In oscillation mode, the user may be prompted to attach the directional cap. The user can set the intensity of the ultrasonic atomizer to one of the several available levels, similar to manual mode. The fan intensity may fluctuate in oscillation mode. The fan's action allows the mist to achieve projectile motion (the distance the mist reaches when fluctuating between two different values). The user may toggle these values as well as the mist intensity to achieve the desired condition. This oscillation mode may run until there is a change of state in the humidifier, or until the water in the tank has been depleted.

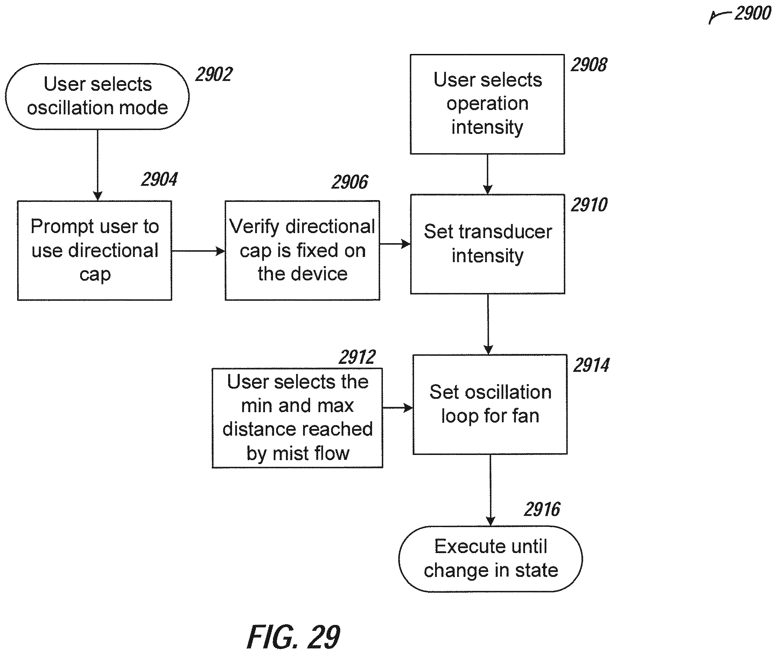

FIG. 29 is a flowchart illustrating the operation of the humidifier in oscillation mode, according to an example embodiment. The humidifier may receive input selecting oscillation mode (operation 2902). In an embodiment, the user may select oscillation mode in the humidifier app.

In an embodiment, the humidifier app may prompt the user to attach the directional cap to the humidifier (operation 2904). The humidifier may verify the directional cap has been correctly attached to the humidifier (operation 2906).

Similar to manual mode, the user may select the desired intensity level of the humidifier via the humidifier app (operation 2908). Based on the intensity level, the humidifier controller may determine a fan intensity and may set the fan to the determined intensity (operation 2910).

The user may select the minimum and maximum distance of the mist flow (operation 2912). The user may also select the minimum and maximum angles of the mist flow (operation 2910). Based on the set distances and angles, the humidifier controller may set the oscillation loop for the fan (operation 2914). Finally, the humidifier may run in oscillation mode with the set parameters until a change in state occurs (operation 2916).

Scheduler Mode

The scheduler mode may allow a user to schedule the humidifier to operate in a specified mode at a particular time for a particular period. The humidifier's schedule may be stored in the cloud-based application. The humidifier may receive schedule updates in increments of 30 minutes. If auto mode is scheduled for a particular period, the target humidity may need to be specified for that particular period. If manual mode is scheduled for a particular period, the atomizer intensity may need to be selected for that particular period. At the scheduled time, the humidifier may begin operating accordingly. The schedule may be checked in half hour intervals, and the stored data in the humidifier memory may be updated periodically.

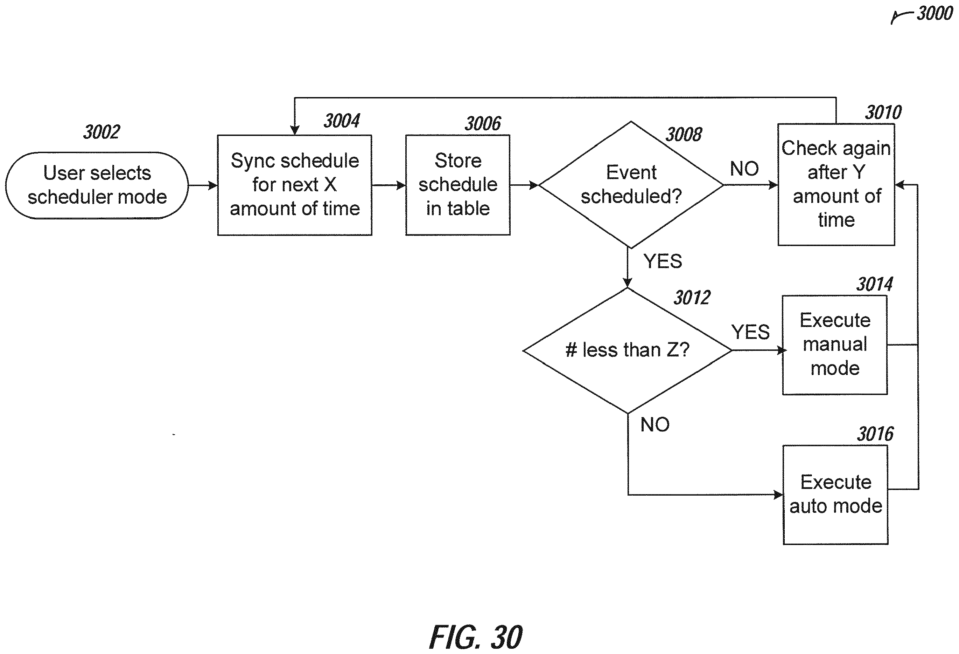

FIG. 30 is a flowchart illustrating the operation of the humidifier in scheduler mode, according to an example embodiment. The humidifier may receive input selecting scheduler mode (operation 3002). In an embodiment, the user may select scheduler mode in the humidifier app.

The humidifier controller may synchronize the next 30 minutes of its schedule with the next 30 minutes of the schedule stored in the cloud-based application (operation 3004). The humidifier controller may store in memory the synchronized schedule for the next 30 minutes (operation 3006).

The humidifier controller may check if an event is scheduled for the current time (operation 3008). If no event is scheduled for the current time, the humidifier controller may set a 15-minute timer (operation 3010). After the 15-minute timer expires, the humidifier controller may return to synchronize its schedule with the schedule in the cloud-based application (operation 3004).

If an event is scheduled for the current time, the humidifier controller may check if the number is less than 10 (operation 3012). If the number is less than 10, the humidifier controller may cause the humidifier to operate in manual mode for the next 30 minutes (operation 3014). If the number is not less than 10, the humidifier controller may cause the humidifier to operate in auto mode for the next 30 minutes (operation 3016). After causing the humidifier to operate in the appropriate mode, the humidifier controller may set a 15-minute timer (operation 3010). After the 15-minute timer expires, the humidifier controller may return to synchronize its schedule with the schedule in the cloud-based application (operation 3004).

Timer Mode

In an embodiment, the humidifier can operate in a timer mode in which the humidifier is set to operate for a specific amount of time at a particular intensity, then enter standby mode after the timer has elapsed. This is similar in principle to an oven timer.

Comfort Mode

In an embodiment, the humidifier may log data about the humidifier's operation and may transmit the logged data to the cloud-based application. The data may include the setting configuration(s) selected for a humidifier, the user(s) who selected the setting configuration(s), the amount of time the humidifier operated in a particular setting configuration, etc. The cloud-based application may analyze the logged data to determine a "preferred" setting configuration for a humidifier (or for a user of a humidifier) and transmit this "preferred" setting configuration to the humidifier. If the humidifier is set to comfort mode, the humidifier may operate using the "preferred" setting configuration. The "preferred" setting configuration may change as the humidifier is used. In an embodiment, the "preferred" setting configuration is determined by the humidifier app rather than the cloud-based application.

In an embodiment, some of the humidifier's settings can be controlled through the humidifier app. The brightness of the LED lights on the touch panel may be controlled via the humidifier app, as can the duration that the LEDs will remain lit without interaction from the user before the touch panel enters a sleep mode.

"Fun" Mode

In an embodiment, the humidifier app may have a "fun" mode, in which the humidifier and/or the app may perform tricks or other operations that may not be directly related to a therapeutic effect. For example, a fun mode screen in the humidifier app may display a button that a user can pull down and release (e.g., with an elastic band effect); when the button is released, the humidifier app may cause the humidifier to release a puff of mist. When the button is pulled down, the humidifier app may start a countdown timer (e.g., 5 seconds); at the end of the countdown, the humidifier app may release the button and may cause the humidifier to release a puff of mist. If the user releases the button is before the countdown timer expires, the humidifier app may cause the humidifier to release a puff of mist upon the release of the button by the user.

The fun mode screen in the humidifier app may change in various ways during the operation button pulldown and button release operations. For example, as the button is pulled down, the humidifier app may change the display to add foam and/or cloud graphics to the sky in the top portion of the screen. As another example, when the button is released, the humidifier app may change the display to release a wave of water and/or foam in one or more of the top portion and the bottom portion of the screen.

Humidifier Lockout

In an embodiment, a user can lockout the controls on the humidifier body via the humidifier app (or the web interface to the cloud-based application). When the humidifier's controls are locked-out, the touch panel on the humidifier body does not control the humidifier. The user can unlock the controls on the humidifier body via the humidifier app (or the web interface to the cloud-based application).

Water Consumption Meter

In an embodiment, the humidifier may keep a running estimate of the amount of water that has been atomized by the humidifier since its manufacture. Whenever the humidifier detects a change in the water level in its tank, the humidifier controller may increment a counter to add the amount of water that has been consumed since the last recorded water level.

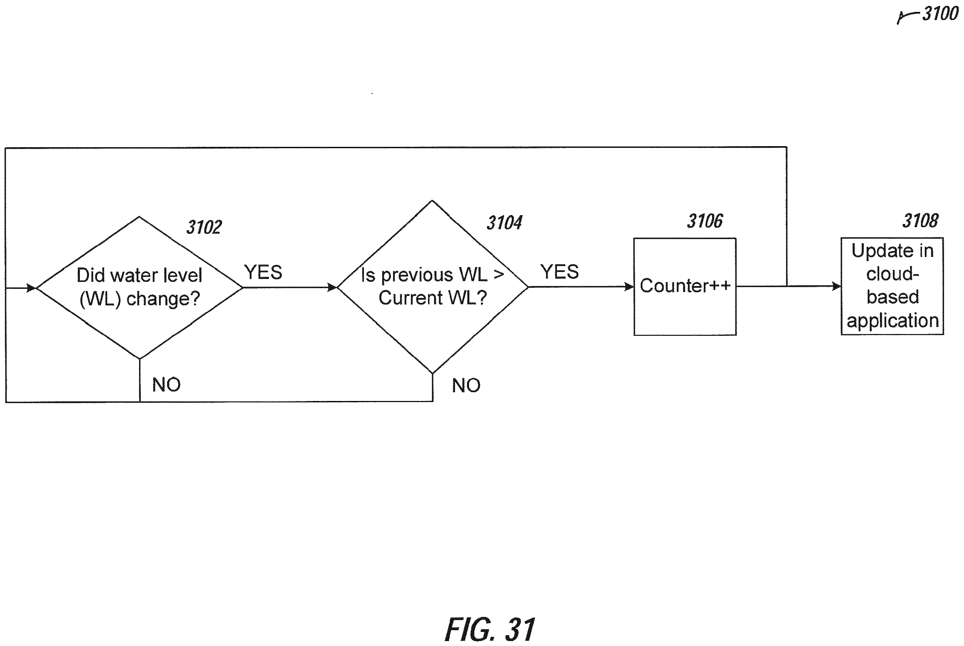

FIG. 31 is a flowchart illustrating operation of a water consumption meter of a humidifier, according to an example embodiment. In an embodiment, the water consumption meter may run in a continuous loop, as illustrated in FIG. 31.

The humidifier controller may check if there has been a change in the water level in the tank (operation 3102). If the humidifier controller does not detect a change in the water level, the water consumption meter may return to operation 3102.

If the humidifier controller does detect a change in the water level, the humidifier controller may check if the value of the previous water level is greater than the value of the current water level (operation 3104). If the value of the previous water level is not greater than the value of the current water level, the water consumption meter may return to operation 3102.

If the value of the previous water level is greater than the value of the current water level, the humidifier controller may increment a counter by an amount proportional to the difference between the value of the previous water level and the value of the current water level (operation 3106). The humidifier controller may assign the value of the current water level to be the previous water level. The humidifier controller may transmit the incremented counter to the cloud-based application (operation 3108). Finally, the humidifier controller may return to operation 3102.

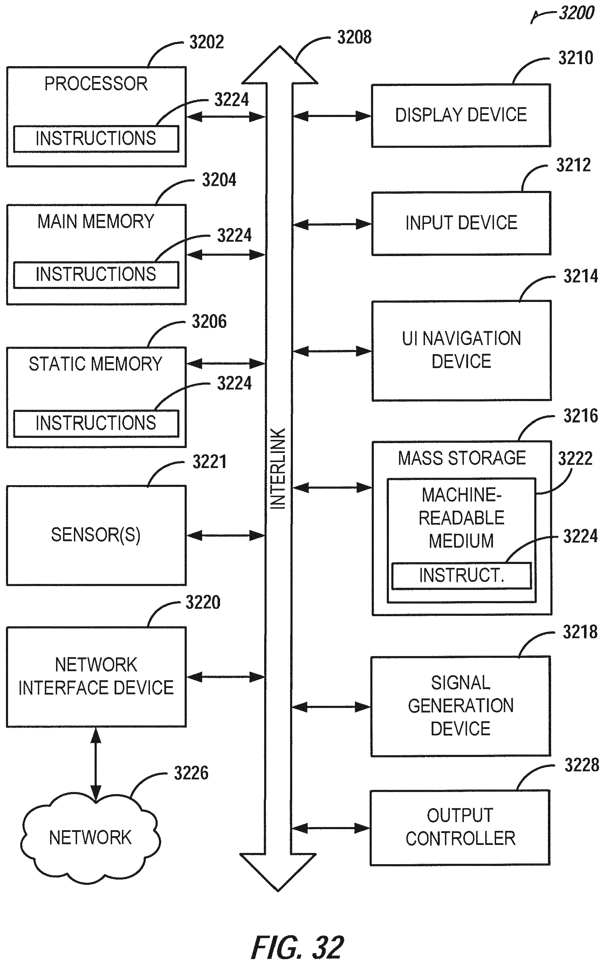

FIG. 32 is a block diagram illustrating an example of a machine 3200, upon which any one or more example embodiments may be implemented. In alternative embodiments, the machine 3200 may operate as a standalone device or may be connected (e.g., networked) to other machines. In a networked deployment, the machine 3200 may operate in the capacity of a server machine, a client machine, or both in a client-server network environment. In an example, the machine 3200 may act as a peer machine in a peer-to-peer (P2P) (or other distributed) network environment. The machine 3200 may implement or include any portion of the systems, devices, or methods illustrated in FIGS. 1-31, and may be a computer, a server, or any machine capable of executing instructions (sequential or otherwise) that specify actions to be taken by that machine. Further, although only a single machine is illustrated, the term "machine" shall also be taken to include any collection of machines that individually or jointly execute a set (or multiple sets) of instructions to perform any one or more of the methodologies discussed herein, such as cloud-based computing, software as a service (SaaS), other computer cluster configurations, etc.

Examples, as described herein, may include, or may operate by, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Machine (e.g., computer system) 3200 may include a hardware processor 3202 (e.g., a central processing unit (CPU), a graphics processing unit (GPU), a hardware processor core, or any combination thereof), a main memory 3204 and a static memory 3206, some or all of which may communicate with each other via an interlink (e.g., bus) 3208. The machine 3200 may further include a display unit 3210, an alphanumeric input device 3212 (e.g., a keyboard), and a user interface (UI) navigation device 3214 (e.g., a mouse). In an example, the display unit 3210, input device 3212 and UI navigation device 3214 may be a touch screen display. The machine 3200 may additionally include a storage device (e.g., drive unit) 3216, a signal generation device 3218 (e.g., a speaker), a network interface device 3220, and one or more sensors 3221, such as a global positioning system (GPS) sensor, compass, accelerometer, or other sensor. The machine 3200 may include an output controller 3228, such as a serial (e.g., USB, parallel, or other wired or wireless (e.g., infrared (IR), near field communication (NFC), etc.) connection to communicate or control one or more peripheral devices (e.g., a printer, card reader, etc.).

The storage device 3216 may include a machine-readable medium 3222 on which is stored one or more sets of data structures or instructions 3224 (e.g., software) embodying or utilized by any one or more of the techniques or functions described herein. The instructions 3224 may also reside, completely or at least partially, within the main memory 3204, within static memory 3206, or within the hardware processor 3202 during execution thereof by the machine 3200. In an example, one or any combination of the hardware processor 3202, the main memory 3204, the static memory 3206, or the storage device 3216 may constitute machine-readable media.

Although the machine-readable medium 3222 is illustrated as a single medium, the term "machine-readable medium" may include a single medium or multiple media (e.g., a centralized or distributed database, and/or associated caches and servers) configured to store the one or more instructions 3224.

The term "machine-readable medium" may include any medium that is capable of storing, encoding, or carrying instructions for execution by the machine 3200 and that cause the machine 3200 to perform any one or more of the techniques of the present disclosure, or that is capable of storing, encoding or carrying data structures used by or associated with such instructions. Non-limiting machine-readable medium examples may include solid-state memories, and optical and magnetic media. Accordingly, machine-readable media are not transitory propagating signals. Specific examples of machine-readable media may include nonvolatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); Solid State Drives (SSD); and CD-ROM and DVD-ROM disks.

The instructions 3224 may further be transmitted or received over a communications network 3226 using a transmission medium via the network interface device 3220 utilizing any one of a number of transfer protocols (e.g., frame relay, Internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMAX®), IEEE 802.15.4 family of standards, Bluetooth®, Bluetooth® low energy technology, ZigBee®, peer-to-peer (P2P) networks, among others. In an example, the network interface device 3220 may include one or more physical jacks (e.g., Ethernet, coaxial, or phone jacks) or one or more antennas to connect to the communications network 3226. In an example, the network interface device 3220 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 3200, and includes digital or analog communications signals or other intangible medium to facilitate communication of such software.

Additional Embodiments and Examples

Example 1 is a system, comprising: a cloud-based application; a humidifier comprising: a tank to hold water to be atomized by the humidifier; at least one sensor; a network adapter; and a processor operable to: receive sensor data from the at least one sensor; and transmit, to the cloud-based application via the network adapter, the received data; and at least one non-transitory computer-readable medium including stored instructions that, when executed by at least one processor of a computing device, cause the computing device to: present, via a display of the computing device, a user interface to interact with the humidifier via the cloud-based application.

In Example 2, the subject matter of Example 1 includes wherein the at least one sensor includes a humidity sensor and wherein the sensor data includes at least one of: a relative humidity of an ambient environment of the humidifier; and a current humidity within the humidifier.

In Example 3, the subject matter of Example 2 includes, wherein the at least one sensor includes a temperature sensor and wherein the sensor data includes a temperature of the ambient environment of the humidifier.

In Example 4, the subject matter of Example 3 includes, wherein the cloud-based application is to: calculate, based on the relative humidity and the temperature of the ambient environment of the humidifier, a range of achievable humidity; and transmit, to the computing device, the calculated range of achievable humidity.

In Example 5, the subject matter of Example 4 includes, wherein the user interface includes a humidity user control comprising: a range user interface element representative of the calculated range of achievable humidity; and a selection user interface element displayed relative to the range user interface element, the selection user interface element selectable by a user to select a target humidity within the calculated range of achievable humidity; wherein the computing device is to transmit, via the cloud-based application, the selected target humidity to the humidifier; and wherein the humidifier is operable to adjust settings of an atomizer element and the fan within the humidifier corresponding to the selected target humidity.

In Example 6, the subject matter of Example 5 includes, wherein the range user interface element is a bar whose length is directly proportional to the calculated range of achievable humidity.

In Example 7, the subject matter of Example 6 includes, wherein the selection user interface element is to slide along the bar; and wherein the position of the selection user interface element along the bar representative of the selected target humidity.

In Example 8, the subject matter of Examples 5-7 includes, wherein the user interface is to display an estimated amount of time until the humidifier will achieve the selected target humidity.

In Example 9, the subject matter of Examples 1-8 includes, wherein the humidifier includes a touch-sensitive control panel located on an outside portion of the humidifier, the touch-sensitive control panel operable to control an intensity of mist produced by the humidifier.

In Example 10, the subject matter of Example 9 includes, wherein the user interface presented by the computing device includes a mist intensity control similar in appearance to the touch-sensitive control panel of the humidifier; wherein the mist intensity control includes multiple selectable portions; wherein each selectable portion of the mist intensity control represents a respective intensity level; wherein the computing device is to transmit, via the cloud-based application, the selected respective intensity level to the humidifier; and wherein the humidifier is operable to adjust settings of an atomizer element and the fan within the humidifier corresponding to the selected respective intensity level.

In Example 11, the subject matter of Examples 1-10 includes, wherein the humidifier includes an agitator to agitate essential oil added to a reservoir of the humidifier.

In Example 12, the subject matter of Example 11 includes, wherein the user interface includes one or more input controls to select a number of essential oil drops that are to be added to the reservoir of the humidifier.

In Example 13, the subject matter of Example 12 includes, wherein the user interface is to display a notification indicating the selected number of essential oil drops that are to be added to the reservoir of the humidifier.

In Example 14, the subject matter of Examples 11-13 includes, wherein the user interface is to display an estimate of an amount of time remaining until all of the essential oil in the reservoir has been diffused by the agitator.

In Example 15, the subject matter of Examples 2-14 includes, wherein the user interface includes a waterscape comprising a water portion and a sky portion.

In example 16, the subject matter of Example 15 includes, wherein the sky portion includes at least one of: an amount of fog; and a quantity of clouds; and wherein the at least one of the amount of fog and the quantity of clouds is directly proportional to at least one of: the relative humidity of the ambient environment of the humidifier; and the current humidity within the humidifier.

In Example 17, the subject matter of Example 15-16 includes, wherein the processor is to calculate a freshness of the water in the tank; and wherein the appearance of the water portion of the waterscape is to represent the freshness of the water in the tank.

In Example 18, the subject matter of Examples 15-17 includes, wherein the at least one sensor includes a water level sensor to determine a current amount of water in the tank; and wherein the water portion of the waterscape has a size that is directly proportional to the amount of water in the tank.

In Example 19, the subject matter of Examples 15-18 includes, wherein the computing device is a mobile computing device; and wherein the water portion of the waterscape is animated to behave as a liquid when the mobile computing device is in motion.

In Example 20, the subject matter of Examples 18-19 includes, wherein the user interface is to display an estimate of an amount of time until the water in the tank is consumed.

In Example 21, the subject matter of Examples 18-20 includes, wherein the user interface is to display the current amount of water in the tank.

In Example 22, the subject matter of Examples 1-21 includes, wherein the user interface is operable to receive input to place the humidifier into an oscillation mode; wherein the fan of the humidifier has a lower level of rotational intensity and a higher level of rotational intensity; and wherein, while the humidifier is in the oscillation mode, the fan is to oscillate between the lower level of rotational intensity and the higher level of rotational intensity at regular time intervals while the transducer is to operate at a fixed intensity.

In Example 23, the subject matter of Examples 1-22 includes, wherein at least one of the humidifier app and the cloud-based application is to use logged data to determine a favorite setting of a user.

In Example 24, the subject matter of Examples 1-23 includes, wherein the user interface is to allow a user to set a mode to activate if the forecast relative humidity falls below a selected percentage.

In Example 25, the subject matter of Examples 1-24 includes, wherein the user interface is to display the number of "output gallons per hour," which is the rate at which the humidifier is currently producing mist.

In Example 26, the subject matter of Examples 1-25 includes, wherein at least one of the humidifier and the humidifier app is to calculate the water freshness index.

In Example 27, the subject matter of Examples 1-26 includes, wherein at least one of the humidifier and the humidifier app calculates the efficiency of the transducer.

In Example 28, the subject matter of Example 27 includes, wherein the user interface is to display a notification suggesting to clean the transducer surface; and wherein the notification is to be displayed by the user interface when the transducer efficiency falls below a set efficiency.

In Example 29, the subject matter of Examples 1-28 includes, wherein user interface is to receive a selection to use an average of the target humidity settings that the user seems to use the most frequently.

In Example 30, the subject matter of Examples 1-29 includes, wherein the humidifier app includes a rules engine that allows a user to specify settings using conditional statements.

In Example 31, the subject matter of Examples 1-30 includes, wherein the display of the humidifier app includes a "fun mode" button that, when pulled down and released, causes the humidifier app to send a command to the humidifier to cause the humidifier to release a puff of mist.

In Example 32, the subject matter of Example 31 includes, wherein the humidifier app is to display increasing foam and/or cloud graphics in the sky portion of the waterscape as the "fun mode" button is pulled down, and wherein the humidifier app is to display a wave of water and/or foam in one or more of the top portion and the bottom portion of the screen when the "fun mode" button is released.

In Example 33, the subject matter of Examples 31-32 includes, wherein the humidifier app is to start a countdown timer when the "fun mode" button is pulled down, and wherein upon the countdown timer expiring, the humidifier app is to release the "fun mode" button.

Example 34 is at least one machine-readable medium including instructions that, when executed by processing circuitry, cause the processing circuitry to perform operations to implement of any of Examples 1-33.

Example 35 is an apparatus comprising means to implement of any of Examples 1-33.

Example 36 is a system to implement of any of Examples 1-33.

Example 37 is a method to implement of any of Examples 1-33.

Conventional terms in the fields of computer systems and computer networking have been used herein. The terms are known in the art and are provided only as a non-limiting example for convenience purposes. Accordingly, the interpretation of the corresponding terms in the claims, unless stated otherwise, is not limited to any particular definition.
Although specific embodiments have been illustrated and described herein, it will be appreciated by those of ordinary skill in the art that any arrangement that is calculated to achieve the same purpose may be substituted for the specific embodiments shown. Many adaptations will be apparent to those of ordinary skill in the art. Accordingly, this application is intended to cover any adaptations or variations.
The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.
In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. Moreover, in the following claims, the terms "first," "second," and "third," etc. are used merely as labels, and are not intended to impose numerical requirements on their objects. In this document, a sensor set may include one or more sensors, which may be of different types. Furthermore, two different sensor sets may include one or more sensors that belong to both sensor sets.
In this Detailed Description, various features may have been grouped together to streamline the disclosure. This should not be interpreted as intending that an unclaimed disclosed feature is essential to any claim. Rather, inventive subject matter may lie in less than all features of a particular disclosed embodiment.
The above description is intended to be illustrative, and not restrictive. For example, the above-described examples (or one or more aspects thereof) may be used in combination with each other. Other embodiments may be used, such as by a person of ordinary skill in the art upon reviewing the above description.
Various non-limiting embodiments have been described. It will be appreciated that suitable alternatives are possible without departing from the scope of the examples described herein. These and other examples are within the scope of the following clauses:

1. A system, comprising:

a cloud-based application;
a humidifier comprising:

a tank to hold liquid to be atomized by the humidifier;
a transducer to atomize liquid;
a fan;
at least one sensor;
a network adapter; and
a processor operable to:

receive sensor data from the at least one sensor; and
transmit, to the cloud-based application via the network adapter, the received data; and

at least one non-transitory computer-readable medium including stored instructions that, when executed by at least one processor of a computing device, cause the computing device to:

present, via a display of the computing device, a user interface to interact with the humidifier via the cloud-based application.

2. The system of clause 1, wherein the at least one sensor includes a humidity sensor and wherein the sensor data includes a relative humidity of an ambient environment of the humidifier.

3. The system of clause 1 or clause 2, wherein the at least one sensor includes a temperature sensor and wherein the sensor data includes a temperature of the ambient environment of the humidifier.

4. The system of clause 3 when dependent upon clause 2, wherein the cloud-based application is to:

calculate, based on the relative humidity and the temperature of the ambient environment of the humidifier, a range of achievable humidity; and
transmit, to the computing device, the calculated range of achievable humidity.

5. The system of clause 4, wherein the user interface includes a humidity user control comprising:

a range user interface element representative of the calculated range of achievable humidity; and
a selection user interface element displayed relative to the range user interface element, the selection user interface element selectable by a user to select a target humidity within the calculated range of achievable humidity;
wherein the computing device is to transmit, via the cloud-based application, the selected target humidity to the humidifier; and
wherein the humidifier is operable to adjust settings of an atomizer element and the fan within the humidifier corresponding to the selected target humidity.

6. The system of clause 5, wherein the range user interface element is a bar whose length is directly proportional to the calculated range of achievable humidity.

7. The system of clause 6, wherein the selection user interface element is to slide along the bar; and
wherein the position of the selection user interface element along the bar is representative of the selected target humidity.

8. The system of clause 5, wherein the user interface is to display an estimated amount of time until the humidifier will achieve the selected target humidity.

9. The system of clauseany one of the preceding clauses, wherein the humidifier includes a touch-sensitive control panel located on an outside portion of the humidifier, the touch-sensitive control panel operable to control an intensity of mist produced by the humidifier.

10. The system of clause 9,
wherein the user interface presented by the computing device includes a mist intensity control similar in appearance to the touch-sensitive control panel of the humidifier;
wherein the mist intensity control includes multiple selectable portions;
wherein each selectable portion of the mist intensity control represents a respective intensity level;

wherein the computing device is to transmit, via the cloud-based application, the selected respective intensity level to the humidifier; and

wherein the humidifier is operable to adjust settings of an atomizer element and the fan within the humidifier corresponding to the selected respective intensity level.

11. At least one non-transitory computer-readable medium including stored instructions that, when executed by at least one processor of a computing device, cause the computing device to:

present, via a display of a computing device, a user interface to interact with a humidifier via a cloud-based application,

wherein the humidifier includes:

a tank to hold liquid to be atomized by the humidifier;
a transducer to atomize liquid;
a fan;
at least one sensor;
a network adapter; and
a processor operable to:

receive sensor data from the at least one sensor; and
transmit, to the cloud-based application via the network adapter, the received data.

12. The at least one non-transitory computer-readable medium of clause 11, wherein the at least one sensor includes a humidity sensor and wherein the sensor data includes a relative humidity of an ambient environment of the humidifier.

13. The at least one non-transitory computer-readable medium of clause 11 or clause 12, wherein the at least one sensor includes a temperature sensor and wherein the sensor data includes a temperature of the ambient environment of the humidifier.

14. The at least one non-transitory computer-readable medium of clause 13 when dependent upon clause 12, wherein the cloud-based application is to:

calculate, based on the relative humidity and the temperature of the ambient environment of the humidifier, a range of achievable humidity; and
transmit, to the computing device, the calculated range of achievable humidity.

15. The at least one non-transitory computer-readable medium of clause 14, wherein the user interface includes a humidity user control comprising:

a range user interface element representative of the calculated range of achievable humidity; and
a selection user interface element displayed relative to the range user interface element, the selection user interface element selectable by a user to select a target humidity within the calculated range of achievable humidity;

wherein the computing device is to transmit, via the cloud-based application, the selected target humidity to the humidifier; and
wherein the humidifier is operable to adjust settings of an atomizer element and the fan within the humidifier corresponding to the selected target humidity.

16. The at least one non-transitory computer-readable medium of clause 15, wherein the range user interface element is a bar whose length is directly proportional to the calculated range of achievable humidity.

17. The at least one non-transitory computer-readable medium of clause 16, wherein the selection user interface element is to slide along the bar; and
wherein the position of the selection user interface element along the bar is representative of the selected target humidity.

18. The at least one non-transitory computer-readable medium of clause 15, wherein the user interface is to display an estimated amount of time until the humidifier will achieve the selected target humidity.

19. The at least one non-transitory computer-readable medium of clauseany one of clauses 11 to 18, wherein the humidifier includes a touch-sensitive control panel located on an outside portion of the humidifier, the touch-sensitive control panel operable to control an intensity of mist produced by the humidifier.

20. The at least one non-transitory computer-readable medium of clause 19,
wherein the user interface presented by the computing device includes a mist intensity control similar in appearance to the touch-sensitive control panel of the humidifier;
wherein the mist intensity control includes multiple selectable portions;
wherein each selectable portion of the mist intensity control represents a respective intensity level;
wherein the computing device is to transmit, via the cloud-based application, the selected respective intensity level to the humidifier; and
wherein the humidifier is operable to adjust settings of an atomizer element and the fan within the humidifier corresponding to the selected respective intensity level.

**Claims**

1. A system, comprising:

   a cloud-based application;
   a humidifier comprising:

      a tank to hold liquid to be atomized by the humidifier;
      a transducer to atomize liquid;
      a fan;
      at least one sensor;
      a network adapter; and
      a processor operable to:

         receive sensor data from the at least one sensor; and
         transmit, to the cloud-based application via the network adapter, the received data; and

   at least one non-transitory computer-readable medium including stored instructions that, when executed by at least one processor of a computing device, cause the computing device to:

      present, via a display of the computing device, a user interface to interact with the humidifier via the cloud-based application.

2. The system of claim 1, wherein the at least one sensor includes a humidity sensor and wherein the sensor data includes a relative humidity of an ambient environment of the humidifier.

3. The system of claim 1 or claim 2, wherein the at least one sensor includes a temperature sensor and wherein the sensor data includes a temperature of the ambient environment of the humidifier.

4. The system of claim 3 when dependent upon claim 2, wherein the cloud-based application is to:

   calculate, based on the relative humidity and the temperature of the ambient environment of the humidifier, a range of achievable humidity; and
   transmit, to the computing device, the calculated range of achievable humidity.

5. The system of claim 4, wherein the user interface includes a humidity user control comprising:

   a range user interface element representative of the calculated range of achievable humidity; and
   a selection user interface element displayed relative to the range user interface element, the selection user interface element selectable by a user to select a target humidity within the calculated range of achievable humidity;

wherein the computing device is to transmit, via the cloud-based application, the selected target humidity to the humidifier; and

wherein the humidifier is operable to adjust settings of an atomizer element and the fan within the humidifier corresponding to the selected target humidity.

6. The system of claim 5, wherein the range user interface element is a bar whose length is directly proportional to the calculated range of achievable humidity.

7. The system of claim 6, wherein the selection user interface element is to slide along the bar; and
wherein the position of the selection user interface element along the bar is representative of the selected target humidity.

8. The system of claim 5, wherein the user interface is to display an estimated amount of time until the humidifier will achieve the selected target humidity.

9. The system of any one of the preceding claims, wherein the humidifier includes a touch-sensitive control panel located on an outside portion of the humidifier, the touch-sensitive control panel operable to control an intensity of mist produced by the humidifier.

10. The system of claim 9,
wherein the user interface presented by the computing device includes a mist intensity control similar in appearance to the touch-sensitive control panel of the humidifier;
wherein the mist intensity control includes multiple selectable portions;
wherein each selectable portion of the mist intensity control represents a respective intensity level;
wherein the computing device is to transmit, via the cloud-based application, the selected respective intensity level to the humidifier; and
wherein the humidifier is operable to adjust settings of an atomizer element and the fan within the humidifier corresponding to the selected respective intensity level.

11. At least one non-transitory computer-readable medium including stored instructions that, when executed by at least one processor of a computing device, cause the computing device to:

present, via a display of a computing device, a user interface to interact with a humidifier via a cloud-based application,
wherein the humidifier includes:

a tank to hold liquid to be atomized by the humidifier;
a transducer to atomize liquid;
a fan;
at least one sensor;
a network adapter; and
a processor operable to:

receive sensor data from the at least one sensor; and
transmit, to the cloud-based application via the network adapter, the received data.

12. The at least one non-transitory computer-readable medium of claim 11, wherein the at least one sensor includes:

a humidity sensor and wherein the sensor data includes a relative humidity of an ambient environment of the humidifier; and/or
a temperature sensor and wherein the sensor data includes a temperature of the ambient environment of the humidifier.

13. The at least one non-transitory computer-readable medium of claim 12, wherein the cloud-based application is to:

calculate, based on the relative humidity and the temperature of the ambient environment of the humidifier, a range of achievable humidity; and
transmit, to the computing device, the calculated range of achievable humidity.

14. The at least one non-transitory computer-readable medium of claim 13, wherein the user interface includes a humidity user control comprising:

a range user interface element representative of the calculated range of achievable humidity; and
a selection user interface element displayed relative to the range user interface element, the selection user interface element selectable by a user to select a target humidity within the calculated range of achievable humidity;

wherein the computing device is to transmit, via the cloud-based application, the selected target humidity to the humidifier; and
wherein the humidifier is operable to adjust settings of an atomizer element and the fan within the humidifier corresponding to the selected target humidity.

15. The at least one non-transitory computer-readable medium of claim 11, wherein the humidifier includes a touch-sensitive control panel located on an outside portion of the humidifier, the touch-sensitive control panel operable to control an intensity of mist produced by the humidifier.

FIG. 1A

*FIG. 1B*

**FIG. 2**

*FIG. 3*

FIG. 4

**FIG. 5**

FIG. 6

**FIG. 7A**

FIG. 7B

FIG. 8

728

738d
738c
738b
738a

738e
738f
738g
738h

b

750

726

748a
748b
748c
748d

748h
748g
748f
748e

b

FIG. 9A

728

738d

748
d

750
752a
752b

752c

752d

743d    754

748d

726

FIG. 9B

**FIG. 9C**

EP 3 444 713 A1

EP 3 444 713 A1

**FIG. 10**

102

Tank Water
Level Sensor

140

Interface

130

Upper Connector
128

Lower Connector
126

120

Multiplexer 186

Power Supply
170

Valve 150

Atomizer 156

Timer 174

Fan(s) 160

Memory 178

Sensor(s). 154

Comms. 182

Controller
184

*FIG. 11*

FIG. 12

FIG. 13

EP 3 444 713 A1

Read water level sensor factory
calibration data

1480

Determine segment
corresponding to top of water
level

1481

Determine water level within
determined segment

1482

Determine water level using
continuous electrode

1483

Compare water level values
determined via segments and
via continuous electrode

1484

Average discrete
and continuous
sensor values

1486

←No— Values sufficiently
different?

1485

Yes

Water level

1487

Calibrate
continuous sensor
in view of discrete
segment data

1488

*FIG. 14*

```
                    ┌─────────────────────┐
                    │  Receive control and/│
                    │ or environmental data│
                    │                      │
                    └─────────────────────┘
                     1580
                             │
                             ▼
          ┌──────────────────────────────────┐
          │        Adjust operation of        │
          │           one or more             │
  ┌───────│     components to adjust          │───────┐
  │       │        humidifier output          │       │
  │       └──────────────────────────────────┘       │
  │        1581                                       │
  │                                                   │
  ▼                                                   ▼
┌──────────────────┐                        ┌──────────────────┐
│ Adjust operating │    - and/or -          │ Adjust fan speed │
│ power of atomizer│                        │                  │
│                  │                        │                  │
└──────────────────┘                        └──────────────────┘
 1582      │                                 1583      │
           │      ┌──────────────────────┐             │
           │      │  Present indication   │             │
           └─────▶│ representative of new │◀────────────┘
                  │   humidifier output   │
                  │        level          │
                  └──────────────────────┘
                   1584
```

## FIG. 15

**n++**
1680

**Read water level**
1682

**Water Level = $X_{n-1}$**
1681

**WL > 0**
1683

**Water level = 0 Turn humidifier OFF**
1684

**$I_n = 0$**
1685

**$X_n$ = water level**
1686

**$X_n > X_{n-1}$**
1687

**$I_n = I_{n-1} \times (X_{n-1}/X_n)$**
1689

**$I_n = I_{n-1} + 1$**
1688

**Update freshness indicator**
1690

**$I_n$ < Threshold**
1691

**Alert**
1692

*FIG. 16*

Power Supply 170

1788

Switch

126

Controller 184

MUX 186

748a
748b
748c
748d
748e
748f
748g
748h

*FIG. 17*

**FIG. 18**

1900

1902

1904

1910

1912

1918

1920

1914

1908

1906

1916

9:41PM  100%

Kitchen

55°
Chicago

72°
Room

in 2 hours

# 39%

target humidity

current
34%

water level 40% 1922

4.5 hours remaining 1924

*FIG. 19*

2000

**9:41PM**    **100%** ▭

UserName
username@email.com

DEVICES — 2002

○ **Bedroom** 〰 2006          **36%**RH — 2010

⊘ **Kitchen**          **36%**RH

◍ **Living Room**          **36%**RH

⊕ **Basement**          **36%**RH

DEVICE GROUPS — 2004

⧉ **First  Floor** 〰 2008          **36%**RH — 2012

Kitchen
Living Room

OTHER

📊 Rules          >

▤ Stats          >

*FIG. 20*

_2100

Modes

| oooooo ᯤ | 9:41PM | 100% ▱ |

2106

Kitchen

MODES

◯ **Standby**

◯ **Manual**

◯ **Auto**

◯ **Diffuser**

◯ **Schedule**

⬤ **Wake Up to Mist**

◯ **Fun**

OTHER

**Device Settings** ＞

**Instructions** ＞

## FIG. 21

2200

FIG. 22

FIG. 23

EP 3 444 713 A1

2400

2402

2404

2410

2412

Kitchen

9:41PM

100%

55°
Chicago

72°
Room

2430

2420

2414

in 2 hours

2408

39%

target humidity

2440

2406

current
34%

2446    2442    2444

water level 40%    2422

4.5 hours remaining    2424

*FIG. 24*

*FIG. 25*

2500

2502 User selects auto mode

2504 Calculate or obtain target humidity

2506 Read current humidity

2508 Execute PID algorithm

2510 Set transducer setting

2512 Set fan intensity in proportion

2514 Set device settings

2600

Kitchen

55°
Chicago

72°
Room

2630

diffusion time
remaining

00:58

2634

2638

2642  2644  2646

Add

2650

**FIG. 26**

FIG. 27

FIG. 28

EP 3 444 713 A1

**FIG. 29**

EP 3 444 713 A1

FIG. 30

*FIG. 31*

3100

EP 3 444 713 A1

3200

PROCESSOR — 3202

INSTRUCTIONS — 3224

MAIN MEMORY — 3204

INSTRUCTIONS — 3224

STATIC MEMORY — 3206

INSTRUCTIONS — 3224

SENSOR(S) — 3221

NETWORK INTERFACE DEVICE — 3220

NETWORK — 3226

INTERLINK — 3208

DISPLAY DEVICE — 3210

INPUT DEVICE — 3212

UI NAVIGATION DEVICE — 3214

MASS STORAGE — 3216

MACHINE-READABLE MEDIUM — 3222

INSTRUCT. — 3224

SIGNAL GENERATION DEVICE — 3218

OUTPUT CONTROLLER — 3228

*FIG. 32*

Europäisches
Patentamt

European
Patent Office

Office européen
des brevets

## EUROPEAN SEARCH REPORT

Application Number

EP 18 18 6611

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/187899 A1 (LEE JULIAN [CN] ET AL) 30 June 2016 (2016-06-30) | 1-8, 11-14 | INV.<br>G06F3/0481<br>H04L29/08 |
| Y | * paragraphs [0016], [0039], [0044], [0049], [0051], [0056], [0075], [0077], [0079] - [0081]; figures 1, 3 * | 9,10,15 | F24F11/58<br>F24F11/50<br>F24F11/00 |
| Y | US 2012/222548 A1 (LEV MORDECHAI [US] ET AL) 6 September 2012 (2012-09-06) * paragraphs [0016], [0022] - [0025], [0027], [0029]; figures 2, 5 * | 9,10,15 | G06F3/0484<br>F24F6/12<br>F24F11/52 |
| A | CN 106 403 123 A (BEIJING SMARTMI TECHNOLOGY CO LTD) 15 February 2017 (2017-02-15) * abstract * & EP 3 296 655 A1 (BEIJING XIAOMI MOBILE SOFTWARE CO LTD [CN]; BEIJING SMARTMI TECH CO LT) 21 March 2018 (2018-03-21) * paragraphs [0017], [0045], [0073] - [0074] * | 1-15 | ADD.<br>F24F6/00<br>F24F110/20 |
| A | US 2016/209058 A1 (GOLDEN KYLE [US] ET AL) 21 July 2016 (2016-07-21) * abstract * * paragraphs [0026], [0029], [0031], [0039] - [0045], [0056]; figures 1-4C * | 1-15 | TECHNICAL FIELDS SEARCHED (IPC)<br><br>G06F<br>F24F<br>H04L |

The present search report has been drawn up for all claims

| Place of search | Date of completion of the search | Examiner |
|---|---|---|
| Munich | 10 January 2019 | González Carballo, N |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 18 6611

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2019

| Patent document cited in search report | | | Publication date | Patent family member(s) | | | Publication date |
|---|---|---|---|---|---|---|---|
| US 2016187899 | A1 | | 30-06-2016 | CN | 105900035 | A | 24-08-2016 |
| | | | | JP | 2016527471 | A | 08-09-2016 |
| | | | | US | 2016187899 | A1 | 30-06-2016 |
| | | | | WO | 2015014229 | A1 | 05-02-2015 |
| US 2012222548 | A1 | | 06-09-2012 | NONE | | | |
| CN 106403123 | A | | 15-02-2017 | CN | 106403123 | A | 15-02-2017 |
| | | | | EP | 3296655 | A1 | 21-03-2018 |
| | | | | JP | 2018534511 | A | 22-11-2018 |
| | | | | KR | 20180100434 | A | 10-09-2018 |
| | | | | RU | 2017109445 | A | 24-09-2018 |
| | | | | US | 2018073758 | A1 | 15-03-2018 |
| | | | | WO | 2018049749 | A1 | 22-03-2018 |
| US 2016209058 | A1 | | 21-07-2016 | CA | 2912281 | A1 | 19-07-2016 |
| | | | | US | D798310 | S | 26-09-2017 |
| | | | | US | D798311 | S | 26-09-2017 |
| | | | | US | 2016209058 | A1 | 21-07-2016 |
| | | | | US | 2016209071 | A1 | 21-07-2016 |
| | | | | US | 2016209072 | A1 | 21-07-2016 |

EPO FORM P0459

For more details about this annex : see Official Journal of the European Patent Office, No. 12/82

**EP 3 444 713 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 15665604 B
- US 15665611 B
- US 15665614 B